# EUROPÄISCHE PATENTSCHRIFT

(11) **EP 2 389 241 B1**
(45) Veröffentlichungstag und Bekanntmachung des Hinweises auf die Patenterteilung: **06.06.2018**
(21) Anmeldenummer: 10701318.7
(22) Anmeldetag: 19.01.2010
(51) Int. Cl.: B01J 19/24, B01J 4/00, B01J 19/00

(54) **ROHRBÜNDELREAKTOR UND VERFAHREN FÜR UNKATALYSIERTE ODER HOMOGENKATALYSIERTE REAKTIONEN**
TUBE BUNDLE REACTOR AND PROCESS FOR NON-CATALYZED OR HOMOGENOUSLY CATALYZED REACTIONS
RÉACTEUR À FAISCEAU TUBULAIRE ET PROCÉDÉ POUR DES RÉACTIONS NON CATALYSÉES OU DE CATALYSE HOMOGÈNE

(30) Priorität: 21.01.2009 EP 09151002
(43) Veröffentlichungstag der Anmeldung: 30.11.2011
(73) Patentinhaber: BASF SE, 67056 Ludwigshafen am Rhein (DE)
(72) Erfinder: TELES, Joaquim, Henrique, 67166 Otterstadt (DE); RESCH, Peter, 67310 Hettenleidelheim (DE); RUPPEL, Wilhelm, 68163 Mannheim (DE); WEGERLE, Ulrike, 67550 Worms (DE); GERLINGER, Wolfgang, 67117 Limburgerhof (DE); RÖSSLER-FEIGEL, Beatrice, 67256 Weisenheim am Sand (DE); MEIER, Anton, 67134 Birkenheide (DE); MÜLLER, Christian, 68167 Mannheim (DE)
(74) Vertreter: BASF IP Association
(86) Internationale Anmeldenummer: PCT/EP2010/000280
(87) Internationale Veröffentlichungsnummer: WO 2010/083978

(56) Entgegenhaltungen:
- EP-A2- 0 068 057
- WO-A1-2006/087353
- WO-A1-2007/045574
- WO-A1-2009/013035
- DE-A1-102005 001 952
- DE-A1-102005 061 626
- US-A1- 2003 175 183
- US-A1- 2005 262 850

## Beschreibung

### GEBIET DER ERFINDUNG

Die Erfindung betrifft das Gebiet von Reaktoren zur kontinuierlichen chemischen Umsetzung von Edukten eines Reaktionsgemischs zu Produkten und insbesondere einen Rohrbündelreaktor sowie ein Verfahren zum Betreiben desselben. Derartige Reaktoren werden zur kontinuierlichen Umsetzung von fließfähigen Stoffmischungen verwendet, die im Wesentlichen als Gasphase und/oder Flüssigphase vorliegen. Die Reaktionsbedingungen werden gesteuert über die Zuführung von Edukten und über die Rückführung des aus dem Rohrbündelreaktor tretenden, umgesetzten Gemischs. Ferner werden die Reaktionsbedingungen gesteuert über Betriebsparameter wie Temperatur, Druck und Fließgeschwindigkeit innerhalb des Reaktors, wodurch der chemische Umsetzungsprozess unmittelbar beeinflusst wird. Im Allgemeinen werden in Rohrbündelreaktoren auch Katalysatoren innerhalb der Rohre des Rohrbündels eingesetzt, um die Reaktion auf den Ort des Katalysators, d.h. auf das Rohr, einzuschränken.

Rohrbündelreaktoren werden mit oder ohne Katalysator zur kontrollierten Durchführung von chemischen Reaktionen innerhalb von Stoffgemischen, insbesondere im Produktionsmaßstab, für eine Vielzahl von Edukten und Produkten verwendet.

### STAND DER TECHNIK

Rohrbündelreaktoren werden meist nach der so genannten "shell-and-tube"-Bauweise hergestellt, wobei diese Bauweise Rohrbündelwärmetauschern ähnelt. Beispielsweise in "Chemical Process Equipment" von Walas, Stanley M., Butterworth-Heinemann, Series in Chemical Engineering, Butterworth-Heinemann, USA, wird auf Seite 569 eine Gruppe von Rohrbündelreaktoren beschrieben, die auch als Wärmetauscher angesehen werden. Während in Wärmetauschern lediglich Wärme von einem Primärauf einen Sekundärkreis oder umgekehrt übertragen wird, findet hier zusätzlich in einem Rohrbündelreaktor eine Reaktion statt, wobei die Reaktionswärme über einen fluidtechnisch getrennten, jedoch hinsichtlich Wärme gekoppelten Mediumkreislauf abgeführt oder zugeführt wird. Die Reaktion findet hierbei in dem Rohrbündel statt, wobei in der Hülle, die das Rohrbündel umgibt, zudem ein Wärmetauschmedium fließt, das im Kreis geführt wird und so den Mediumkreislauf bildet. Das Wärmetauschmedium führt durch den Kontakt mit dem Rohrbündel Wärme aus dem Raum innerhalb der Rohre ab oder führt Wärme durch den Kontakt zu.

Häufig werden Rohrbündelreaktoren als Festbettreaktoren für heterogen katalysierte Reaktionen verwendet. Bei der heterogenen Katalyse findet die chemische Reaktion von Eduktfluiden bzw. die Umsetzung des Reaktionsgemischs an einem Katalysator statt, der einen anderen Aggregatszustand als die Edukte hat und in diesem Fall als Festkörper ausgebildet ist. Der Festkörper und die von diesem gebildete Oberfläche, welche den Katalysator darstellt, sind bei Festbettreaktoren innerhalb der Rohrbündelreaktoren an diesen befestigt, sei es als Festkörper, die innerhalb der Rohre des Rohrbündels gehalten werden, oder auf eine andere Weise, bei der der Katalysator innerhalb der Rohre des Rohrbündels fixiert bzw. befestigt ist, so dass das Eduktfluid daran vorbeigeführt werden kann, ohne den Katalysator mit sich zu führen. Als Beispiele für heterogen katalysierte Reaktionen, bei denen Rohrbündelreaktoren als Festbettreaktoren verwendet werden, sind die Oxidation von Benzol zu Maleinsäureanhydrid, die Hydrierung von Crotonaldehyd zu 1-Butanol, die Synthese von Vinylacetat aus Ethylen, Essigsäure und Sauerstoff und die Synthese von Vinylchlorid aus Ethylen und Chlor. Diese und andere Beispiele finden sich beispielsweise in "Perry's Chemical Engineers Handbook", 7. Ausgabe, 1997, Seiten 23-38. In allen Fällen handelt es sich um Verfahren, die bei geringem Druck ausgeführt werden. Als Verfahren mit dem höchsten Druck wird die Hydrierung von Crotonaldehyd zu Butanol genannt, die bei ungefähr 39 bar stattfindet (siehe beispielsweise "Applied Industrial Catalysis", Vol. 1, Academic Press, 1983, Seite 51). Die Vinylchloridsynthese wird z.B. bei lediglich 4-6 atm durchgeführt (vgl. "Applied Industrial Catalysis", Vol. 1, Academic Press, 1983, Seiten 251-252 und 264).

Verschiedene Gestaltungsvarianten von Rohrbündelreaktoren sind in diesen Veröffentlichungen sowie aus der Literatur bekannt. Beispielsweise beschreiben die Druckschriften DE 202 19 277 U1, DE 202 19 278 U1 und DE 202 19 279 U1 Ausgestaltungen von Details von Rohrbündelreaktoren, die alle als Festbettreaktoren dienen. Diese Druckschriften betreffen das Wärmemanagement innerhalb von Rohrbündelreaktoren, wobei zum einen vorgeschlagen wird, Kühlmedium im Reaktor von außen in der Höhe der Enden des Rohrbündels mittels Kühlschlaufen, die an der Außenseite des Reaktors angebracht sind, zu kühlen oder durch das Hinzuführen von frischem Kühlungsmedium mittels externem Bypass das Temperaturmanagement zu beeinflussen. Zum anderen werden Wärmetauscher offenbart, die mit Kühlschlaufen an der Reaktoraußenwand in der Höhe der Rohrbündelenden verbunden sind, um die Temperatur innerhalb des Rohrbündels und insbesondere an den Rohrbündelenden des Reaktors einzustellen. Jedoch werden in allen dort beschriebenen Ausführungen Rohrbündelreaktoren verwendet, bei denen das Rohrbündel als Kreiszylinder ausgeführt ist, und großvolumige angeschlossene Hauben zum Anschluss an das Rohrbündel dienen.

Ferner ist in US 4,221,763 ein Rohrbündelreaktor beschrieben mit einem zylindrischen mittleren Mantelabschnitt, der das Rohrbündel umfänglich umschließt, und mit abschließenden angeflanschten Hauben, die zur Zufuhr bzw. zum Ableiten dienen. Hierbei wird in der Zuführungshaube eine Gruppe von Rohren angebracht, die mit den Rohren des Rohrbündels verbunden sind. Das Volumen der Zuführungshaube wird zur Mischung und Umsetzung von Edukten verwendet. Zur Kühlung umfließt Kühlflüssigkeit das Reaktorbündel. Die dort dargestellte Reaktorkonstruktion weist mehrere Nachteile auf. Die Konstruktion ist komplex und folglich kostenintensiv. Lediglich die Außenhülle ist druckfest, wobei sich ein Störfallrisiko dadurch ergibt, dass die Reaktionsrohre dünnwandig sind und nur vom Gegendruck des Kühlmediums gestützt sind. Fällt der Druck des Kühlmediums, so führt dies zum Bersten der Reaktionsrohre, wobei dies auch für den Druckabfall der Reaktionsseite gilt. Die Druckdifferenz bei einem derartigen Störfall, die zwischen Kühlmedium (hoher Druck) und Reaktionsgemisch (abgefallener Druck) liegt, kann die strukturelle Integrität der Reaktionsröhren leicht zerstören.

In Dokument DE 1 601 162 wird ein Rohrbündelwärmetauscher dargestellt, der zur Ausführung von Reaktionen eingerichtet ist. Der Wärmetauscher umfasst Rohre, die mit Katalysator gefüllt sind, so dass die Reaktion nur im Rohrbündel stattfindet. Innerhalb des Rohrbündels, zwischen den Rohren werden gezielt Leitbleche verwendet, um die Kühlmittelströmung zwischen den Rohren individuell zu reduzieren. In den nicht näher erläuterten Hauben findet keine Reaktion statt, da in diesem kein Katalysator vorhanden ist.

EP 1 080 780 A1 zeigt ebenso einen Reaktor mit einem Rohrbündel, dessen Rohre mit einem fest angeordneten Katalysatorbett ausgestattet sind. Die Reaktionswärme der Reaktion von Edukten in Gasphase wird somit ausschließlich in dem Rohrbündel erzeugt, das zur besseren Kühlung einen ringförmigen Querschnitt aufweist. Ein innerer Bereich der Rohrbündels bleibt frei, um die Wärmeabfuhr zu verbessern und um hot spots zu vermeiden. Diese Maßnahme betrifft lediglich das Rohrbündel. In den Hauben findet im Wesentlichen keine Reaktion statt, da dort kein Katalysatormaterial vorhanden ist.

EP 1 080 781 A1 zeigt einen hierzu ähnlichen Reaktor, der ebenfalls einer katalytischen Gasphasenoxidation dient, wobei zur effizienten Entfernung der im Wesentlichen nur am Katalysatorfestbett-Rohrbündel entstehenden Wärme die Kühlflüssigkeit geeignet gemischt wird. Auch hier findet im Wesentlichen keine Reaktion außerhalb des Rohrbündels in den Reaktorhauben statt. US 2005/0262850 A1 offenbart eine Verteilervorrichtung für einen Rohrbündelwärmetauscher.

US 2003/0175183 A1, WO 2009/013035 A1 und WO 2007/045574 A1 beschreiben Rohrbündelreaktoren mit einer Verteilervorrichtung für das Eduktgemisch in der Zuführungshaube.

Für bestimmte chemische Reaktionen bieten Rohrbündelreaktoren eine ganze Reihe von Vorteilen. Zum einen kommt die Strömung in einem Rohrbündelreaktor der idealen Pfropfenform mit äußerst geringer Rückvermischung sehr nah. Daher sind Rohrbündelreaktoren besonders geeignet für Reaktionen, bei denen Folgereaktionen auftreten können. Insbesondere dann, wenn die entstanden Zielprodukte schnell zu Folgeprodukten reagieren, lassen sich mit Rohrbündelreaktoren hohe Selektivitäten erreichen. Dies gilt auch bei höheren Umsätzen. Ferner bieten Rohrbündelreaktoren den Vorteil, dass der apparative Aufwand und der Aufwand hinsichtlich Messung und Regelung deutlich geringer sind als beispielsweise bei einer Rührkesselkaskade mit vergleichbarer Leistung.

Zudem bieten Rohrbündelreaktoren eine große Wärmetauschoberfläche durch die große Gesamtfläche der Rohraußenseiten. Somit lässt sich auch die Reaktionstemperatur bei stark exothermen oder endothermen Reaktionen gut kontrollieren. Insbesondere kann ein enger Temperaturbereich eingehalten werden und Temperaturgradienten innerhalb des Reaktors bzw. innerhalb des Rohrbündels lassen sich gut kontrollieren bzw. unterdrücken.
Bei einer vorgegebenen Produktionskapazität ist als weiterer Vorteil der deutlich geringere Druckverlust in einem Rohrbündelreaktor im Vergleich zu einem Reaktor bestehend aus einem einzelnen Reaktionsrohr zu nennen. Daher ist auch die Leistung, die aufgebracht werden muss, um das Reaktionsgemisch durch den Reaktor zu befördern, bei der Verwendung eines Rohrbündelreaktors deutlich verringert.
Gemäß dem Stand der Technik werden Rohrbündelreaktoren, insbesondere Rohrbündelreaktoren für heterogen katalysierte Umsetzungen, mit großvolumigen Ein- und Ausgangshauben ausgeführt. Diese sind beispielsweise als Halbkugeln oder als Rotationsellipsoide mit einer ähnlichen voluminösen Form wie Halbkugeln ausgestaltet. Der Grund hierfür ist, dass großvolumige Eintrittshauben den dynamischen Druck des eintretenden Eduktstroms verringern und eine gleichmäßige Anströmung aller Reaktionsrohre des Rohrbündels bewirken. Somit dient das Volumen innerhalb der Eintrittshaube dazu, dass sich das Reaktionsgemisch nach Eintritt entspannt, und, zum Teil als Folge hiervon, durch die großvolumige Führung des Eduktstroms die Eintrittsgeschwindigkeit bzw. der Druck an allen Eintrittsenden der Reaktionsrohre ungefähr gleich ist. Insbesondere werden die Eintrittshauben im Stand der Technik vorzugsweise derart ausgestaltet, dass sich alleine durch die breite Auffächerung auf das große Volumen innerhalb der Haube eine gleichmäßige Druckverteilung innerhalb des Querschnitts des Reaktionsstroms an dem Eintrittsende des Rohrbündels ergibt. Durch das große Volumen wird vermieden, dass die gerichtete Eintrittsströmung nur die Mitte des Rohrbündels trifft und die am Rand gelegenen Reaktionsrohre mit deutlich geringerem Druck bzw. mit einer deutlich geringeren Strömung des Eduktstroms beaufschlagt werden.

Ein Beispiel hierfür ist die Konstruktion in DE 202 19 277 U1, bei der aus Figur 1 direkt aus den Strömungspfeilen innerhalb der Hauben, insbesondere innerhalb der Eintrittshaube, zu erkennen ist, dass das Volumen bzw. die Form des Innenraums der Haube zur Homogenisierung des Strömungsverhaltens dient. Der dort dargestellte Reaktor ist jedoch als Festbettreaktor ausgeführt, so dass die Reaktion im Wesentlichen innerhalb des Rohrbündels stattfindet; hierdurch beschränkt sich die Steuerung des Reaktionsablaufs auf das Volumen des Reaktorbündels, wohingegen bei der Ausgestaltung der Haube die dort stattfindenden Reaktionen und die damit einhergehende Temperaturveränderung nicht berücksichtigt werden muss. Diese Vorgehensweise lässt sich auch aus DE 202 19 279 U1 erkennen, bei der Eintrittsabschnitt und Austrittsabschnitt des Rohrbündels mit zusätzlichen Ringkanälen zur Temperatursteuerung verwendet werden, die jedoch aufgrund ihrer Anordnung am Rohrbündel nicht zur Temperatursteuerung innerhalb der Eintrittshaube, d.h. außerhalb des Rohrbündels, verwendet werden, noch zur Temperatursteuerung innerhalb der Eintrittshaube geeignet sind.

Wenn jedoch die Umsetzung nicht auf das Rohrbündel beschränkt ist, beispielsweise bei Umsetzungen, die unkatalysiert ablaufen, oder wenn der Katalysator homogen in dem Reaktionsgemisch gelöst oder mit diesem eine Suspension bildet, so ergibt sich für den Reaktionsablauf innerhalb der Eintrittshaube nur eine ungenügende Steuerungsmöglichkeit des Reaktionsablaufs, wenn Reaktoren verwendet werden, die für heterogen katalysierte Umsetzungen ausgestaltet sind, bei denen sich die Reaktion im Wesentlichen im Rohrbündel abspielt. Aufgrund des großen Volumens innerhalb der Eintrittshaube können die Umsetzungen jedoch bereits in der Eintrittshaube unkontrolliert ablaufen, wenn die Umsetzung nicht auf das Rohrbündel beschränkt ist. Dies führt beispielsweise bei stark exothermen Reaktionen zu deutlich ansteigenden Temperaturen, so dass Wertproduktverluste durch unerwünschte chemische Reaktionen, wie beispielsweise Polymerisation, auftreten. Ferner können durch exotherme Reaktionen insbesondere in der Eintrittshaube die Temperaturen dort derart ansteigen, dass die Reaktion außer Kontrolle gerät und durchgeht. Im Extremfall kann dies sogar zu einer Zerstörung des Reaktors führen.

EP 1 882 518 A2 beschreibt ein Verfahren zur Temperaturänderung eines Rohrbündelreaktors, bei dem ein Temperiergas an dem Rohrbündel vorbeigeführt wird, wenn der Wärmeträger nicht mehr ausreichend umgewälzt wird, wobei beim Anfahren oder Abfahren das Temperiergas hinsichtlich des Volumenstroms geeignet gedrosselt wird. Dies betrifft jedoch nicht die Erwärmung oder Kühlung des Gemischs, das in der Eintrittshaube oder in der Austrittshaube des Rohrbündelreaktors vorliegt.

Gleichermaßen sind Rohrbündelreaktoren, die für heterogen katalysierte Umsetzungen ausgestaltet sind, nicht geeignet, wenn die Edukte und/oder die Produkte der gewünschten Umsetzung temperaturempfindlich sind. Durch die vergleichsweise hohen Verweilzeiten in den großvolumigen Ein- und Austrittshauben können substantielle Wertproduktverluste und geringe Selektivitäten auftreten.

Als weiterer Nachteil von üblichen großvolumigen Eintrittshauben besteht darin, dass unkontrollierte Umsetzungen in der Eintrittshaube (oder auch in der Austrittshaube) bei einem Ausfall der Energieversorgung der Reaktionsgemischpumpe stattfinden können. Fällt die Energieversorgung aus, so findet die Zufuhr und Abfuhr der Edukte und Produkte nicht mehr statt, so dass eine beträchtliche Menge an Reaktionsgemisch innerhalb der Hauben verbleibt, das aufgrund der geringen Oberfläche bezogen auf das Volumen der Hauben hinsichtlich der Temperatur nur geringfügig beeinflussbar ist.

Ferner ist die Form von Hauben bekannter Reaktoren durch die Statik und Festigkeit bestimmt, die darauf abzielt, Querkräfte innerhalb der Haube zu minimieren und so auch bei geringen Blechdicken eine ausreichende Druckfestigkeit zu erreichen.

Zusammenfassend werden großvolumige Eintritts- und Austrittshauben bei Rohrbündelreaktoren dafür verwendet, das eintretende Gemisch zu entspannen und gleichmäßig auf die Rohre des Rohrbündels zu verteilen, so dass der Eintrittsdruck bzw. die Eintrittsgeschwindigkeit an dem Eintrittsende der Rohrbündel homogen ist. Aus dem Stand der Technik sind keinerlei alternativen Mechanismen zur homogenen Zuführung bekannt, als das Auffächern des Zuführungsstroms mittels großvolumiger Hauben. Das Gleiche gilt für die Austrittshaube, die ebenso großvolumig ausgestaltet ist, um in den am Rand gelegenen Rohren keinen Rückstau zu erzeugen und um das aus den Rohrbündeln austretende Gemisch über ein großes Volumen zu einem Austrittsstrom zu bündeln, ohne wesentliche Turbulenzen zu erzeugen. Durch das große Volumen innerhalb der Hauben wird dort eine große Menge an Reaktionsgemisch geführt, das insbesondere bei unkatalysierten Umsetzungen oder bei homogen verteilten Katalysatoren zu hohen Temperaturgradienten innerhalb der Hauben führt, wodurch vermehrt unerwünschte Reaktionen auftreten. Zum einen führt dies bei kontinuierlichem Betrieb zu geringer Selektivität, die mit der geringen Kontrollierbarkeit innerhalb des Volumens der Hauben einhergeht, und führt bei fehlerhaftem Betrieb, bei dem das Reaktionsgemisch nur ungenügend transportiert wird, zu kritischen Temperatur- und Druckverhältnissen, die im Extremfall zum unkontrollierten Austritt von Reaktionsgemisch führen können.
Es ist daher eine Aufgabe der Erfindung, einen Rohrbündelreaktor bzw. ein Verfahren zum Betreiben eines Rohrbündelreaktors bereitzustellen, mit dem auch unkatalysierte und homogen katalysierte Reaktionen mit hoher Selektivität ausgeführt werden können. Eine damit verknüpfte Aufgabe ist es, einen Rohrbündelreaktor und ein Verfahren zum Betreiben eines Rohrbündelreaktors vorzusehen, die eine präzise Temperaturführung auch innerhalb der Hauben ermöglichen, beispielsweise bei der Umsetzung von temperaturempfindlichen Edukten und/oder für Reaktionen mit temperaturempfindlichen Reaktionsprodukten. Der erfindungsgemäße Rohrbündelreaktor und das erfindungsgemäße Verfahren eignen sich insbesondere für unkatalysierte Reaktionen sowie für Reaktionen, bei denen der Katalysator nicht örtlich auf das Rohrbündel beschränkt ist, d.h. Reaktionen mit homogen im Reaktionsgemisch gelösten Katalysatoren und Reaktionen mit im Reaktionsgemisch suspendierten Katalysatoren, d.h. mit heterogen verteilten Katalysatoren wie beispielsweise bei Hydrierung mit Raney-Ni als Katalysator in Partikelform. Ferner ist der erfindungsgemäße Rohrbündelreaktor und das erfindungsgemäße Verfahren auch für Reaktionen mit Festbettkatalysator geeignet.

### DARSTELLUNG DER ERFINDUNG

Die gestellte Aufgabe wird mit einem Rohrbündelreaktor nach Anspruch 1 und einem Verfahren zum Betreiben des Rohrbündelreaktors nach Anspruch 10 gelöst.

Das der Erfindung zugrunde liegende Konzept ist es, für die Eintrittshaube, durch die das Reaktionsgemisch dem Rohrbündel eines Rohrbündelreaktors zugeführt wird, mit einem geringen Innenvolumen auszustatten. Dadurch lässt sich die Temperatur des Gemischs innerhalb der Haube besser kontrollieren, wobei, im Vergleich zu Reaktoren gemäß dem Stand der Technik, weniger Masse des Reaktionsgemischs innerhalb der Haube bezogen auf die Masse innerhalb des Rohrbündels vorliegt. Dadurch lässt sich erreichen, dass die Temperaturen an verschiedenen Stellen des Reaktors (d.h. Haube und Rohrbündel) im Wesentlichen aneinander angeglichen werden können und somit im gesamten Reaktor im Wesentlichen homogene Reaktionsbedingungen herrschen, auch wenn sich Strömungsverhältnisse und Wärmeleitungsmechanismen innerhalb der Haube von denen des Rohrbündels unterscheiden. Insbesondere die Temperatur in der Haube lässt sich mit dem erfindungsgemäßen Aufbau durch äußere Wärmezufuhr beziehungsweise Wärmeabfuhr präzise Steuern und der erfindungsgemäßen Aufbau der Haube vermeidet Inhomogenitäten der Reaktionsbedingungen innerhalb der Haube selbst. Die flache Bauweise erlaubt durch den (bezogen auf das Haubenvolumen) erhöhten Wärmetransport die Unterdrückung von Hot-Spots in der Haube, so dass auch thermisch instabile Produkte mit einer hohen Selektivität erzeugt werden können, da die Temperaturverteilung in der Haube im Wesentlichen homogen ist. Die Reaktionsbedingungen in der/den gesamten Haube(n) entsprechen im Wesentlichen den Reaktionsbedingungen in dem Rohrbündel, wodurch die Selektivität nicht durch Temperaturabweichung in der Haube (gegenüber dem Rohrbündel) beeinträchtigt wird. Nahezu das gesamte Reaktionsgemisch in der Haube hat die gleiche Temperatur wie das Gemisch innerhalb des Rohrbündels. Nur ein vernachlässigbarer Anteil des Gemischs oder kein Gemischanteil innerhalb der Haube hat eine Temperatur, die sich (wenn auch nur leicht) von der Temperatur innerhalb des Rohrbündels unterscheidet. Insbesondere lassen sich die Reaktionsbedingungen innerhalb der Haube den Reaktionsbedingungen innerhalb des Rohrbündels leichter angleichen, da in der Haube nur wenig Reaktionsgemisch vorliegt, bezogen auf die Masse innerhalb des Rohrbündels und bezogen auf die Durchsatzrate.

Als relativ geringes Volumen wird das Volumen der erfindungsgemäßen Haube bezogen auf die Größe des Reaktors bezeichnet, welches geringer ist als das Volumen einer Haube nach dem Stand der Technik bezogen auf die Größe des Reaktors. Die Größe des Reaktors kann in diesem Kontext (i) mit dem Querschnitt des Rohrbündels gleichgesetzt werden, (ii) mit dem Volumen der Innenräume der Rohre, die das Rohrbündel bilden, gleichgesetzt werden, (iii) mit dem Volumen, das das Rohrbündel insgesamt umgreift, gleichgesetzt werden, (iv) mit dem Volumen einer Hülle, die das Rohrbündel umgreift gleichgesetzt werden, oder (v) mit dem Durchsatz des Rohrbündelreaktors im geregelten Betrieb gleichgesetzt werden. Ferner können andere geometrische oder verfahrenstechnische Reaktorgrößen verwendet werden, um als Bezugspunkt oder Normierung für das Haubenvolumen zu dienen. Als Hauben gemäß dem Stand der Technik sind hier die in der Beschreibungseinleitung beschriebenen Haubenformen anzusehen, d.h. halbkugelförmige Hauben, glockenförmige Hauben oder übliche Hauben, die als Rotationsellipsoid ausgeformt sind und Teil eines Rohrbündelreaktors gemäß dem Stand der Technik sind.

Das erfindungsgemäß geringe Volumen der Zuführungshaube ist gleichbedeutend mit einer flachen Bauform der Zuführungshaube, deren Verlauf im Querschnitt sich von halbkugelförmigen, üblichen Rotationsellipsoiden und anderen glockenförmigen Hauben des Stands der Technik dadurch unterscheidet, dass der Querschnitt an der Decke, an der die Gemischzufuhr erfolgt, sich stark vom Querschnitt am Anschlußende der Haube an den Rohrbündelabschnitt des Reaktors unterscheidet, und gleichzeitig der Querschnitt auf kurze Distanz zwischen Decke und Anschlußende zum Anschlußende hin deutlich vergrößert wird. Mit anderen Worten ist der sich öffnende Verlauf von Haubendecke bis zum Anschluss an den Rohrbündelabschnitt des Reaktors mit einer Querschnittsflächenzunahme entlang der Längsachse zum Rohrbündel hin verbunden, die deutlich größer als die Zunahme bei üblichen halbkugelförmigen oder rotationsellipsoiden Hauben ist. Das Anschlußende ist das Ende der Haube, das dem Rohrbündel zugewandt ist bzw. an dieses anstößt, d.h. an das Zuführungsende oder and das Abgabeende des Rohrbündels.

Der höhere Zuwachs an Querschnittsfläche bei der erfindungsgemäßen Konstruktion des Rohrbündelreaktors ist automatisch mit einem Verhältnis von Oberfläche der Haube zu Innenvolumen der Haube verknüpft, das deutlich größer als bei üblichen Haubenkonstruktionen ist, wodurch sich eine bessere Wärmeabfuhr (oder Wärmezufuhr) bezogen auf eine zu kühlende (oder im Allgemeinen zu temperierende) Masse innerhalb des kleinen Innenvolumens der Haube ergibt. Wärmezufuhr oder Wärmeabfuhr wird hierbei insbesondere durch Wärmeleitung (bsp. zu einem Medium wie der Umgebungsluft oder auch einer Kühlflüssigkeit) und durch natürliche Konvektion erzielt. Vor allem ist jedoch die Querschnittsvergrößerung, die notwendig ist, um einen externen Gemischstrom dem Rohrbündel zuzuführen, mit einem relativ geringen Mengenanteil von Reaktionsgemisch außerhalb des Rohrbündels (d.h. innerhalb der Zuführungshaube) bezogen auf die Gesamtmenge innerhalb des Rohrbündelreaktors oder innerhalb des Rohrbündels verknüpft. Durch das geringe Volumen und somit die geringe Menge von Reaktionsgemisch innerhalb der Zuführungshaube, d.h. außerhalb des Rohrbündels, können die Reaktionsbedingungen homogener vorgesehen werden, so dass sich die Reaktionsbedingungen in der Haube den Reaktionsbedingungen des Rohrbündels angleichen lassen und somit Temperatur (und Druck) in der Haube und im Rohrbündel im Wesentlichen gleich sind. Neben dem geringen Volumen der erfindungsgemäßen Haube ist des deren flache Form, durch die eine große Oberfläche bezogen auf das Haubenvolumen erzielt wird. Aufgrund dieser großen Oberfläche (bezogen auf das Volumen) kann Reaktionswärme, die im Volumen erzeugt wird, effizient über die große Oberfläche (d.h. insbesondere über den Rohrboden des Rohrbündels, der sich an die Haube anschließt und auch über die nach außen gewandte Seite der Haube) abgeführt werden. Durch die flache und geringvolumige Bauform wird die Ausbildung von Hot Spots innerhalb der Haube vermieden, da sich von jedem Punkt der Haube die Wärme gut, d.h. mit hoher Wärmeübertragungsrate, abführen lässt. Insbesondere bei Reaktionen mit homogen verteiltem Katalysator und bei Reaktionen, die ohne Katalysator bzw. auch außerhalb des Rohrbündels ablaufen, lassen sich somit stabile Bedingungen auch in der Haube erreichen, oder auch die Bedingungen in der Haube den Bedingungen in dem Rohrbündel angleichen. Insbesondere bei kritischen Reaktionssituationen, beispielsweise bei selbstbeschleunigenden Reaktionen oder wenn der Reaktionsgemischdurchfluss gestört ist, ist die geringe Menge an Reaktionsgemisch innerhalb der Zuführungshaube, d.h. außerhalb des Rohrbündels, besser zu kontrollieren, unter anderem wegen der geringen Menge, und der besseren Kühlungsabstrahlung der Haube, die sich durch das größere Oberflächen-/Innenvolumenverhältnis der Haube im Vergleich zu Hauben des Stands der Technik ergibt. Die Wärmeabgabe über die Haube addiert sich zu der starken Wärmeabgabe über den Rohrboden, der auf der Seite, die von der Haube abgewandt ist, mit Kühlmedium des Rohrbündels gekühlt wird. Die Kühlung des Reaktionsgemischs in der Haube findet daher von beiden Seiten statt, d.h. vom Rohrboden aus sowie von der gegenüberliegenden Haubendecke aus. Üblicherweise ist der Kühlungseffekt durch den Rohrboden deutlich stärker als der Kühlungseffekt an der Haubendecke, jedoch ist insbesondere bei temperaturempfindlichen Produkten wichtig, dass an keiner Stelle (also auch nicht an der Haubendecke) die Temperatur wesentlich vom Soll abweicht.

Die erfindungsgemäß flache Bauform der Zuführungshaube kann somit definiert werden durch die Querschnittsflächenzunahme bezogen auf den Abstand zwischen Decke der Zuführungshaube, d.h. die dem Rohrbündelende gegenüberliegende Innenfläche der Haube und Anschlussstelle zum Rohrbündelabschnitt des Rohrbündelreaktors. Hierbei wird zur Erfassung der Querschnittszunahme der Querschnitt (bei mehreren Eintrittslöchern bzw. Eintrittsstellen: der gesamte Querschnitt) durch den der Fluidstrom der Haube zugeführt wird zum Querschnitt des Fluidstroms in Beziehung gesetzt, der durch das dem Rohrbündel zugewandte Ende der Zuführungshaube fließt. Insbesondere kann der Querschnitt der Zuführungshaube am Rohrbündel zu dem Gesamtquerschnitt aller Eintrittslöcher am gegenüberliegenden Ende der Zuführungshaube in Beziehung gesetzt werden, um den Querschnittszuwachs zu erfassen. Der Querschnittszuwachs wird auf die Haubenhöhe bezogen. Die Haubenhöhe ist der Abstand zwischen den beiden Enden der Haube, d.h. zwischen dem Ende, das dem Rohrbündel zugewandt ist, und dem gegenüberliegenden Ende. Erfindungsgemäß erweitert sich der Querschnitt der Haube vom Haubenbeginn zum Haubenende (das am Zuführungsende des Rohrbündels liegt) innerhalb einer kurzen Distanz entlang der Längsachse des Rohrbündelreaktors. Dies steht im Gegensatz zum Querschnittsflächenzuwachs beim Stand der Technik gemäß einer Halbkugelform oder gemäß einer bekannten Rotationsellipsoidform. Als Maß für den Querschnittszuwachs kann der Zuwachs der Querschnittsfläche in Prozent pro Millimeter angegeben werden. Typische Werte für bekannte Reaktoren mit einer üblichen Halbkugel oder Kugelsegmentform haben einen Querschnittsflächenzuwachs von 0,1 - 0,3 %/mm, wohingegen bei der erfindungsgemäßen Ausbildung der Zuführungshaube typischerweise Werte von mindestens 1 %/mm, mindestens 2 %/mm, mindestens 3 %/mm, mindestens 4 %/mm, mindestens 5 %/mm, mindestens 6 %/mm, mindestens 7 %/mm, mindestens 8 %/mm, mindestens 10 %/mm, mindestens 12 %/mm, mindestens 15%/mm, mindestens 20 %/mm oder ähnlich aufweisen. Hierbei ist zu beachten, dass für Hauben mit der Form von Rotationsparaboloiden oder von Halbkugeln nicht die idealisierte Form bei dieser Betrachtung zugrunde gelegt wird, bei der direkt an der Oberfläche der Kugel bzw. an der Spitze des Rotationsparaboloiden ein Ebenenschnitt keinen Kreis sondern einen Punkt bildet. Anstatt der idealisierten mathematischen Form wird hier von der realen Form aufgegangen, bei der die Zuführungs-/Abführungsöffnungen an der Haubendecke vorliegen. Der Ort dieser Öffnungen wird als Bezugspunkt zur Erfassung des Querschnittszuwachses herangezogen. Der Querschnittszuwachs bezieht sich somit auf die Verbreiterung des Querschnitts der Strömung, die von dem angelieferten und einströmenden Reaktionsgemisch vorgesehen wird. Als Querschnittszuwachs wird der Zuwachs des Querschnitts betrachtet, der von dem strömenden Reaktionsgemisch eingenommen wird. Da die Strömung entlang der Innenfläche der Zuführungshaube geführt wird, ist deren Verlauf maßgebend für den Querschnittszuwachs. Die erfindungsgemäße Haubenform und deren Definition durch die Querschnittszunahme entlang der Längsachse zum Rohrbündel des Rohrbündelreaktors hin, wird zudem anhand der Figurenbeschreibung näher erläutert. Der Querschnittszuwachs stellt keine differenzielle Größe dar, sondern bemisst sich durch den Vergleich der Querschnittsfläche der Eintrittsöffnung / aller Eintrittsöffnungen der Haube mit der Querschnittsfläche, die die Haube am Zuführungsende des Rohrbündels aufweist. Der Querschnittszuwachs bezieht sich somit über die gesamte Höhe der Haube, d.h. die Entfernung von Zuführungsende zu der Innenfläche der Haube, die dem Zuführungsende gegenüber liegt. Bei mehreren Zuführungsströmen kann als Maß für die Höhe eine gemittelte Höhe aller Zuführungen verwendet werden, oder die größte aller Höhen.

Gemäß einem weiteren Aspekt der Erfindung wird die flache Bauform dadurch charakterisiert, dass das Innenvolumen der Haube zur Querschnittsfläche am Übergang zum Rohrbündel in Beziehung gesetzt wird. Während das Innenvolumen die Masse des Reaktionsgemischs innerhalb der Haube kennzeichnet (wobei die Masse des Reaktionsgemischs innerhalb der Haube aufgrund der mangelnden Kontrollmöglichkeit kritisch für den Reaktionsverlauf und insbesondere die Selektivität ist), kennzeichnet die Querschnittsfläche der Haube am Zuführungsende des Rohrbündels, d.h. am Übergang der Haube zum Rohrbündel, eine relevante Bezugsgröße zur qualitativen Abschätzung, ob das Innenvolumen und somit die Haube flach ausgestaltet ist, oder ob eine relevante Menge von Reaktionsgemisch bezogen auf den Querschnitt des Rohrbündels in der Lage ist, den Reaktionsverlauf innerhalb der Haube deutlich vom Reaktionsverlauf innerhalb des Rohrbündels zu verändern. Mit anderen Worten ist erfindungsgemäß gewünscht, dass das Innenvolumen relativ klein ist und die zugehörige Querschnittsfläche relativ groß ist, so dass die (absolut gesehene) Gesamtmenge des Reaktionsgemisches im Innenvolumen auch bei normalen oder geringen Strömungsgeschwindigkeiten schnell durch die Querschnittsfläche in das Rohrbündel eintreten kann, um an die dortigen Temperatur-und Druckverhältnisse angepasst werden zu können. Somit ist die Verweilzeit des Gemischs in der Haube geringer, bevor es in das Rohrbündel eintritt, wodurch der kritische Zeitraum, während dem sich das Gemisch in der Haube aufhält, deutlich verringert wird. Das Verweilen von Gemisch in der Haube ist kritischer als das Verweilen des Gemischs in dem Rohrbündel, weil die Temperatur im Rohrbündel deutlich besser kontrolliert werden kann.
Typische Bauformen für Hauben, insbesondere für Zuführungshauben von Rohrbündelreaktoren gemäß dem Stand der Technik, weisen aufgrund der ausladenden Form ein Verhältnis von Innenvolumen zu Querschnittsfläche von 0,6 m - 0,8 m auf. Das heißt, dass pro Quadratmeter Querschnittsfläche am Eintritt (oder am Austritt) des Rohrbündels, d.h. am Rohrboden, 0,6 m³ - 0,8 m³ Reaktionsgemisch dem Rohrbündel vorgelagert sind, bzw. nach dem Rohrbündel in der Abgabehaube gespeichert werden, und sich somit außerhalb der durch die Rohrbündelkühlung vorgesehenen Temperatursteuerung befinden. Mit anderen Worten müssen pro Quadratmeter Eintrittsfläche in das Rohrbündel 0,6 m³ - 0,8 m³ Reaktionsgemisch zwischen Einspeisung in die Zuführungshaube und tatsächlichem Eintritt in das Rohrbündel im Falle einer üblichen Zuführungshaube zwischengespeichert werden, ohne dass die Prozessbedingungen so gesteuert werden können, wie sie innerhalb des Rohrbündels gesteuert werden. Insbesondere im Falle eines plötzlichen Ausfalls der Transportsysteme für das Reaktionsgemisch wird klar, dass eine beträchtliche Menge an Reaktionsgemisch außerhalb des kontrollierbaren Rohrbündels vorliegt. Daher wird erfindungsgemäß ein Verhältnis von Innenvolumen zu Querschnittsverhältnis vorgesehen, das ≤ 0,5 m, ≤ 0,4 m, ≤ 0,35 m, ≤ 0,3 m, ≤ 0,25 m, ≤ 0,2 m, ≤ 0,15 m, ≤ 0,1 m, ≤ 0,08 m oder ≤ 0,05 m ist. Dadurch wird erreicht, dass in der Zuführungshaube sowie gegebenenfalls auch in der Abgabehaube, die an das Abgabeende des Rohrbündels angeschlossen ist, bezogen auf die Aufnahmekapazität des Rohrbündels, das durch die Querschnittsfläche des Rohrbündels bestimmt ist, wenig Volumen bzw. wenig Masse des Reaktionsgemischs außerhalb des Rohrbündels in dem Rohrbündelreaktor vorliegt.

Gemäß einem weiteren Aspekt der Erfindung lässt sich die flache Bauform der Zuführungshaube (oder auch der Abgabehaube) realisieren durch ein geeignetes Verhältnis eines Maximalabstands zwischen beiden entgegengesetzten Enden der Haube (d.h. der Haubenhöhe, die zwischen Haubendecke und Rohrboden liegt) zur Querschnittsfläche am Übergang zum Rohrbündel. Als Maximalabstand wird die maximale innere Höhe des Innenvolumens bezeichnet, wobei der Abstand zwischen Innenfläche der Zuführungshaube und Zuführungsende des Rohrbündels (d.h. Beginn des Rohrbündels) gemessen wird. Der Maximalabstand kann in nicht erfindungsgemäßen Anordnungen bei zahlreichen geeigneten Formen der Haube als Haubenhöhe bezeichnet werden, d.h. als Höhe der Haubendecke gegenüber dem Ende der Haube, das an das Rohrbündel angeschlossen ist. Ferner kann der Maximalabstand in nicht erfindungsgemäßen Anordnungen ohne Bezugnahme auf das Zuführungsende des Rohrbündels als der maximale Abstand zwischen der Innenfläche der Zuführungshaube und derjenigen Ebene betrachtet werden, mit der die Zuführungshaube abschließt. In gleicher Weise wird dadurch die Bauform der Abgabehaube definiert, wobei dort an die Stelle des Zuführungsendes das Abgabeende des Rohrbündels tritt. Der Maximalabstand bezeichnet somit in diesen nicht erfindungsgemäßen Anordnungen die maximale innere Höhe der Haube bei einer durchgehend konvexen Form der Haube bzw. des Haubeninnenvolumens, die auf die Mitte des Rohrbündelreaktors, d.h. auf das Rohrbündel bezogen ist. Gemäß einer anderen Ausführungsform, bei der die Haube nicht durchgehend konvex gebogen ist, sondern allgemein in einer Form vorliegt, die in einer Ebene am Rohrbündel abschließt, wobei der dazwischen liegende Verlauf der Haube stückweise monoton ist, ergibt sich der Maximalabstand als Abstand des Ortes oder der Orte, die den größten Abstand zur abschließenden Ebene der Zuführungshaube aufweisen. Beispielsweise umfasst eine Bauform eine Haube mit einem stückweise oder vollständig ebenen Boden, wobei der Boden parallel zur Abschlussfläche der Haube ausgebildet ist. Diese Bauform umfasst beispielsweise eine zylindrische Bauform, bei der sich der Boden vollständig in einer Ebene erstreckt, und über parallel zur Längsachse des Rohrbündels erstreckende Seitenwände mit dem Rohrbündel bzw. einer Reaktorwand, die das Rohrbündel umgibt, verbunden ist. In diesem Fall entspricht der Maximalabstand dem Abstand zwischen Boden und Ende des Rohrbündels bzw. zwischen Boden und Abschlussebene der Haube. Die Abschlussebene der Haube kann in der Ebene liegen, in der das Ende des Rohrbündels liegt, oder kann hierzu entlang der Längsachse des Rohrbündels versetzt sein, beispielsweise wenn das Ende des Rohrbündels zur Abschlussebene der Haube zur Abgabehaube hin versetzt ist. In dem Zwischenraum, der sich durch den Versatz ergibt, können Zuleitungen oder ein Spalt oder ein Lochblech vorgesehen sein, um die aus der Abschlussebene der Haube tretende Fluidströmung dem Rohrbündel zuzuführen. Als Querschnittsfläche wird, wie bereits beschrieben, die Fläche beschrieben, die die Haube bzw. das Haubeninnere am Zuführungsende oder am Abgabeende aufweist. Als Querschnittsfläche kann ferner die Fläche des Querschnitts der Haube in der Abschlussebene der Haube angesehen werden. Insbesondere kann als Querschnittsfläche die Fläche angesehen werden, die die Reaktorwand in der Höhe eines der Enden des Rohrbündels aufweist. Die oben verwendeten Definitionen der Querschnittsfläche sind mit diesen frei austauschbar. Erfindungsgemäß wird die erfindungsgemäße Bauform der Haube dadurch erreicht, dass das Verhältnis zwischen dem so definierten Maximalabstand, d.h. der Haubenhöhe, zu der so definierten Querschnittsfläche ≤ 0,15 m⁻¹, ≤ 0,1 m⁻¹, ≤ 0,075 m⁻¹, ≤ 0,06 m⁻¹, ≤ 0,05 m⁻¹, ≤ 0,04 m⁻¹, ≤ 0,03 m⁻¹, ≤ 0,025 m⁻¹, ≤ 0,02 m⁻¹ oder ≤ 0,01 m⁻¹ ist. Da der Maximalabstand der Haube eindeutig über die geometrische Form der Haube mit dem Innenvolumen verknüpft ist, bietet auch der Maximalabstand bezogen auf die Querschnittsfläche ein geeignetes Maß für die flache Bauform der Haube. Die flache Bauform verhindert, dass eine große Menge an Reaktionsgemisch innerhalb des Reaktors, jedoch außerhalb des Rohrbündels vorliegt. Wie bereits bemerkt, lässt sich diese in den Hauben vorgesehene Menge nicht in gleichem Maße kontrollieren wie das Gemisch innerhalb des Rohrbündels, so dass sich bei zahlreichen Reaktionen und Betriebsparametern in der Haube andere Temperaturverhältnisse ausbilden als im Rohrbündel, wenn die Haube eine wesentliche Menge an Reaktionsgemisch umgreift. Wie bereits bemerkt, lässt sich durch die Definition der flachen Bauform die Menge an Reaktionsgemisch vor bzw. nach dem Rohrbündel zu der Querschnittsfläche des Rohrbündels in Beziehung setzen, wobei das Volumen (unter anderem definiert durch Maximalabstand) vom Reaktionsgemisch außerhalb des Rohrbündels bezogen wird auf die Aufnahmeleistung des Rohrbündels, die durch die Querschnittsfläche definiert ist.

Gemäß einem weiteren Aspekt der Erfindung lässt sich die flache Bauform der Zuführungshaube (oder auch der Abgabehaube) beschreiben durch den maximalen Abstand aller Punkte innerhalb der Haube zu der nächstliegenen wärmeabführenden Fläche. Als wärmeabführende Flächen werden die Reaktorböden (insbesondere der Reaktorboden an der Zuführung) und die Haubeninnenfläche bezeichnet. Als alle Punkte sind alle Orte zu verstehen, in denen Reaktionsgemisch vorliegen kann, beispielsweise innerhalb eines Spalts der Haube. In diesem Kontext kann Reaktionsgemisch nicht innerhalb von Einbauten oder Komponenten vorliegen, die sich in der Haube befinden. Beispielsweise kann kein Reaktionsgemisch in einer Ablenkvorrichtung vorliegen; die innerhalb der Vorrichtung liegenden Orte sind daher nicht zur Berechnung des maximalen Abstands heranzuziehen. Ist das Maximum (= der maximale Abstand) gering, so ist gewährleistet, dass sich alle Punkte in der Nähe von wärmeabführenden Flächen befinden, so dass kein Hot Spot und kein starker Temperaturgradient bzw. keine starke Temperaturerhöhung entstehen kann. Ferner gewährleistet dies, dass die Bedingungen (z.B. die Temperatur) in der Haube den Bedingungen in dem Rohrbündel angeglichen oder im Wesentlichen identisch sind.

Beispielsweise ist das so definierte Maximum, d.h. das Maximum des Abstands aller Punkte innerhalb der Haube zu dem jeweils nächstliegenden Punkt der Innenfläche der Haube (d.h. Zuführungshaube beziehungsweise Abgabehaube) oder zu dem Rohrboden, der die Haube abschließt, bei einem Reaktor mit einem Reaktorbündeldurchmesser von 2 oder 3 m kleiner als 10 cm, bevorzugt kleiner als 5 cm oder kleiner als 3 cm. Der Rohbündelreaktor hat bevorzugt einen Durchmesser von 4,5 m - 0,5 m, das Maximum bei einem Durchmesser von 4,5 m ist vorzugsweise kleiner als 25 cm oder kleiner als 15 cm. Das Maximum bei einem Durchmesser von 0,5 m ist vorzugsweise kleiner als 3 cm oder kleiner als 2 cm. Grundsätzlich bezieht sich das Maximum (= der maximale Abstand) auf den Durchmesser des Rohrbündels, wie er voranstehend durch die Intervalle definiert ist. Bei anderen Durchmessern (Durchmesser außerhalb der oben stehenden Intervalle) ist das Maximum gemäß diesen angegebenen Verhältnissen direkt proportional anzupassen. Bezogen auf den Durchmesser des Rohrbündels beträgt somit das Maximum vorzugsweise ≤ 5 %, ≤ 2 %, ≤ 0,8 %, ≤ 0,6 %, ≤ 0,4 %, ≤ 0,25 %, insbesondere besonders bevorzugt ≤ 1 % des Durchmessers des Rohrbündels. Der Durchmesser kann sich auf den Innenquerschnitt der Reaktorwand oder auf den Gesamtquerschnitt des Rohrbündels oder, bevorzugt, auf den Querschnitt der Haube an deren dem Rohrbündel zugewandten Ende beziehen. Bei nicht kreisförmigen Querschnitten kann anstatt des Durchmessers die maximale radiale Entfernung gegenüberliegender Stellen verwendet werden, oder die Entfernung zwischen Mittelpunkt und Umrandung, gemittelt über die gesamte Umrandung. Insbesondere kann als Durchmesser der Durchmesser des einbeschriebenen Kreises oder der Durchmesser des umbeschriebenen Kreises betrachtet werden.

Die oben stehenden Definitionen der flachen Bauform über Querschnittszuwachs, Verhältnis von Innenvolumen zu Querschnittsfläche und Verhältnis von Maximalabstand bzw. Höhe zu Querschnittsfläche können einzeln und auch in beliebiger Kombination miteinander verwendet werden. So kann die Bauform nur durch die oben definierten Vorgaben des Querschnittszuwachses, nur durch die Vorgaben des Verhältnisses von Innenvolumen zu Querschnittsfläche oder nur durch die Vorgaben des Verhältnisses des Maximalabstands zur Querschnittsfläche definiert werden. Die oben definierten Größenvorgaben können jedoch auch miteinander in beliebiger Weise durch eine logische UND-Verknüpfung miteinander kombiniert werden. Ferner können zur Definition der flachen Bauform die Einschränkungen aller drei Größen verwendet werden.

Somit wird die Erfindung realisiert durch einen Rohrbündelreaktor mit einem Rohrbündel, das ein Zuführungsende aufweist, das mit einer Zuführungshaube des Rohrbündelreaktors verbunden ist, wobei die Zuführungshaube in einer flachen Bauform ausgestaltet ist. Die flache Bauform der Zuführungshaube ist mit einer Querschnittsfläche am Zuführungsende und einem Innenvolumen ausgestaltet, wobei das Verhältnis von Innenvolumen zu Querschnittsfläche gemäß einer bevorzugten Ausführungsform ≤ 0,35 m ist. Ferner ist die Zuführungshaube in einer flachen Bauform mit einem Maximalabstand zwischen Zuführungshaube und Zuführungsende (= "Haubenhöhe") ausgestaltet, wobei das Verhältnis von Maximalabstand zu Querschnittsfläche in einer bevorzugten Ausführungsform ≤ 0,1/m ist. Ferner ist die Zuführungshaube in einer flachen Bauform mit einem Querschnittszuwachs beginnend mit einer Gesamtquerschnittsfläche von Eintrittslöchem, über die das Gemisch der Haube zugeführt wird, zum Rohrbündel hin ausgestaltet, wobei der Querschnittszuwachs ausgehend von der Gesamtquerschnittsfläche der Eintrittslöcher zur Querschnittsfläche am Zuführungsende (oder am Haubenende) mindestens 0,6 %/mm entlang der Längsachse des Rohrbündels zum Rohrbündel hin beträgt. Auch die Abgabehaube hat vorzugsweise diese flache Bauform, wobei an die Stelle der Eintrittslöcher Austrittslöcher der Abgabehaube treten und an die Stelle des Zuführungsendes das Abgabeende der Abgabehaube tritt. Darüber hinaus gelten für die Abgabehaube die gleichen Definitionen der flachen Bauform wie für die Zuführungshaube.

Das der Erfindung zugrunde liegende Konzept wird ferner umgesetzt durch ein Verfahren zum Betreiben des Rohrbündels, umfassend Einleiten eines Eduktgemisches in ein Rohrbündel und Umsetzen zumindest eines Anteils des Eduktgemisches innerhalb des Rohrbündels zu einem Produkt. Das Einleiten umfasst hierbei das Zuführen des Eduktgemisches in einen Innenraum einer Zuführungshaube des Rohrbündelreaktors. Das Eduktgemisch wird in ein Zuführungsende des Rohrbündels in Form eines Fluidstroms von dem Haubeninneren zum Rohrbündel weitergeleitet. Gemäß einem ersten Aspekt der Erfindung hat der Fluidstrom eine Querschnittsfläche beim Eintritt in das Zuführungsende, und der Innenraum der Zuführungshaube, durch die der Fluidstrom fließt, weist ein Innenvolumen auf, wobei das Verhältnis von Innenvolumen zu Querschnittsfläche kleiner ist als 0,35 m. Gemäß einem zweiten Aspekt der Erfindung weist der Fluidstrom eine Querschnittsfläche beim Eintritt in das Zuführungsende auf sowie einen Maximalabstand auf, der zwischen dem Fluidstrom, welcher in das Zuführungsende weitergeleitet wird, und dem Zuführungsende liegt, wobei das Verhältnis von Maximalabstand zu Querschnittsfläche kleiner ist als 0,1/m. Als Maximalabstand wird hierbei der Abstand eines Teils des Fluidstroms bezeichnet, der den größten Abstand zu derjenigen Ebene hat, in welcher die Querschnittsfläche liegt. Die Querschnittsfläche kann ferner auf den Fluidstrom bezogen sein, oder auch auf den Innendurchmesser einer Reaktorwand, die am Zuführungsende das Rohrbündel umgibt, oder kann den Querschnitt der Zuführungshaube an dem Ende der Zuführungshaube darstellen, der dem Rohrbündel zugewandt ist. Alle diese Bezugspunkte dienen austauschbaren Definitionen der flachen Bauform und sind mit sämtlichen Ausführungsformen und Merkmalen kombinierbar. Die Definitionen der flachen Bauform definieren lediglich die geometrische Form der Haube bzw. Hauben und sind mit allen anderen Merkmalen des erfindungsgemäßen Rohrbündelreaktors kombinierbar, insbesondere mit Ausführungsformen, die Einbauten in der Haube aufweisen, spezifische Anschlussmerkmale haben, oder auf andere Weise Merkmale aufweisen, die nicht mit der geometrischen Ausgestaltung der Haube unmittelbar verknüpft sind.

Die Form der Zuführungshaube (und somit die Form des Innenvolumens der Zuführungshaube) ist eine Form, die sich ausgehend von dem, dem Rohrbündel abgewandten Ende zum Rohrbündel hin zumindest stückweise monoton oder zumindest stückweise streng monoton oder in einem bestimmten Abstand vom Rohrbündel sprunghaft erweitert. Zumindest ein Abschnitt des Innenvolumens der Zuführungshaube, das an dem Zuführungsende angeordnet ist und vorzugsweise an das Zuführungsende oder an das Haubenende anstößt, ist in zylindrischer Form ausgestaltet. Der Zylinder, welcher die zylindrische Form definiert, weist vorzugsweise einen kreisförmigen Querschnitt auf, jedoch sind auch ovale oder polygonale Formen möglich.

Der Abschnitt des Innenvolumens der Zuführungshaube kann ferner als Hohlzylinder oder in Form eines Hohlzylinders mit kreisförmigem Innen- und Außenquerschnitt ausgestaltet sein. Die Form eines Hohlzylinders wird vorgesehen durch die Innenseite der Zuführungshaube als Außenbegrenzung, d.h. als Seitenwand des Zylinders, sowie durch einen Körper, der innerhalb der Zuführungshaube angeordnet ist und der die Innenbegrenzung des Hohlzylinders vorsieht. Bevorzugte Ausführungsformen des Körpers werden im Weiteren näher beschrieben. Der Abschnitt, in dem das Innenvolumen die Form eines Hohlzylinders hat und somit beispielsweise einen Ringspalt ausbildet, grenzt vorzugsweise nicht unmittelbar an das Zuführungsende des Rohrbündels an, sondern ist über einen Spalt mit dem Zuführungsende des Rohrbündels verbunden. Hierbei hat das Innenvolumen innerhalb des Spalts vorzugsweise einen durchgängigen Querschnitt, d.h. in der Form eines Kreiszylinders, oder das Innenvolumen ist als eine Vielzahl von Zylindern ausgestaltet, die im Wesentlichen gleich verteilt sind. Beispielsweise ein Lochblech definiert durch seine Öffnungen eine Vielzahl von Zylindern.

Die Ausbildung eines Abschnitts des Innenvolumens als Hohlzylinder dient dazu, das in die Haube einströmende Gemisch nicht unmittelbar in das Rohrbündel einfließen zu lassen, sondern die dem Eintrittsloch oder den Eintrittslöchem gegenüberliegenden Röhren vor einem direkten Zufluss zu schützen. Zu diesem Zweck wird der Reaktionsgemischfluss, welcher unmittelbar zum Rohrbündel hin weist, in diesem Abschnitt durch den Innenzylinder des Hohlzylinders abgeblockt, so dass das Reaktionsgemisch nicht ungebremst und unmittelbar in das Rohrbündel eintreten kann. Durch die Führung des Reaktionsgemischs in Form eines Hohlzylinders wird gewährleistet, dass sich die Beaufschlagung des Rohrbündels mit Reaktionsgemisch nicht auf die Mitte des Rohrbündels oder einen anderen Abschnitt des Rohrbündels konzentriert, sondern dass der eintretende Fluidstrom durch die Blockade aufgeweitet wird, um den Innenzylinder des Hohlzylinders zu umströmen. Dadurch werden auch äußere Bereiche des Rohrbündels mit einer ausreichenden Strömung beaufschlagt.

Ferner wird dieses erfinderische Konzept umgesetzt durch einen Schritt des Einleitens, wobei das Einleiten umfasst: Einleiten des Fluidstroms mit einer durchgehenden Querschnittsfläche, wobei das Weiterleiten des Fluidstroms innerhalb der Zuführungshaube umfasst: Aufspreizen des eingeleiteten Fluidstroms; Umlenken des aufgespreizten Fluidstroms zum Zuführungsende hin; Führen des umgelenkten Fluidstroms in Form eines Hohlzylinders und Zusammenführen des Fluidstroms zu einem Zusammenführungs-Fluidstrom mit einem durchgehenden Querschnitt. Ferner wird erfindungsgemäß der Zusammenführungs-Fluidstrom in das Zuführungsende des Rohrbündels eingeleitet. Der Fluidstrom wird von Reaktionsgemisch vorgesehen, das in die Haube eingeleitet wird und von dieser dem Rohrbündel zugeführt wird.

Zur Ausbildung zumindest eines Abschnitts des Innenvolumens als Hohlzylinder ist innerhalb des Innenvolumens der Zuführungshaube eine Umlenkvorrichtung angeordnet. Die Umlenkvorrichtung ist zwischen einem Zuführungsanschluss der Zuführungshaube, d.h. dem Ende der Zuführungshaube, das dem Rohrbündel abgewandt ist, und dem Zuführungsende des Rohrbündels angeordnet. Hierdurch werden zumindest Teile eines Fluidstroms, der vom Zuführungsanschluss der Haube in die Zuführungshaube einströmt, in radialer Richtung oder in einer Richtung, die von der Längsachse weg weist, nach außen gelenkt, bevor der Fluidstrom in das Zuführungsende und somit in das Rohrbündel eintritt. Die Umlenkungsvorrichtung umfasst somit eine von der Längsachse nach außen führende Oberfläche, die sich insbesondere radial erstrecken kann. Diese Oberfläche der Umlenkvorrichtung ist dem Zuführungsanschluss der Haube zugewandt. Der Fluidstrom trifft auf diese Oberfläche und wird von der Längsachse des Reaktors weg nach außen gelenkt. An dieser Oberfläche wird der Fluidstrom somit nach außen geführt, um einen unmittelbaren Zustrom des Reaktionsgemischs von dem Zuführungsanschluss der Haube ungebremst in das Rohrbündel hinein zu verhindern bzw. zu blockieren.

Mit dem Attribut "nach außen gerichtet" wird eine Richtung bezeichnet, die geneigt zur Längsachse des Rohrbündels bzw. zur Längsachse der Zuführungshaube oder der Umlenkungsvorrichtung ist, und die von der Längsachse weg weist. Die so definierte Richtung kann eine Umlenkung des Fluidstroms um 90° hervorrufen, d.h. von einer Richtung parallel zur Längsachse zu einer Richtung senkrecht zur Längsachse (= radiale Richtung) oder kann eine beliebige Richtung sein, die eine derartige radiale Komponente aufweist, zusätzlich zu einer in Längsrichtung führenden Komponente, die parallel zur Längsachse gerichtet ist. Die Umlenkungsvorrichtung umfasst somit eine Oberfläche, die den am Zuführungsanschluss eintretenden Fluidstrom in seinem Umfang vergrößert. Hierdurch wird der Fluidstrom aufgespreizt. Die Umlenkungsvorrichtung kann als Blockierelement interpretiert werden, das verhindert, dass die am Zuführungsanschluss eintretende Strömung direkt ohne Erweiterung in das Zuführungsende des Rohrbündels eintritt und somit im Wesentlichen nur einen Teil der Querschnittsfläche des Rohrbündels mit einem ausreichenden oder hinreichend definierten Fluss an Reaktionsgemisch versorgt, wobei andere Abschnitte, beispielsweise außen liegende Abschnitte, einen geringeren Fluidstrom an Reaktionsgemisch erhalten. Die Umlenkungsvorrichtung wird beispielsweise als Prallplatte vorgesehen, insbesondere in Kreisform, die das Reaktionsgemisch nach außen leitet und mit der Haube einen Ringspalt bildet, durch den das Reaktionsgemisch in axialer Richtung, d.h. in einer Richtung parallel zur Längsachse, in hohlzylindrischer Form führt. Der durch die Umlenkungsvorrichtung vorgesehene größere Umfang der Fluidströmung ist um ein Mindestmaß breiter als der Querschnitt des Zuführungsendes des Rohrbündels, wobei die Umlenkungsvorrichtung durch ihre geometrischen Abmaße der Oberfläche den Fluidstrom derart gestaltet, dass der innere Querschnitt der hohlzylindrischen Form des umgelenkten Fluidstroms größer ist als die Querschnittsfläche des Zuführungsendes. Die Umlenkungsvorrichtung und insbesondere deren Oberfläche erstrecken sich somit vorzugsweise über die Querschnittsfläche des Zuführungsendes des Rohrbündels hinaus und deckt das Zuführungsende in Projektion entlang der Reaktorlängsachse vollständig ab. In einer weiteren Ausführungsform erstreckt sich die Umlenkungsvorrichtung über die Querschnittsfläche des Rohrbündels um einen zusätzlichen Rand hinaus. Zwischen der Oberfläche der Umlenkungsvorrichtung, die dem Rohrbündel zugewandt ist, und dem Zuführungsende des Rohrbündels besteht ein weiterer durchgehender Spalt in Längsrichtung des Rohrbündels, so dass sich die Fluidströmung nach Umlenkung durch die Umlenkungsvorrichtung über einen durchgehenden Querschnitt sammeln kann, wobei der durchgehende Querschnitt vorzugsweise mindestens so groß oder um einen zusätzlichen Rand größer als die Querschnittsfläche des Zuführungsendes ist. Somit wird erreicht, dass die umgelenkte Fluidströmung sich zwischen Umlenkungsvorrichtung und Zuführungsende über den vollständigen Querschnitt des Zuführungsendes wieder sammeln kann, bevor das Fluid mittelbar oder unmittelbar in das Rohrbündel eintritt.

Gemäß einer weiteren Ausführungsform der Erfindung umfasst die Umlenkungsvorrichtung eine Verteilerplatte, deren Querschnitt kleiner als die des Innenvolumens der Haube an dem Zuführungsende ist. Die Verteilerplatte kann somit vollständig innerhalb des Innenvolumens der Zuführungshaube angeordnet werden, insbesondere an dem Ende der Haube, die dem Rohrbündel zugewandt ist. Zwischen Verteilerplatte und Innenfläche der Haube wird so ein ringförmiger Kanal ausgebildet. Der Kanal verläuft zwischen dem Außenrand der Verteilerplatte und der Innenseite der Haube an dem Ende der Zuführungshaube, das dem Rohrbündel zugewandt ist. Der Querschnitt der Verteilerplatte ist somit kleiner als der des Innenvolumens an dem Zuführungsende, wodurch ein Kanal ausgebildet wird, der innerhalb des Innenvolumens am äußeren Rand der Platte in axialer Richtung der Platte und um den Außenrand der Verteilerplatte herum verläuft. Die Ausbildung des Kanals zwischen Verteilerplatte und Haube entspricht dem Abschnitt des Innenvolumens der Zuführungshaube, in dem das Innenvolumen als Hohlzylinder ausgebildet ist. Als Innenvolumen der Zuführungshaube wird somit an dieser Stelle der freie Raum innerhalb der Zuführungshaube angesehen, innerhalb dem sich eine Fluidströmung ausbilden kann.

Die Umlenkungsvorrichtung des Rohrbündelreaktors umfasst ferner eine Homogenisierungsplatte mit einer Vielzahl von durch diese hindurch verlaufenden Kanälen, die vorzugsweise jeweils als Zylinder mit einer Längsachse ausgebildet sind, die parallel zur Längsachse des Rohrbündels ist. Die Homogenisierungsplatte ist zwischen der Verteilerplatte und dem Zuführungsende angeordnet. Insbesondere ist die Homogenisierungsplatte entlang der Längsachse des Rohrbündels zur Verteilerplatte beabstandet, so dass sich zwischen dieser ein axialer Spalt ausbilden kann, der über den gesamten Querschnitt der Haube durchgängig ist, um zu ermöglichen, dass sich das Fluid nach dem Umlenken über einen breiten Querschnitt, d.h. über den gesamten Querschnitt der Zuführungshaube bzw. des dort vorliegenden Innenvolumenabschnitts ausbreiten kann. Die Verteilerplatte unterteilt einen freien Abschnitt des Innenvolumens zwischen dem Zuführungsanschluss und der Homogenisierungsplatte. Dadurch bildet sich ebenso zwischen Verteilerplatte bzw. der Oberfläche der Verteilerplatte, die dem Eintrittsende der Zuführungshaube zugewandt ist, und dem Eintrittsende der Zuführungshaube ein weiterer axialer Spalt, der sich über den gesamten Querschnitt des dort vorliegenden Innenraums der Zuführungshaube erstreckt. Das Eintrittsende der Zuführungshaube ist das Ende, welches dem Rohrbündel entgegengesetzt ist, und welches vorzugsweise ein, mehrere oder alle Eintrittslöcher umfasst, über die die Zuführungshaube und somit der Rohrbündelreaktor mit Reaktionsgemisch versorgt wird. Die Homogenisierungsplatte hat somit die Funktion, die umgelenkte Fluidströmung, nachdem diese wieder über den gesamten Querschnitt des Innenvolumens gesammelt wurde, hinsichtlich Druck und Flussgeschwindigkeit zu homogenisieren, bevor der Fluidstrom in das Zuführungsende des Rohrbündels eintritt. Die Homogenisierungsplatte kann direkt auf dem Zuführungsende des Rohrbündels aufgesetzt sein, oder es kann ein Spalt zwischen Rohrbündel und Homogenisierungsplatte vorgesehen sein, um zu ermöglichen, dass sich die einzelnen aus der Homogenisierungsplatte austretenden Fluidströmungen beeinflussen. Diese Beeinflussung führt zu einer weiteren Homogenisierung der Strömung.

Die Homogenisierungsplatte dient zur Aufstauung des Reaktionsgemischs vor dem Eintritt in das Rohrbündel, um beispielsweise einen definierten Druckverlust von 100 - 200 mbar zu realisieren, beispielsweise bei der Umsetzung von 1,5,9-Cyclododecatrien mit Distickstoffmonoxid zu Cyclododeca-4,8-dienon. Dieses Beispiel betrifft eine spezielle Ausführungsform, grundsätzlich können Druckverlustwerte von 0,01 bar bis 10 bar vorgesehen sein, solange grundsätzlich gegeben ist, dass der Druckverlust im wesentlichen durch die Homogenisierungsplatte definiert ist und durch den Druckverlust eine gleichmäßige Durchflussströmung (hinsichtlich des Durchsatzes) über den Querschnitt des Rohrbündels (insbesondere am Zuführungsende) aus den Betriebsparametern und den Strömungseigenschaften der Homogenisierungsplatte hervorgeht. Der Druckverlust ist maßgeblich durch den Betriebsparameterbereich (Druck, Temperatur, Durchflussgeschwindigkeit) bestimmt, der wiederum wesentlich von der durchzuführenden Umsetzungsreaktion abhängt. Die Erfindung soll nicht auf die Umsetzung von 1,5,9-Cyclododecatrien mit Distickstoffmonoxid beschränkt sein, vielmehr ist die Erfindung zur Durchführung einer Vielzahl verschiedener Umsetzungen und Reaktionen geeignet. Vorzugsweise ist jedes der Löcher der Homogenisierungsplatte gegenüber genau einem Eintritt eines zugehörigen Rohrs des Rohrbündels angeordnet. Anstatt oder in Kombination mit der Homogenisierungsplatte können zur Homogenisierung, die durch eine gezielte Aufstauung des Reaktionsgemischs in der Zuführungshaube vor dem Eintritt in das Rührbündel vorgesehen wird, auch Einbauten am Zuführungsende des Rohrbündels vorgesehen sein, oder auch Blenden, die den Rohreintritt gezielt verengen. Derartige Blendenelemente können beispielsweise mittels Schraubverbindungen auf oder in dem jeweiligen Rohreintritt befestigt werden, als Blenden können hier beispielsweise Schraubenköpfe vorgesehen sein. Hierbei deckt jeder Schraubenkopf genau einen Rohreintritt eines Rohrs teilweise ab. Der Schraubenkopf kann mit Löchern versehen sein, beispielsweise wenn der Schraubenkopf den Rohreintritt vollständig abdeckt. Ferner können Unterschiede in der Form des Schraubenkopfes bzw. der Blende gegenüber der Form des inneren Querschnitts des Rohrs definiert den Rohreintritt am Zuführungsende verkleinern.

Der Aspekt der Erfindung, der durch die Homogenisierungsplatte vorgesehen wird, kann ferner durch einen Verfahrensschritt umgesetzt werden, der im Rahmen des Einleitens des Zusammenführungs-Fluidstroms in das Zuführungsende des Rohrbündels durchgeführt wird, und der umfasst: Führen des Zusammenführungs-Fluidstroms durch eine Vielzahl von Kanälen einer Homogenisierungsplatte, die an dem Zuführungsende angeordnet ist. Vor diesem Hintergrund bedeutet die Anordnung der Homogenisierungsplatte an dem Zuführungsende eine Anordnung, bei der die Homogenisierungsplatte direkt an das Zuführungsende anstößt, oder eine Anordnung, bei der zwischen der Homogenisierungsplatte und dem Zuführungsende ein weiterer Spalt vorgesehen ist, um zu ermöglichen, dass sich die Fluidströme, die aus der Homogenisierungsplatte austreten, gegenseitig beeinflussen können. Die Homogenisierungsplatte erstreckt sich vorzugsweise über den gesamten Querschnitt des Zuführungsendes und wird bei Projektion der Verteilerplatte auf die Homogenisierungsplatte vollständig von dieser abgedeckt, wobei vorzugsweise die Umlenkungsplatte einen zusätzlichen Außenrand aufweist, der über die darauf projizierte Homogenisierungsplatte hinausgeht. Wie bereits bemerkt, deckt die Verteilerplatte die Homogenisierungsplatte nicht unmittelbar ab durch eine unmittelbare Berührung, sondern es besteht ein axialer Spalt zwischen Verteilerplatte und Homogenisierungsplatte, indem sich die Fluidströmung nach dem Umlenken über den gesamten Querschnitt des dort vorliegenden Innenvolumens der Zuführungshaube sammelt. Die Homogenisierungsplatte kann als perforiertes Blech umgesetzt werden mit einer Vielzahl von gleichen kreisrunden Öffnungen mit einem Durchmesser, der kleiner ist als 30 mm, 15 mm, 10 mm, oder 3 mm. Durchmesser kleiner als 3 mm - 1 mm lassen sich ebenso realisieren, vorzugsweise mittels Laser erzeugte Durchgänge. Insbesondere ist der Querschnitt der einzelnen Kanäle innerhalb der Homogenisierungsplatte vorzugsweise kleiner als der innere Querschnitt der Rohre des Rohrbündels und entspricht vorzugsweise weniger als 75 %, 60 %, 50 %, 40 %, 30 %, 20 %, 10 % oder 5 % des inneren Querschnitts der Rohre des Rohrbündels. Die Öffnungen der Homogenisierungsplatte, die die Kanäle ausbilden, sind vorzugsweise gleichmäßig voneinander beabstandet und haben eine Gesamtquerschnittsfläche, die mindestens 10 %, 25 %, 30 %, 40 %, 50 %, 60 % oder 75 % des Querschnitts des Rohrbündels (des Füllkreises des Rohrbündels) entspricht. Die Verteilerplatte kann als Prallplatte mit vorzugsweise kreisrunder Form vorgesehen sein, die konzentrisch zur Zuführungshaube angeordnet ist. Die Verteilerplatte weist vorzugsweise eine Längsachse auf, die der Längsachse des Rohrbündels entspricht, und die ebenso vorzugsweise der Längsachse der Homogenisierungsplatte entspricht. Die Homogenisierungsplatte selbst ist vorzugsweise mit ihrer Längsachse derart angeordnet, dass diese mit der Längsachse des Rohrbündels übereinstimmt. Die Verteilerplatte ist vorzugsweise als durchgehende kreisrunde Scheibe ausgebildet, mit einer Dicke von mindestens 3 mm und höchstens 200 mm, vorzugsweise mit einer Dicke von mindestens 10 mm und höchstens 100 mm und insbesondere bevorzugt mit einer Dicke von 20 mm bis 40 mm. Diese Dickenangaben beziehen sich auf eine Verteilerplatte mit einem Radius von ungefähr 700 mm, 800 mm, 900 mm, 1000 mm, 1200 mm, 1500 mm oder 1800 mm.

Gemäß einem weiteren Aspekt der Erfindung erstreckt sich die Verteilervorrichtung zwischen dem Zuführungsende des Rohrbündels und dem Zuführungsanschluss der Zuführungshaube. Die Verteilervorrichtung überdeckt das gesamte Zuführungsende gegenüber dem aus dem Zuführungsanschluss austretenden Fluidstrom, um das Zuführungsende gegenüber einer direkten axialen Fluidströmung vom Zuführungsanschluss durch Umlenken des Fluidstroms im Wesentlichen vollständig abzudecken. Wie bereits bemerkt, betrifft das Abdecken des Zuführungsendes durch die Verteilervorrichtung eine entlang der Reaktorlängsachse projizierte vollständige Überdeckung, vorzugsweise mit einem zusätzlichen Außenrand, wobei jedoch in Axialrichtung ein Spalt zwischen Verteilervorrichtung und Zuführungsende vorgesehen ist, so dass sich das umgelenkte Fluid dort über die gesamte Querschnittsfläche des Innenraums sammeln kann.

Dieser Aspekt der Erfindung wird ferner durch einen Verfahrensschritt umgesetzt, demgemäß der umgelenkte Fluidstrom, der in Form eines Hohlzylinders vorgesehen ist, einen inneren Querschnitt aufweist, der dem inneren Querschnitt des Hohlzylinders entspricht. Der innere Querschnitt des Hohlzylinders entspricht somit der den Eintrittslöchern zugewandten Oberfläche der Umlenkungsvorrichtung, die einen entlang der Längsachse führenden Fluidstrom blockt. In dem Hohlzylinder, der die Form des Fluidstroms darstellt, wird erfindungsgemäß innerhalb des inneren Querschnitts im Wesentlichen keine Strömung vorgesehen, wobei der innere Querschnitt des umgelenkten Fluidstroms im Wesentlichen den gesamten Querschnitt des Zuführungsendes gegenüber dem eingeleiteten Fluidstrom abdeckt. Wie bereits bemerkt, kann dieses Abdecken des Zuführungsendes durch den inneren Querschnitt auch mit einem zusätzlichen Rand vorgesehen werden, mit dem der innere Querschnitt des Hohlzylinders des Fluidstroms über den Außenrand des Zuführungsendes hinausgeht.

Gemäß einem weiteren Aspekt der Erfindung wird das Produktgemisch der Zuführungshaube über ein Eintrittsloch, welches an der Längsachse vorgesehen ist, oder über mehrere Eintrittslöcher zugeführt. Mehrere Eintrittslöcher werden über mehrere Zuführungskanäle versorgt, wobei die Eintrittslöcher in der Wand der Zuführungshaube vorgesehen sind und in das Innenvolumen der Zuführungshaube hineinführen. Bei Ausführungsformen mit mehreren Eintrittslöchern ist zumindest ein Eintrittsloch außerhalb der Mittenachse des Zuführungsendes angeordnet, wobei die Mittenachse der Längsachse eines zylindrischen Rohrbündels entspricht. Zudem können erfindungsgemäß alle Eintrittslöcher gleichmäßig um die Mittenachse herum, entlang eines Kreises oder innerhalb eines Rings angeordnet sein. Bei mehreren Eintrittslöchern tritt somit das Reaktionsgemisch nicht mit einer zentralen Fluidströmung in den Innenraum der Zuführungshaube ein, sondern bereits beim Eintritt in die Innenhaube ist der Zufluss des Reaktionsgemischs auf mehrere Eintrittsstellen verteilt, die voneinander getrennt angeordnet sind. Dadurch ergibt sich bereits beim Eintritt des Reaktionsgemischs eine gewisse Verteilung, welche dann von der Umlenkungsvorrichtung weiter homogenisiert wird. Sind einige oder alle Eintrittslöcher entlang eines Kreises angeordnet, so entspricht der Mittelpunkt des Kreises vorzugsweise der Mitte des dem Rohrbündel abgewandten Endes der Haube und entspricht vorzugsweise dem Schnittpunkt zwischen Haube und Längsachse des Rohrbündels. Dies gilt ebenso für die Anordnung der Eintrittslöcher innerhalb eines Rings, wobei die Breite des Rings vorzugsweise maximal 50 %, maximal 30 %, maximal 15%, maximal 10 %, maximal 5 % oder maximal 2 % des Außendurchmessers des Rings entspricht. Dadurch wird die Kreisform im Wesentlichen gewahrt, wobei jedoch beispielsweise fertigungsbedingte Abweichungen vom Kreis ermöglicht werden.

Der oben genannte Aspekt, demgemäß der Rohrbündelreaktor mit mehreren Zuführungskanälen ausgestaltet wird, kann als Verfahrensschritt realisiert werden. Gemäß der auf ein Verfahren bezogenen Umsetzung der Erfindung umfasst das erfindungsgemäße Verfahren das Zuführen eines Eduktgemischs, wobei das Zuführen umfasst: Aufteilen eines Zuführungsstroms des Eduktgemischs in mehrere Zuführungsströme, die jeweils durch einen von mehreren Kanälen geführt werden, bevor die Zuführungsströme in den Innenraum an zueinander beabstandeten Eintrittsstellen (d.h. den Orten der Eintrittslöcher) in den Innenraum eintreten. Hierbei liegen mindestens eine oder alle Eintrittsstellen außerhalb der Mittenachse des Zuführungsendes des Rohrbündels. Alternativ sind alle Eintrittsstellen gleichmäßig um die Mittenachse des Zuführungsendes des Rohrbündels herum entlang eines Kreises oder innerhalb eines Rings angeordnet. Die Merkmale der Mittenachse, des Kreises und des Ringes entsprechen den Merkmalen der Mittenachse, des Kreises und des Ringes, die im vorhergehenden Absatz bereits genannt sind. Wie bereits bemerkt, wird durch die Aufteilung vor der Zuführung in den Innenraum eine Vorabverteilung ermöglicht, bevor die Fluidströme umgelenkt werden.

Durch geeignete Anordnung der Eintrittsstellen bzw. der Eintrittslöcher kann verhindert werden, dass trotz der Umlenkung inhomogene Strömungsverteilungen auftreten, bei denen bestimmte Eintrittslöcher bzw. Eintrittsstellen einige Rohre des Rohrbündels bevorzugt mit Reaktionsgemisch versorgen, wohingegen andere Rohre eine geringere Zuführung erfahren. Erfindungsgemäß werden daher die Eintrittslöcher zu den Längsachsen der Rohre des Rohrbündelreaktors versetzt (d.h. zu den Längsachsen aller Rohre des Rohrbündelreaktors), wobei die Mitte jedes Eintrittslochs einen maximalen Abstand zu den nächstliegenden Längsachsen der Rohre aufweist. Dadurch ergibt sich keine bevorzugende Strömung zwischen Eintrittsloch und bestimmten Rohren des Rohrbündels. Dieses Merkmal, welches den Rohrbündelreaktor betrifft, kann dann ebenso umgesetzt werden mittels eines Verfahrensschritts, der vorsieht, dass beim Aufteilen des Zuführungsstroms an verschiedene Eintrittsstellen die Eintrittsstellen zu Längsachsen von Rohren des Rohrbündelreaktors versetzt sind und die Mitte jeder Eintrittsstelle den maximalen Abstand zu den nächstliegenden Längsachsen der Rohre aufweist. Hierdurch wird der Schritt des Zuführens von Reaktionsgemisch durch die räumliche Anordnung der Eintrittsströme (die durch die Eintrittsstellen definiert sind) zu den Rohren näher definiert.

Gemäß einem weiteren Aspekt der Erfindung werden die Zuführungskanäle von sich aufteilenden Rohren vorgesehen, die jeweils eine Y-Aufteilung umfassen, die an zwei der Eintrittslöcher angeschlossen ist, bzw. zwei der Eintrittsstellen mit Reaktionsgemisch versorgt, oder die an eine weitere Y-Aufteilung angeschlossen ist. Eine Y-Aufteilung ist eine Aufspaltung eines Kanals (der von einem Rohr vorgesehen wird) in zwei vorzugsweise gleich große Kanäle, die von zwei Rohren vorgesehen werden, welche jeweils mit dem ersten Rohr gleichermaßen verbunden sind. Aufgrund des Verlaufs der Kanäle bzw. der Rohre wird eine derartige Aufteilung als Y-Aufteilung bezeichnet. Um eine Zuführungsleitung, die entlang der Längsachse des Rohrbündelreaktors verläuft, in zwei, vier oder acht Kanäle mit jeweils einem Eintrittsloch aufzuteilen, werden die Verläufe der geteilten Rohre bzw. Leitungen gemäß der Anordnung der Eintrittslöcher gebogen. Die dadurch erfolgte Krümmung der Leitungen der Y-Aufteilungen sollte derart vorgesehen sein, dass der Krümmungsradius im Verhältnis zum Rohrdurchmesser der Leitungen ≥ 2 beträgt. Die Aufteilung kann einstufig sein, beispielsweise von einer Leitung auf zwei Leitungen, die zu den Endlöchern führen, oder kann zweistufig oder mehrstufig sein, wobei eine erste Aufteilungsstufe die Zuführungsleitung in zunächst zwei Leitungen zerteilt, die wiederum in einer weiteren Stufe jeweils erneut in zwei Leitungen aufgeteilt werden. Die Anzahl der Leitungen in der letzten Stufe, d.h. in der Stufe, die an die Eintrittslöcher angeschlossen sind, umfasst dann eine Anzahl von Leitungen gemäß 2", wobei n die Anzahl der Stufen ist und 2 dafür steht, dass bei jeder Aufteilung aus einer Leitung zwei Leitungen gespeist werden. Die Anzahl der Leitungen der letzten Stufe entspricht dann der Anzahl der Eintrittslöcher, da pro Leitung in der letzten Stufe genau ein Eintrittsloch vorgesehen ist, das von diesem versorgt wird.

Dieser Aspekt der Zuführungskanäle, der sich auf den Rohrbündelreaktor bezieht, kann gleichermaßen durch auf ein erfindungsgemäßes Verfahren bezogene Verfahrensschritte realisiert werden, wobei erfindungsgemäß das Aufteilen in mehrere Zuführungsströme realisiert wird durch Führen des Reaktionsgemischs bzw. des durch eine Zuführungsleitung geführten Reaktionsgemisches durch sich aufteilende Rohre bzw. Leitungen. Das Führen des Eduktgemischs umfasst das Leiten des Eduktgemischs durch eine Y-Aufteilung, die zwei Eintrittsstellen (die an den Eintrittslöchern liegen) mit Eduktgemisch (d.h. zugeführtem Reaktionsgemisch) versorgt, oder die eine weitere Y-Aufteilung mit Eduktgemisch versorgt. Versorgt eine Y-Aufteilung zwei Eintrittsstellen mit Eduktgemisch, sind die von der Aufteilung zur Eintrittsstelle führenden Leitungen Leitungen der letzten Stufe. Wenn hingegen die Leitungen der Y-Aufteilung eine weitere Y-Aufteilung versorgt, so gehört die erstgenannte Y-Aufteilung zu einer ersten Stufe oder zu einer Stufe, die der letzten Stufe vorgeordnet ist.

Erfindungsgemäß wird nicht nur die Zuführungshaube mit einer flachen Bauform ausgestaltet, sondern auch die Abgabehaube, in die das Rohrbündel Reaktionsgemisch leitet, und über die das Reaktionsgemisch aus dem Rohrbündelreaktor ausgeführt wird. Grundsätzlich können Zuführungshaube und Abgabehaube oder nur eine dieser Hauben gemäß der erfindungsgemäßen flachen Bauform ausgebildet sein. Die hier verwendeten Definitionen der flachen Bauform, die für die Zuführungshaube definiert sind, betreffen ebenso die Abgabehaube, und die für die Abgabehaube dargelegten Definitionen betreffen ebenso die Zuführungshaube. Ob Zuführungshaube, Abgabehaube, oder beide Hauben eine erfindungsgemäß flache Bauform haben, hängt insbesondere von der Reaktion und dem Reaktionsgemisch ab. Bevorzugt wird jedoch die Zuführungshaube gemäß der erfindungsgemäßen flachen Bauform ausgebildet. Als flache Bauform ist nicht nur der Verlauf der Haubendecke zu verstehen, sondern betrifft gemäß der hierin verwendeten Definitionen insbesondere die Bauform der gesamten Haube bzw. das Haubenvolumen bezogen auf Rohrbündelvolumen oder Rohrbündelquerschnitt. Für die Bauform der Abgabehaube und die zugehörigen Komponenten, die sich darin befinden oder die daran angeschlossen sind, gelten somit die gleichen Merkmale und Charakteristika, wie sie für die Zuführungshaube beschrieben sind, wobei die Abgabehaube zur Zuführungshaube spiegelbildlich angeordnet ist. Während die Zuführungshaube am Zuführungsende des Rohrbündels angeschlossen ist, ist die Abgabehaube am Abgabeende des Rohrbündels angeschlossen, das dem Zuführungsende entgegengesetzt ist. Zuführungsende und Abgabeende sind die beiden Endebenen, zwischen denen sich der Rohrbündelreaktor längs erstreckt. Somit ist auch die Abgabehaube in einer flachen Bauform mit einer Querschnittsfläche am Abgabeende und einem Innenvolumen ausgestaltet, wobei das Verhältnis von Innenvolumen zu Querschnittsfläche der Abgabehaube ≤ 0,35 m beträgt oder die Abgabehaube in einer flachen Bauform mit einem Maximalabstand zwischen Abgabehaube und Abgabeende ausgestaltet ist, und das Verhältnis von Maximalabstand zwischen Abgabehaube und Abgabeende zur Querschnittsfläche am Abgabeende ≤ 0,1 1/m beträgt. Die Abgabehaube kann gemäß den Vorgaben für die Zuführungshaube ausgestaltet sein, wobei dies insbesondere gilt für die oben genannten geometrischen Eigenschaften und Verhältnisse, die zur Definition der Zuführungshaube verwendet wurden. Insbesondere kann die Abgabehaube wie die Zuführungshaube ausgestaltet sein, wobei der Querschnittszuwachs bezogen auf die Querschnittsfläche des Abgabeendes, das Verhältnis von Innenvolumen zu Querschnittsfläche der Abgabehaube und das Verhältnis von Maximalabstand zu Querschnittsfläche am Abgabeende den Definitionen der Bauform entspricht, die bereits für die Zuführungshaube dargelegt wurden. Aufgrund der Symmetrie zum Rohrbündelreaktor sind somit auch die Anordnungsverhältnisse definiert, wobei zur Definition der Abgabehaube das Abgabeende an das Zuführungsende des Rohrbündels tritt, das Innenvolumen der Abgabehaube an die Stelle des Innenvolumens der Zuführungshaube tritt, und der Maximalabstand zwischen Abgabehaube und Abgabeende an die Stelle der Zuführungshaube und dem Zuführungsende tritt. Ebenso wird die Querschnittsfläche erfasst am Abgabeende bzw. an dem Ende der Abgabehaube, das dem Rohrbündel zugewandt ist.

Die so anhand der Abgabehaube des Rohrbündelreaktors definierten Merkmale setzen ebenso die Erfindung um, wie die folgenden Verfahrensschritte, die das Abgeben des Produkts aus dem Rohrbündel betreffen. Demnach umfasst das erfindungsgemäße Verfahren einen Schritt des Abgebens des Produkts aus dem Rohrbündel, wobei das Produkt an einem Abgabeende des Rohrbündels, das dem Zuführungsende entgegengesetzt ist, aus dem Rohrbündel in Form eines Fluidstroms in einen Innenraum einer Abgabehaube des Rohrbündelreaktors geleitet wird. Hierbei weist der Fluidstrom beim Austritt aus dem Abgabeende eine Querschnittsfläche und der Innenraum der Abgabehaube, durch die der Fluidstrom fließt, ein Innenvolumen auf, wobei das Verhältnis von Innenvolumen der Abgabehaube zur Querschnittsfläche des Fluidstroms am Abgabeende ≤ 0,35 m beträgt. Alternativ oder in Kombination hierzu weist der Fluidstrom am Abgabeende eine Querschnittsfläche auf, und einen Maximalabstand zwischen dem Fluidstrom, der von dem Abgabeende abgegeben wird, und dem Zuführungsende vorgesehen ist, wobei das Verhältnis von Maximalabstand zu Querschnittsfläche ≤ 0,1 1/m beträgt. Wie bereits bemerkt, sind zur Ausgestaltung des Fluidstroms bzw. der diesen definierenden Abgabehaube die Beschreibungen und Definitionen der Zuführungshaube zu verwenden.

Wie auch die Zuführungshaube ist auch die Abgabehaube vorzugsweise rotationssymmetrisch zu einer Längsachse ausgestaltet, die der Längsachse des Rohrbündels entspricht. Die Zuführungshaube, die Abgabehaube oder beide sind entweder einteilig ausgeführt oder sind zwei oder mehrteilig ausgeführt, wobei jede Komponente eine rotationssymmetrische Form hat. Auch die gegebenenfalls in den Hauben vorliegenden Einbauten, d.h. die Umlenkungsvorrichtung, die Verteilerplatte und die Homogenisierungsplatte sind vorzugsweise rotationssymmetrisch zur Längsachse des Reaktors ausgebildet.

Die Zuführungshaube kann hinsichtlich Wärmeabstrahlung nach außen unisoliert sein, um somit einen Kühleffekt von außen zu ermöglichen. Jedoch ist bevorzugt, dass die Zuführungshaube wärmeisoliert ist und/oder dass die Zuführungshaube wärmeübertragend mit einem Heiz- oder Kühlsystem verbunden ist, um die Temperatur innerhalb der Haube zu steuern oder zu regeln. Der Temperierungseffekt (Kühlen oder Heizen) von außen durch die Haube hindurch wirkt sich aufgrund der geringen Menge an Reaktionsgemisch in der Zuführungshaube stark auf die Temperatur des Gemischs aus. Damit ist die Temperatur des Reaktionsgemischs innerhalb der Zuführungshaube einfacher zu kontrollieren. Das Gleiche gilt auch für eine erfindungsgemäß ausgestaltete Abgabehaube, bei der das Abgabemedium beispielsweise auf eine unkritische Temperatur abgekühlt werden kann, sobald es aus dem Rohrbündel austritt, um Folgereaktionen zu vermeiden. Neben einer freien Wärmeabstrahlung, die durch den Verzicht auf Wärmeisolation vorgesehen wird, können auch Kühlschlangen an der Außenseite der Zuführungshaube bzw. der Abgabehaube angeordnet sein. Dadurch wird ein unkontrollierter Temperaturanstieg in der jeweiligen Reaktorhaube vermieden. Allgemein kann die Wärme der Haube über die Außenseite der Haube in ein Kühlungsmedium übertragen und abgeführt werden. Neben dem Wärmetransfer durch die Haubenwand hindurch wird auch Wärme von oder zu dem Reaktionsgemisch innerhalb der Hauben durch den Reaktorboden übertragen. Insbesondere der Reaktorboden an der Zuführungshaube führt einen wesentlichen Teil der Reaktionswärme ab, die in der Zuführungshaube entsteht. Jede Komponente, die zur Wärmeabfuhr dient, kann prinzipiell auch zur Wärmezufuhr verwendet werden, indem das Vorzeichen der Temperaturdifferenz zwischen Wärmemedium und Reaktionsgemisch durch geeignet Wahl der Temperatur des Mediums umgekehrt wird. Insbesondere beim Anfahren des Reaktors kann auch Wärme dem Reaktionsgemisch zugeführt werden.

Wenn das Produktgemisch nach Durchgang durch das Rohrbündel weitgehend abreagiert ist und die Reaktionsbedingungen in der Abgabehaube nur in geringem Maße temperaturkritisch sind, kann die Abgabehaube konventionell konstruiert werden, d.h. mit einer gewölbten Haube, wie sie aus dem Stand der Technik bekannt ist. Jedoch werden insbesondere bei Reaktionen, die nur bis zu einem Teilumsatz im Rohrbündel ausgeführt werden, bzw. bei thermisch empfindlichen Produkten oder Produktgemischen beide Hauben, d.h. die Zuführungshaube und die Abgabehaube gemäß der flachen Bauform ausgestaltet. Beide Hauben können gleich ausgestaltet sein, oder können unterschiedlich ausgestaltet sein, wobei beide Hauben den oben beschriebenen Vorgaben vorzugsweise entsprechen.

Vorzugsweise sind die Zuführungshaube und die Abgabehaube oder nur eine hiervon abnehmbar, um einen ungehinderten Zugang zum Inneren der Reaktionsrohre bzw. zu dem Zuführungsende bzw. Abgabeende des Rohrbündels zu ermöglichen. Hierzu wird die Reaktorhaube mit Elementen versehen, über die mittels einer Schraubverbindung die Haube an der Reaktionswand abdichtend angebracht werden kann, beispielsweise in Form eines Flanschs. Als Rohrbündel werden mindestens zwei und bis zu 50.000 parallel geschaltete Reaktionsrohre angesehen, deren Ende vorzugsweise jeweils in einer von zwei Ebenen vorgesehen ist. Das Rohrbündel kann aus gleichartigen Rohren bestehen (beispielsweise gleiche Wandstärke bzw. gleicher Innenquerschnitt) oder aus verschiedenartigen Rohren bestehen, beispielsweise mit im Rohrbündel außen liegenden Rohren, die größer (d.h. größere Wandstärke, größerer Innenquerschnitt oder größere Wandstärke bei gleichem oder geringerem Innenquerschnitt) als innen liegende Rohre sind. Als Rohrbündel werden insbesondere Reaktionsrohre betrachtet, deren Anzahl mindestens 2 beträgt, mindestens 5 oder vorzugsweise zwischen 1000 und 3000 liegt, vorzugsweise zwischen 1500 und 2500, vorzugsweise bei 2400 oder 1600. Grundsätzlich können auch, abhängig vom Rohbündeldurchmesser, dem Durchmesser der einzelnen Rohre und dem Rohrspiegel auch mehr Rohre das Rohrbündel bilden, beispielsweise mehr als 5000, mehr als 10000, mehr als 20000 oder mehr als 30000. Als Rohraußendurchmesser dieser Rohre sind Durchmesser von 20-100 mm, vorzugsweise zwischen 30 und 80 mm und insbesondere zwischen 40 und 55 mm bevorzugt. Die Rohrteilung, die den Mittenabstand zwischen zwei benachbarten Rohren definiert, beträgt vorzugsweise zwischen 30 und 100 mm, und insbesondere zwischen 50 und 70 mm. Die Stirnseiten, die durch diese Ebenen definiert werden, werden als Abgabeende bzw. als Zuführungsende des Rohrbündels bezeichnet. Das Abgabeende wird vorzugsweise über dem Zuführungsende angeordnet, wobei der Rohrbündelreaktor vorzugsweise senkrecht steht (d.h. gemäß dem Verlauf der Schwerkraft) und das Abgabeende senkrecht über dem Zuführungsende angeordnet ist.

Der Rohrbündelreaktor ist vorzugsweise von der "shell-and-tube" Bauart, wobei der Rohrbündelreaktor eine Reaktorwand umfasst, die das Rohrbündel umgreift, und die eine zylindrische Form aufweist, an deren Stirnseiten die Abgabehaube und die Zuführungshaube angeordnet sind. Somit dichten die Abgabehaube, die Zuführungshaube und die zylindrische Reaktorwand einen Innenraum vollständig ab, in dem sich das Rohrbündel befindet.

Die Reaktorwand weist vorzugsweise Zugänge auf für Kühlmedium, insbesondere für Wasser, oder einem anderen Temperiermittel mit ausreichender Wärmekapazität wie Wärmeträgeröle oder flüssige Salzmischungen. Femer kann die Kühlung durch Verdampfen einer Flüssigkeit, insbesondere von Wasser vorgesehen sein, wobei hierzu an dem Reaktormantel vorzugsweise ein Vorratsbehälter für Wasser angeschlossen ist, beispielsweise eine Dampftrommel. Das Temperiermittel durchströmt den Raum, der den Reaktormantel umgreift, vom Abgabeende zum Zuführungsende oder umgekehrt, und führt somit Reaktionswärme des Rohrbündels mit sich. Um den Umlauf des Temperiermittels zu unterstützen, kann eine Pumpe vorgesehen sein, oder es kann ein Naturumlauf durch Konvention vorgesehen sein, mit dem sich das Wärmemittel umwälzt. Ferner ist vorzugsweise eine Wärmesenke vorgesehen, an die das Temperiermittel aufgenommene Wärme abgeben kann. In ähnlicher Weise können auch Wärmequellen vorgesehen sein, falls diese zum Ausgleich der Wärmeenergiebilanz notwendig sind. Diese Wärmequellen sind vorzugsweise an den Reaktor derart angeschlossen, dass diese das Temperiermittel erwärmen. Die Umwälzrate des Temperiermittels und insbesondere der äußere Wärmeübergangskoeffizient (beispielsweise ca. 1000 W/m²/K) wird vorzugsweise derart gewählt, dass zwischen Temperiermitteleingang und Temperiermittelausgang ein Unterschied von maximal 10 K vorgesehen ist.

Durch die geringen Gemischmengen außerhalb des gekühlten Rohrbündels, die sich mit der flachen Bauweise der Hauben ergeben, wird im Wesentlichen ein isothermer Zustand innerhalb des gesamten Reaktors vorgesehen, so dass sich eine gleich bleibende Zusammensetzung des Austrags aus dem Reaktor ergibt. Aufgrund der im Wesentlichen gleich bleibenden Zusammensetzung des Austrags aus dem Reaktor lassen sich sehr feine Regeleinstellungen an den nachfolgenden Aufbereitungsvorrichtungen, beispielsweise Aufbereitungskolonnen, treffen. Dies ist ein Resultat aus den im gesamten Reaktor präzise gesteuerten Betriebsparametern wie Temperatur und Druck. Hierbei lässt sich der Energieeinsatz in zur Aufbereitung eingesetzten Destillationsanlagen minimieren, wobei femer der Produktverlust beim Ausschleusen unerwünschter Nebenkomponenten aus einzelnen Verfahrensstufen ebenso minimiert ist. Durch die gute Regelbarkeit und die durch die flache Bauform der Hauben erreichte schnelle Reaktionszeit bei der Steuerung der Temperatur lässt sich erreichen, dass die maximale Temperatur innerhalb der Rohre des Rohrbündels maximal 15 K und vorzugsweise maximal 6 K über der mittleren Temperatur des Kühlmediums liegt. Ferner können Thermoelemente an den Rohren platziert werden, vorzugsweise an einem axialen Ort, wobei die Thermoelemente in einem Thermoschutzrohr vorgesehen sein können, das einen Außendurchmesser von maximal einem Drittel des Innendurchmessers des Reaktionsrohrs hat. Vorzugsweise wird die maximale Temperatur innerhalb des Rohres mit diesen axial innerhalb des Rohres platzierten Thermoelementen bestimmt, die gegebenenfalls in einem Thermoschutzrohr untergebracht sind, die aufgrund des geringen Außendurchmessers des Thermoschutzrohrs den Fluss innerhalb des Reaktionsrohrs nur unwesentlich behindern.

In einer weiteren Ausführungsform können einige der Rohre oder alle Rohre des Rohrbündels leer sein, so dass der Innenraum des Rohrs vollständig mit Reaktionsgemisch ausgefüllt ist. Alternativ können geeignete Füllkörper oder Packungen innerhalb der Reaktionsrohre vorgesehen werden, vorzugsweise Füllkörper, um den Wärmetransport in den Rohren zu verbessern. Insbesondere ist es vorteilhaft, Füllkörper mit einem Leervolumenanteil von mindestens 75 % in den Rohren vorzusehen, um den Reaktionsraum nicht unnötig zu verringern, beispielsweise wenn dünnwandige Raschig-Ringe verwendet werden. Zum einen erlauben die Füllkörper einen verbesserten Wärmetransport und zum anderen wird durch den Volumenanteil der Füllkörper die Volumenkonzentration der Reaktionswärme verringert. Hierdurch lässt sich die Temperatur auch bei stark exothermen Reaktionen besser steuern. Als Füllkörper werden vorzugsweise Raschig-Ringe verwendet, oder andere Füllkörper, die die Strömung innerhalb der Rohre wie gewünscht definieren und die ggf. zu einer zusätzlichen Druckdifferenz zwischen Eingang und Ausgang jedes Rohrs führen. Die Füllkörper sind derart ausgestaltet, dass sie eine ausreichende Quervermischung erzeugen, wodurch der Wärmeübergang erhöht wird. Die Füllkörper sind vorzugsweise derart ausgestaltet, dass sie nur ein geringfügiges (bezogen auf das Rohrinnenvolumen) Volumen einnehmen. Mit den Füllkörpern lässt sich die Strömung effektiv beeinflussen. Vorzugsweise wird durch die Füllkörper statt einer laminaren Strömung eine Plug-flow-Strömung erreicht. Der Druckverlust über das Rohrbündel wird hauptsächlich von der Füllkörperschüttung verursacht. Ferner werden durch die Füllkörper Oberflächen innerhalb der Rohre vorgesehen, an denen Reaktionsgemisch unmittelbar vorbei streicht, Wärme des Reaktionsgemischs an die Oberfläche übertragen wird und die von der Oberfläche aufgenommene Wärme über die Rohrwände nach außen in das Kühlmedium übertragen wird, das an den Außenseiten der Rohre vorbei geführt wird.

Erfindungsgemäß wird bei einem Ausfall der Energieversorgung das Temperiermittel aus dem Vorratsbehälter aufgrund des hydraulischen Drucks in den Mantelraum des Reaktors fließen. Da der Vorratsbehälter erfindungsgemäß so angeordnet ist, dass der Flüssigkeitsspiegel des Temperiermittels im Vorratsbehälter mindestens im Wesentlichen auf gleicher Höhe ist wie der Flüssigkeitsspiegel im Außenraum des Reaktors, strömt Temperiermittel von unten in den Reaktor, verdampft entlang der Rohre aufgrund der aufgenommenen Wärme und der Wasserdampf im Reaktor steigt auf. Der entstehende Wasserdampf wird aus dem Reaktor entnommen, um den Druck im Wesentlichen konstant zu halten oder, um die Temperatur weiter abzusenken. Durch das verdampfende Wasser sinkt der Flüssigkeitsspiegel im Reaktor, so dass aus dem Vorratsbehälter neues Temperiermittel nachgeführt wird. Um sicherzustellen, dass auch bei vollständig geflutetem Außenraum des Reaktors ausreichend Temperiermittel nachströmt, ist es auch möglich, den Vorratsbehälter so anzuordnen, dass der Flüssigkeitsspiegel im Vorratsbehälter immer oberhalb des Flüssigkeitsspiegels im Reaktor liegt.

Bevorzugt wird bei einem Ausfall der Energieversorgung der Druck im Mantelraum des Reaktors gezielt abgesenkt. Durch den abgesenkten Druck im Mantelraum sinkt auch die Siedetemperatur des Temperiermittels. Auf diese Weise kann die Temperatur in den Rohren abgesenkt werden. Im idealen Fall ist so gegebenenfalls sogar eine Absenkung auf eine Temperatur möglich, bei der die Reaktion beendet wird.

Wie bereits oben erwähnt wird die im Reaktor freigesetzte Reaktionswärme durch das Temperiermedium abgeführt. Der Produktstrom der den Reaktor verlässt, hat eine Temperatur, die im Wesentlichen der Reaktionstemperatur entspricht. Prinzipiell kann der Strom, evtl. nach Entspannung, direkt in die Aufarbeitung geleitet werden. Allerdings kann es vorteilhaft sein, die latente Wärme des Produktstroms zu verwenden, um einen oder mehrere der Eduktströme aufzuheizen. Dies geschieht in der Regel in einem separaten Wärmetauscher. Wenn allerdings entweder der Produktstrom oder der aufzuheizende Eduktstrom temperaturempfindlich sind, ist es vorteilhaft, einen Rohrbündelwärmetauscher zu verwenden, deren Hauben die gleiche Bauform aufweisen wie die Hauben des erfindungsgemäßen Rohrbündelreaktors. Gemäß einer Ausführungsform wird der heiße Produktstrom aus dem Reaktor verwendet, um in einem Wärmetauscher eine oder mehrere der Eduktströme vorzuheizen, die dem Reaktor zugeführt werden.

In einer besonders bevorzugten Ausführungsform wird hierfür kein separater Wärmetauscher verwendet, sondern der Wärmetauscher wird direkt an der Ausgangsseite des Reaktors angebracht.

Zur Darstellung des Rohrbündels werden vorzugsweise Rohre verwendet, die einen Innendurchmesser von mindestens 30 mm und höchstens 150 mm haben. Besonders bevorzugt werden Rohre mit einem Innendurchmesser im Bereich von 40 bis 50 mm, beispielsweise von ca. 41,1 mm verwendet, beispielsweise mit einer Wandstärke von 2 - 5 mm, vorzugsweise ca. 3,6 mm. Um einen ausreichend guten Wärmeübergang zwischen dem Rohrinneren und dem Temperiermedium im Mantelraum zu erhalten, bei einer gleichzeitig ausreichenden Festigkeit der Rohre werden vorzugsweise Rohre mit einer Wandstärke von 5 - 15 mm eingesetzt, insbesondere mit einer Wandstärke von 7-11 mm und beispielsweise einer Wandstärke von 8,5 - 9 mm. In einer Ausführung der Erfindung, die besonders für höhere Arbeitsdruckbereiche geeignet ist, haben nicht alle Reaktionsrohre die gleiche Wandstärke. Insbesondere werden Reaktionsrohre, die näher an der Außenseite des Rohrbündels sind, mit einer größeren Wandstärke ausgestaltet als Rohre, die näher an der Längsachse des Rohrbündels sind. Dadurch wird eine höhere Druckfestigkeit erreicht, ohne dass die Rohrböden bzw. die Reaktoraußenhülle durch besonders dickes Blech vorgesehen werden muss, um den Belastungen standzuhalten.

Innerhalb der Reaktorhülle ist vorzugsweise ein Apparatgerüst vorgesehen, welches die Rohre und somit das Rohrbündel hält. Hierbei ist das Apparatgerüst vorzugsweise frei hängend im Reaktor aufgenommen, so dass die Abgabehaube und die Zuführungshaube, mit denen der Reaktor verschlossen ist, frei zugänglich sind.

Der Innenraum der Zuführungshaube, d.h. das Volumen, welches sich zwischen der Innenfläche der Zuführungshaube und dem Zuführungsende des Rohrbündels erstreckt, hat vorzugsweise eine Höhe zwischen 2 und 300 mm, vorzugsweise zwischen 5 und 200 mm oder zwischen 10 und 50 mm. In diesem Innenraum ist vorzugsweise eine Prallplatte angebracht, so dass der Raum zwischen Haube und Rohrboden, d.h. zwischen Haube und Zuführungsende, von der Form her einem Spalt entspricht. Als Spalt werden in diesem Zusammenhang Volumina bezeichnet, deren Höhe deutlich geringer als ihr (Durchschnitts-)Durchmesser ist. Der Innenraum zwischen Zuführungsende und Haubenboden, d.h. der Raum, der von der inneren Seitenfläche der Haube, der Innenseite der Haubendecke und dem Zuführungsende des Rohrbündels eingeschlossen ist, , wird somit in zwei Spalte aufgeteilt, die nur über einen äußeren Ringspalt miteinander verbunden sind. Dadurch ergibt sich für den an der Prallplatte vorbeigeführten Strom in Höhe der Prallplatte eine hohlzylindrische Form. Der Ringspalt, der die beiden geteilten Innenräume verbindet, hat vorzugsweise ähnliche Außenmaße wie der gesamte Innenraum zwischen Zuführungsende des Rohrbündels und Decke der Zuführungshaube. Bevorzugt entspricht die Breite des Ringspalts, d.h. der Abstand zwischen Umfang der Prallplatte und der gegenüberliegenden Innenfläche ungefähr der Höhe des Innenraums, d.h. dem (Maximal-)Abstand zwischen Zuführungsende des Rohrbündels und gegenüberliegender Innenfläche der Zuführungshaube. Die Breite des Ringspalts entspricht vorzugsweise dem 0,05 - 5-fachen des Abstands zwischen Haubeninnenfläche und Zuführungsende, und besonders bevorzugt dem 0,08 - 0,8-fachen des Abstands zwischen Haubeninnenfläche und gegenüberliegendem Zuführungsende des Rohrbündels. Der Innenraum ist somit vorzugsweise ungefähr so hoch, wie es durch den Abstand zwischen Prallplattenaußenrand und Haubeninnenseite definiert ist. Die hier angeführte Definition mittels einer Prallplatte ist lediglich beispielhaft, im Allgemeinen sieht die Prallplatte eine Umlenkungsvorrichtung vor, die aufgrund der Spaltbildung und der Zweiteilung des Innenraums innerhalb der Zuführungshaube den Fluidstrom von der Einspeisung an der Haube bis zum Eintritt in das Zuführungsende des Rohrbündels definiert. Wie bereits bemerkt, dient die Umlenkungsvorrichtung und, in dem beispielhaften Fall die Prallplatte, einer Homogenisierung des dem Rohrbündel zugeführten Fluidstroms und dient insbesondere dazu, den in die Haube eingespeisten Strom nicht direkt in das Zuführungsende einzuspeisen, wodurch sich Inhomogenitäten hinsichtlich Zuführungsgeschwindigkeit und Druck innerhalb des Querschnitts des Rohrbündels ergeben, sondern um das unmittelbar einströmende Reaktionsgemisch zunächst in eine sich stark aufweitende Strömung umzuwandeln, so dass die aufgeweitete Strömung eine homogenere Zuführungsverteilung an dem Zuführungsende ergibt. Zwischen Umlenkungsvorrichtung (Prallplatte) und Zuführungsende ist eine Lochplatte angeordnet, d.h. ein perforiertes Blech, mit dem sich die Strömung noch weitergehend homogenisieren lässt, nachdem diese die Umlenkungsvorrichtung umströmt hat.

Grundsätzlich können im Innenraum der Zuführungshaube Einbauten vorgesehen werden, die die in die Zuführungshaube eingeführten Edukte gleichmäßig auf die Rohre des Rohrbündels verteilt. Neben einer Lochplatte oder Siebböden, die als Homogenisierungsplatte eingesetzt werden, können auch poröse Sinterplatten verwendet werden, durch die das Reaktionsgemisch geführt wird, und die ebenso die Homogenisierungsplatte vorsehen. Vorzugsweise ist die Homogenisierungsplatte derart ausgestaltet, dass diese nicht nur einen definierten, im Querschnitt homogenen Druckverlust erzeugen, indem Strömungswiderstand für die Fluidströmung vorgesehen wird, sondern dass diese darüber hinaus auch als Stütze für Schüttungsmaterial, welches innerhalb der Rohre vorgesehen ist, dienen kann. Daher werden die Lochplatten mit Verstärkungen, mit ausreichenden Materialdicken und/oder mit Stützen vorgesehen, die dazu dienen, dass das Schüttungsmaterial innerhalb der Rohre getragen werden kann. In einer besonderen Ausführungsform ist die Lochplatte derart ausgestaltet und zum Rohrbündel ausgerichtet, dass die Lochplatte genau ein Loch für jedes Rohr des Rohrbündels vorsieht, wodurch ein zusätzlicher Raum zwischen Homogenisierungsplatte und Zuführungsende des Rohrbündels eingespart werden kann. In diesem Fall ist die Homogenisierungsplatte in Form des Lochblechs direkt an dem Zuführungsende des Rohrbündels angeordnet und weist durch die entsprechend angeordneten und zu dem Rohrbündel ausgerichteten Löcher Kanäle auf, die die Rohre des Rohrbündels alle auf die gleiche Weise mit zugeführtem Reaktionsgemisch versorgt. Die Lochplatten weisen somit genauso viele Löcher auf, wie Rohre in dem Rohrbündel vorgesehen sind, wobei die einzelnen Löcher der Lochplatte genau zu der Öffnung des jeweiligen Rohrs ausgerichtet sind. Mit anderen Worten weist jedes Loch der Lochplatte eine Längsachse auf, die der Längsachse genau eines Rohrs entspricht. Gegebenenfalls können die Löcher der Lochplatten zu den Rohren leicht versetzt sein, soweit gewährleistet ist, dass der gesamte Querschnitt des Lochs der Lochplatte innerhalb des Querschnitts des daran angeschlossenen Rohrs liegt. Der Lochdurchmesser der Lochplatte ist somit vorzugsweise etwas kleiner als der Innendurchmesser der Rohre, und beträgt vorzugsweise weniger als 90 %, 80 %, 70 %, 60 %, 50 % oder 30 % der Innendurchmesser der Rohre. In einer besonderen Ausführungsform werden ferner Leitbleche eingesetzt, die zwischen Lochplatte und Rohr vorgesehen sind, und durch die ein auftreffender Fluidstrahl in einzelne Ströme bzw. Fluidstrahlen geteilt wird. Insbesondere können auch Ringverteiler eingesetzt werden, um den Fluidstrom von der Homogenisierungsplatte zum Zuführungsende des Rohrbündels zu führen.

In einer weiteren Ausführungsform des Rohrbündelreaktors wird dieser mit einem Wärmetauscher verbunden, der unmittelbar an der Abgabehaube angeschlossen ist. In gleicher Weise wird vorzugsweise das erfindungsgemäße Verfahren mit einem zusätzlichen Verfahrensschritt vorgesehen, demgemäß das von der Abgabehaube ausgeführte Produkt oder Produktgemisch einem Wärmetauscher zugeführt wird, wobei das Zuführen durch eine unmittelbare Verbindung zwischen Wärmetauscher und Abgabehaube vorgesehen wird. In weiteren Ausführungen umfasst der Rohrbündelreaktor einen Wärmetauscher bzw. eine Wärmequelle zum Vorheizen von Eduktströmen, wobei zu diesem Zweck der Wärmetauscher bzw. die Wärmequelle direkt an die Zuführungshaube angeschlossen ist, oder in einer Zuleitung vorgesehen ist, die zu der Zuführungshaube führt. In gleicher Weise umfasst das erfindungsgemäße Verfahren vorzugsweise den Schritt des Erwärmens des zugeführten Eduktgemisches bzw. Reaktionsgemisches zu der Zuführungshaube, wobei die Erwärmung durch einen Wärmetauscher bzw. eine Wärmequelle vorgesehen wird.

In einer weiteren bevorzugten Ausführungsform wird die Abgabehaube entweder mittelbar über einen Wärmetauscher oder weitere Komponenten oder unmittelbar beispielsweise über eine Pumpe mit einer Zuführung der Zuführungshaube verbunden, so dass zumindest ein Teil des Produkts bzw. Produktgemischs zurückgeführt wird. Die Zurückführungsverbindung kann neben einer Pumpe auch einen Wärmetauscher oder eine Wärmequelle umfassen, um das Produktgemisch geeignet zu temperieren. Das erfindungsgemäße Verfahren umfasst somit ferner dementsprechend einen Schritt des Rückführens von Produkt bzw. Produktgemisch aus der Abgabehaube mittelbar oder unmittelbar zu der Zuführungshaube, wobei vorzugsweise vor dem Einspeisen in die Zuführungshaube das rückgeführte Gemisch mit einem Eduktstrom gemischt wird, und das sich ergebende Gemisch in die Zuführungshaube eingespeist wird. Somit lässt sich der Umsatz von einzelnen Edukten präziser steuern, insbesondere wenn das Eduktgemisch bzw. das Reaktionsgemisch Komponenten enthält, die bei einem Durchtritt durch das Rohrbündel nicht vollständig reagieren. Während des Rückführens kann der Produktstrom ferner noch aufbereitet werden, beispielsweise durch Destillieren, bevor der rückgeführte Produktstrom bzw. das rückgeführte Produktgemisch mit Edukten gemischt wird, bzw. bevor das rückgeführte Produktgemisch in die Zuführungshaube eingespeist wird. Hierzu wird vorzugsweise eine Aufbereitungsvorrichtung, beispielsweise eine Destillationsvorrichtung, in die Rückführungsleitung eingebracht, die die Abgabehaube mit der Zuführungshaube rückverbindet.

Anstatt des Erwärmens mittels eines Wärmetauschers oder einer Wärmequelle kann der aus der Abgabehaube ausgeführte Produktstrom bzw. Produktgemischstrom gekühlt werden mittels einer Kühlvorrichtung oder mittels eines Wärmetauschers. Somit kann die Verbindungsleitung, welche die Zuführungshaube mit der Abgabehaube (mittelbar oder unmittelbar) verbindet, auch mit einer Kühleinrichtung vorgesehen werden, beispielsweise einem Kühlaggregat oder einem Wärmetauscher.

Die Erfindung betrifft ein Verfahren zur Durchführung von unkatalysierten oder homogen katalysierten Reaktionen, bei denen temperaturempfindliche Edukte und/oder Produkte beteiligt sein können unter Verwendung der erfindungsgemäßen Rohrbündelreaktoren. Insbesondere sind der erfindungsgemäße Rohrbündelreaktor und das erfindungsgemäße Verfahren für Reaktionen geeignet, die temperaturempfindliche Edukte oder Produkte haben, beispielsweise bei Reaktionen, bei denen aus Produkten unerwünschte Folgeprodukte entstehen. Zudem ist die Erfindung für Reaktionen geeignet, die in einem engen Temperaturfenster oder Druckfenster ablaufen müssen. Weiterhin ist die Erfindung für Reaktionen geeignet, die auch außerhalb des Reaktors ablaufen, d.h. Reaktionen ohne Katalysator und Reaktionen mit Katalysator, der homogen im Eduktstrom bzw. im Reaktionsgemisch verteilt ist. Dies ist insbesondere für Reaktionen der Fall, die eine starke Wärmeentwicklung aufweisen oder die Wärme aufnehmen, vor allem bei derartigen Reaktionen, die in einem bestimmten, engen Temperaturfenster ablaufen sollen.

Als unkatalysierte Reaktionen sind beispielsweise Oxidationen mit Sauerstoff, Luft oder Distickstoffmonoxid oder Diels-Alder-Reaktionen geeignet. Als homogen katalysierte Reaktionen kommen z. B. Oxidationen, Carbonylierungen, Hydroformylierungen, Hydrierungen, Metathese-Reaktionen, Hydrocyanierungen von Monoolefinen und nicht konjugierten oder konjugierten Polyolefinen, Oxidationen von Kohlenwasserstoffen, Additionen von Nukleophilen, wie z.B. Wasser, Alkohole, Ammoniak, primäre und sekundäre Amine und Mercaptane an Epoxide, Aziridine oder Thiirane, Addition von CO₂, COS oder CS2 an Epoxide, Aziridine, Thiirane, homogenkatalysierte Hydrierungen von Olefinen, Carbonylverbindungen oder Iminen, homogenkatalysierte Oligo- oder Polymerisation von Olefinen, Epoxiden, Aziridine, Oligo- oder Polykondensationen von Di- oder Polyolen mit Di- oder Polycarbonsäure(derivaten), Di- oder Polyamine mit Di- oder Polycarbonsäure(derivaten), Di- oder Polyole mit Di- oder Polyisocyanate, Di- oder Polyole mit Di- oder Polycarbodiimide in Betracht.

Monoolefine und nicht konjugierte oder konjugierte Polyolefine als Ausgangsverbindungen können bei unkontrollierter Temperatursteigerung in exothermer Reaktion Oligomere und Polymere bilden. Aber auch andere ungesättigte Systeme wie z. B. Verbindungen mit ungesättigten Kohlenstoff-Stickstoff-Bindungen neigen zur Oligomerisierung oder Polymerisation. Ein Beispiel ist Blausäure, die bei Hydrocyanierungen als C₁-Baustein dient und in exothermer Reaktion polymerisieren kann.

Der erfindungsgemäße Rohrbündelreaktor sowie das erfindungsgemäße Verfahren eignen sich insbesondere für die Herstellung von Cyclododeca-4,8-dienon, das durch anschließende Hydrierung zu Cyclododecanon umgesetzt werden kann. Um Cyclododeca-4,8-dienon zu synthetisieren, werden dem Rohrbündelreaktor als Edukte 1,5,9-Cyclododecatrien und Distickstoffmonoxid zugeführt. Das Reaktionsgemisch innerhalb des Reaktors umfasst diese Edukte.

Die Reaktion, welche bei der Herstellung von Cyclododeca-4,8-dienon durch Umsetzung von 1,5,9-Cyclododecatrien mit Distickstoffmonoxid ausgeführt wird, ist zur Ausführung der Erfindung geeignet und in WO 05/030690 und WO 08/000756 beschrieben. Insbesondere ist der erfindungsgemäße Rohrbündelreaktor für diese Reaktion geeignet.

Die Umsetzung von 1,5,9-Cyclododecatrien mit Distickstoffmonoxid wird in Abwesenheit von Katalysatoren in der Flüssigphase durchgeführt.

Im Rahmen der vorliegenden Erfindung kann grundsätzlich jedes Cyclododecatrien oder jedes Gemisch aus zwei und mehr unterschiedlichen Cyclododecatrienen mit Distickstoffmonoxid umgesetzt werden. Unter anderem kommen hierbei beispielsweise 1,5,9-Cyclododecatriene, beispielsweise *cis*,*trans*,*trans*-1,5,9-Cyclododecatrien oder *cis,cis,trans-1,5,9-Cyclododecatrien* oder *all-trans-*1,5,9-Cyclododecatrien oder Gemische hiervon in Frage. Das Eduktgemisch kann ferner darüber hinaus Isomere hiervon oder auch Verunreinigungen oder Zusatzstoffe umfassen.

Das zur Umsetzung verwendete Distickstoffmonoxid kann grundsätzlich in reiner Form oder in Form eines geeigneten Gasgemisches, enthaltend Distickstoffmonoxid, eingesetzt werden. Insbesondere kann als Gasgemisch das in WO 05/030690 beschriebene Gasgemisch verwendet werden, das Distickstoffmonoxid umfasst.

Cyclododecatrien ist eine thermisch empfindliche Verbindung, die sich im Temperaturbereich der Cyclododecatrien-Umsetzung schon merklich in exothermer Reaktion zersetzt. Daher wird die Temperatur in der Zulaufleitung, d.h. in den Zuführungskanälen, und in der Zuführungshaube zwischen 190 °C und 205 °C gehalten. Mit anderen Worten wird die Temperatur derart gesteuert, dass das Gemisch vor Eintritt in das Rohrbündel bzw. in das Zuführungsende zwischen 190 °C und 205 °C liegt. Diese Temperaturen dürfen auch im Störungsfall, z. B. bei Stromausfall nicht ansteigen. Unter diesen Bedingungen reagiert Cyclododecatrien schon mit Distickstoffmonoxid in den Mischern, der Zulaufleitung und der unteren Haube ab. Ein Temperaturanstieg wird jedoch dadurch verhindert, dass man die Mischer und die Reaktorzuleitung nicht isoliert und so die Wärmeabfuhr durch Leitung, Konvektion und Strahlung fördert. Aus Sicherheitsgründen sind jedoch Mischer und Zuleitung geschützt und somit wärmeisoliert, so dass die Wärme im Wesentlichen über Rohrboden und auch über die Haube abgeleitet wird. Zudem wird erfindungsgemäß nur ein geringes Volumen für das Reaktionsgemisch innerhalb der Zuführungshaube vorgesehen. Mit anderen Worten wird die Temperatursteuerung erfindungsgemäß ermöglicht bzw. erleichtert durch eine geringe Höhe der Zuführungshaube bzw. durch ein geringes Innenvolumen bzw. durch den starken Querschnittszuwachs der Zuführungshaube in Richtung des Rohrbündels.

Die Umsetzung von Cyclododecatrien mit Distickstoffmonoxid im Rohrbündelreaktor zu Cyclododecadienon und Stickstoff erfolgt bei 230 °C bis 270 °C, bevorzugt 240 °C bis 260 °C, besonders bevorzugt 240 °C bis 250 °C. Die Temperatursteuerung, die durch Wärmetauscher und/oder durch das Wärmemedium innerhalb der Reaktorhülle realisiert wird, ist erfindungsgemäß eingerichtet, diese Temperaturintervalle im Betrieb zu erzielen. Der Druck bei diesen Temperaturen beträgt 50 bis 100 bar, bevorzugt 70 bis 100 bar, besonders bevorzugt 90 bis 100 bar innerhalb der Rohre des Rohrbündelreaktors sowie auch vorzugsweise in den Hauben.

Der Rohrbündelreaktor wird gemäß eines Aspekts der Erfindung derart betrieben, dass das Molverhältnis von Cyclododecatrien zu Distickstoffmonoxid im Reaktorzulauf des Rohrbündelreaktors beträgt: im Wesentlichen 10 zu 1, bevorzugt im Wesentlichen 8 zu 1, und besonders bevorzugt im Wesentlichen 7 zu 1. Der damit einhergehende Distickstoffmonoxid-Umsatz beträgt 80 bis 100 %, bevorzugt 90 bis 100 %, besonders bevorzugt 95 bis 100 %. Das zugefahrene Cyclododecatrien wird hierdurch zu 10 bis 30 %, bevorzugt 12 bis 25 %, besonders bevorzugt 14 bis 20 % umgesetzt.

Das Zielprodukt Cyclododecadienon kann mit weiterem Distickstoffmonoxid zu Diketonen weiterreagieren. Diese Reaktion lässt sich durch die Erfindung dadurch zumindest teilweise verhindern, dass der erfindungsgemäße Rohrbündelreaktor und das erfindungsgemäße Verfahren nur eine geringe Streuung der Temperatur innerhalb des Reaktors ermöglicht. Insbesondere wird dies ermöglicht durch eine erfindungsgemäße Abgabehaube, die durch die geringe Menge innerhalb der Abgabehaube eine effizientere und wirksamere Kühlung bzw. Temperatursteuerung erlaubt, wodurch Folgeprodukte vermieden werden. Durch die Verwendung von Rohrreaktoren in Kombination mit hohen Cyclododecanon/Distickstoffmonoxid-Molverhältnissen wurden Cyclododecadienon-Selektivitäten von bis zu 95 % erzielt.

Weitere Vorteile der erfindungsgemäßen flachen Reaktorhauben bestehen darin, dass bei der Oxidation von Cyclododecatrien mit Distickstoffmonoxid zu Cyclododecadienon unter Bildung von Stickstoff, bei der das thermisch empfindliche Cyclododecatrien in der Zuführungshaube exotherm zersetzt wird, die Zersetzung, welche bei Störungen wie Stromausfall verstärkt auftritt, gegenüber bekannten Reaktorbauformen stark reduziert ist. Hierzu gewährleisten die flache Reaktorhauben eine gute Ableitung der Reaktionswärme, da die erfindungsgemäß flache Bauform aufgrund des vorteilhaften Oberflächen/Volumenverhältnisses innerhalb der Haube(n) (insbesondere innerhalb der Zuführungshaube) zu einer stabilen und sicheren Fahrweise auch bei Störungen der Fluidströmung innerhalb des Reaktors führt.

Die Reaktionsrohre werden mit Wasser oder einem anderen Kühlmedium, das im Mantelraum des Reaktors zirkuliert, gekühlt. Die Zuführung wird in den Rohren, die die Zuführungskanäle bilden, aufgeheizt. Ferner kann das zugeführte Reaktionsgemisch oder Teile hiervon auf Reaktionstemperatur aufgeheizt werden, bevor dieses dem Reaktor über die Haube zugeführt wird. Die vom Kühlwasser aufgenommene Reaktionswärme wird beispielsweise zur Produktion von Wasserdampf verwendet, der an anderen Stellen des Verfahrens eingesetzt oder in einem Dampfnetz eingespeist werden kann.

Der Reaktionsaustrag des Rohrbündelreaktors, der von der Abgabehaube oder von einem gegebenenfalls direkt daran angeschlossenen Wärmetauscher abgegeben wird, wird gekühlt und destillativ zu reinem Cyclododecadienon aufgearbeitet. Das dabei anfallende unumgesetzte Cyclododecatrien wird wie das Frisch-Cyclododecatrien vorgewärmt, bevorzugt durch Wärmetausch mit dem Reaktionsaustrag, der aus der Ausgabehaube abgegeben wird, und über eine Rückführung einer Mischvorrichtung in dem Edukt-Zufluss zugeleitet. Der Wärmetausch wird vorzugsweise von einem Wärmetauscher realisiert, der das Gemisch der Abgabehaube oder das Gemisch eines gegebenenfalls direkt daran angeschlossenen Wärmetauschers wärmeübertragend mit dem Gemisch koppelt, das in die Zuführungshaube eingegeben wird. Hierzu verfügt der Wärmetauscher über einen ersten Kreislauf, der an die Rückführung oder an die Abgabehaube angeschlossen ist, und über einen zweiten Kreislauf, der an die Zuführung von Frischedukten in die Zuführungshaube angeschlossen ist. Alternativ kann der Wärmetauscher die Zuführungshaube, die Frischeduktzuleitung, einen Zuführungsmischer oder eine Kombination hiervon mit der Abgabehaube wärmeübertragend koppeln und entsprechend mit diesen verbunden sein.

Die Erfindung betrifft weiterhin in den erfindungsgemäßen Rohrreaktoren hergestellte Verbindungen, insbesondere Cyclododecanon, das mittels des erfindungsgemäßen Verfahrens hergestellt wurde aus Cyclododecatrienen.

### KURZE BESCHREIBUNG DER ZEICHNUNGEN

Figuren 1a und 1b zeigen den generellen Aufbau zweier Ausführungen des erfindungsgemäßen Rohrbündelreaktors;
Figur 2 zeigt einen weiteren erfindungsgemäßen Rohrbündelreaktor im Detail;
Figuren 3 und 4 zeigen Details der Zuführungshaube des erfindungsgemäßen Reaktors;
Figur 5 zeigt eine Abgabehaube eines erfindungsgemäßen Rohrbündelreaktors mit angeschlossenem Wärmetauscher; und
Figur 6 zeigt die erfindungsgemäße Zuführungshaube und Teile des angeschlossenen Rohrbündelreaktors einer weiteren Ausführung der Erfindung.

### DETAILLIERTE BESCHREIBUNG DER ZEICHNUNGEN

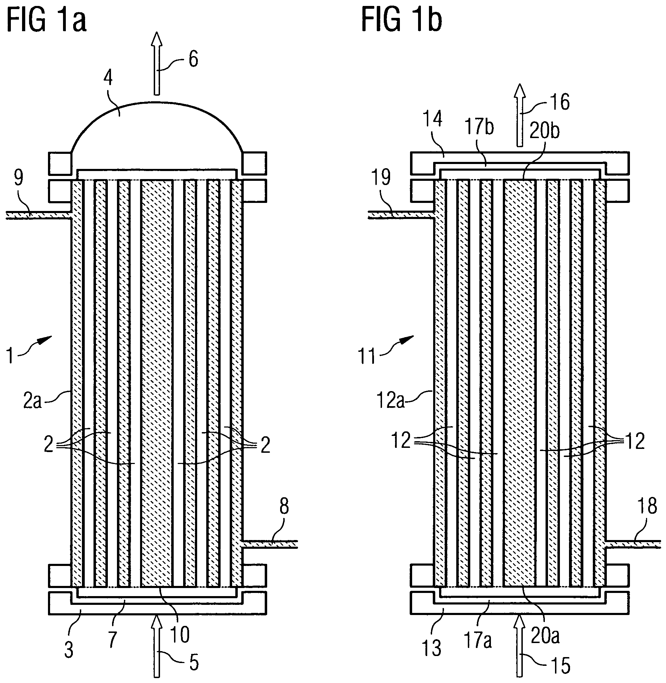

Die Figur 1 a zeigt einen erfindungsgemäßen Rohrbündelreaktor 1 mit einer Vielzahl von parallel verlaufenden Reaktionsrohren, die zwischen zwei Rohrbündelenden verlaufen. Die Reaktionsrohre 2 bilden das Rohrbündel des Rohrbündelreaktors. Innerhalb der Rohre ist während des Betriebs Reaktionsgemisch vorgesehen. Eine Reaktorwand 2a umgreift das Rohrbündel um den gesamten Umfang und schließt somit das Rohrbündel ein. Die zwischen den Rohren des Rohrbündels und zwischen dem Rohrbündel und der Reaktorwand vorgesehenen Räume sind miteinander verbunden und während des Betriebs von einem Kühlmedium bzw. Temperiermedium durchströmt. In der Figur 1a ist das Reaktionsmedium schraffiert dargestellt. Der Rohrbündelreaktor umfasst ferner eine eintrittsseitige Haube, d.h. eine Zuführungshaube 3, an der ein Eduktstrom 5 in den Rohrbündelreaktor von unten eintritt. Hierbei ist der Rohrbündelreaktor vorzugsweise derart orientiert, dass die Zuführungshaube hinsichtlich des Gravitationsfeldes an dem untersten Ort des Rohrbündelreaktors vorgesehen ist, und der Rohrbündelreaktor aufrecht nach oben in Bezug auf das Gravitationsfeld der Erde ausgerichtet ist. In einer alternativen Ausführungsform, die in Fig. 1 nicht dargestellt ist, kann mit Bezug auf das Gravitationsfeld der Reaktor umgekehrt orientiert sein, mit einem von oben eintretenden Eduktstrom, der an einer unteren Abgabehaube wieder austritt. Das zugeführte Reaktionsgemisch, siehe Pfeil 5, wird über die Zuführungshaube 3 in das Rohrbündel 2, d.h. in das Innere der Rohre des Rohrbündels 2, eingeführt und durchläuft das Rohrbündel nach oben, um an einer austrittsseitigen Haube bzw. in deren Innenvolumen aufzutreten, wobei die austrittsseitige Haube die Abgabehaube 4 vorsieht. Die Abgabehaube ist somit mit dem Rohrbündel 2 verbunden, um das dort durchfließende Reaktionsgemisch aufzunehmen, und mit einem Produktabfluss 6, über den Reaktionsgemisch aus dem Rohrbündelreaktor austritt, das das Rohrbündel durchlaufen hat.

Während die Abgabehaube 4 eine im Stand der Technik übliche, großvolumige Form aufweist, ist die Zuführungshaube 3 mit einem sehr geringen Volumen, bezogen auf den Querschnitt und somit in einer erfindungsgemäßen flachen Bauform ausgeführt. Am Zuführungsende 10 des Rohrbündels, an dem ein Rohrboden vorgesehen ist, um das Rohrbündel zu tragen, ist ein schmaler Spalt 7 vorgesehen, durch den das Innenvolumen der Zuführungshaube definiert ist. Es ist unmittelbar aus Figur 1 ersichtlich, dass das Volumen der Zuführungshaube um ein Vielfaches geringer ist als das Volumen der Abgabehaube 4, obwohl beide den gleichen Querschnitt aufweisen.

Es kann direkt aus der Figur 1a abgeschätzt werden, dass bei einer exothermen Reaktion innerhalb der Hauben und bei einer (hypothetischen) gleichen Ausgangslage innerhalb der Abgabehaube 4 ein deutlich stärkerer, so genannter "Hot-Spot" entstehen würde, als in der Zuführungshaube 3. In der Zuführungshaube 3 kann deshalb nur bedingt ein Temperaturzuwachs erfolgen, da eintretendes Reaktionsgemisch so gut wie unmittelbar ohne Zwischenlagerung in das Rohrbündel eintritt, wo die Temperatur gut durch Wärmeabfuhr bzw. -zufuhr gesteuert werden kann. Es ist direkt ersichtlich, dass bei einer Bauform, wie sie die Abgabehaube 4 vorsieht, die gemäß dem Stand der Technik ausgestaltet ist, eintretendes Reaktionsgemisch zunächst eine Zeitdauer innerhalb der Haube verweilt, und sich somit eine deutlich größere Wärmemenge beziehungsweise Temperatur entwickelt, die nur schlecht abgeführt werden kann, wodurch sich auch die Wärme beispielsweise in Form eines Hot-Spots ansammelt.

Die Reaktorwand 2a ist erfindungsgemäß zylindrisch, vorzugsweise kreiszylindrisch ausgestaltet und umfasst an einem oberen Ende, d.h. an einem Abgabeende, das der Abgabehaube 4 zugewandt ist, einen Kühlmittelabfluss, der mit dem Inneren des Reaktors und somit mit dem Raum, der das Rohrbündel umgibt, in Kontakt steht. In gleicher Weise ist eine Kühlmittelzufuhr 8 vorgesehen, die in der Nähe der Zuführungshaube 3 angeordnet ist, und somit an dem Zuführungsende 10. Wie bereits bemerkt, ist an dem Zuführungsende 10 ein Rohrboden vorgesehen, der die Rohre gegeneinander abdichtet, und somit den Raum zwischen den Rohren innerhalb der Reaktorwand von dem Raum innerhalb des Rohrbündels, innerhalb der Zuführungshaube 3 und innerhalb der Abgabehaube 4 vollständig trennt. Diese Trennung betrifft jedoch nur Fluidströmungen, so dass Kühlmittel (schraffiert) und Reaktionsgemisch getrennt bleiben, wohingegen die große Wärmeübertragungsfläche, die im Wesentlichen von den Außenflächen der Reaktionsrohre des Rohrbündels 2 vorgesehen wird, eine gute Wärmeübertragung zwischen Temperiermedium und Reaktionsgemisch ermöglicht. Neben einem am Zuführungsende vorgesehenen Rohrboden 10 ist ein weiterer Rohrboden an einem Abgabeende des Rohrbündels vorgesehen, das dem Zuführungsende entgegengesetzt ist. Die Rohrböden dienen zur Stütze der Rohre und gegebenenfalls der Halterung von in den Rohren vorgesehenen Komponenten, wie Mischelemente, Einbauten, Wärmeübertragungselemente und Ähnliches. Gegebenenfalls können auch Katalysatoren innerhalb des Rohrbündels vorgesehen sein, die von den Rohrböden in ihrer Position gehalten werden. Es ist aus Figur 1a ferner ersichtlich, dass die beiden Hauben 3 und 4 umfängliche Verbindungselemente aufweisen, die entsprechend den Verbindungselementen der Reaktorwand am Zuführungsende 10 bzw. am entgegengesetzten Abgabeende korrespondieren. Am Zuführungsende sowie am Abgabeende kann somit die Reaktorwand 2a bzw. deren Stirnseite mit dem offenen Ende der jeweiligen Haube abdichtend verbunden werden. Obwohl die Abbildung 1a weder hinsichtlich Wandstärke noch hinsichtlich der Geometrien als maßstäblich betrachtet werden soll, ist zu erkennen, dass die Zuführungshaube 3 aufgrund der flachen Form mit einer deutlich größeren Wanddicke ausgestattet ist als die Abgabehaube 4, da die flache Form der Abgabehaube 3 zu stärkeren Querkräften innerhalb der Haube führt als die Haubenform der Abgabehaube 4. In der in Figur 1a dargestellter Ausführungsform erstreckt sich die innere Stirnseite und die entgegengesetzte äußere Stirnseite der Zuführungshaube jeweils entlang einer Ebene, die senkrecht zu der Längsachse des Rohrbündelreaktors ist. Für den Spalt 7, der das Innenvolumen der Zuführungshaube vorsieht, ergibt sich somit eine Scheibenform, d.h. eine kreiszylindrische Form mit geringer Höhe im Vergleich zum Durchmesser.

Die Figur 1b zeigt den generellen Aufbau einer weiteren Ausführungsform des erfindungsgemäßen Rohrbündelreaktors 11 mit Reaktionsrohren 12, die das Rohrbündel ausbilden, welches wiederum von einer Reaktorwand 12a vollständig umgeben ist. Der Rohrbündelreaktor 11 umfasst ferner eine Zuführungshaube 13, die wie die Zuführungshaube von Figur 1a ausgestaltet ist, sowie einen zufließenden Fluidstrom 15 und einen abfließenden Fluidstrom 16, der das Reaktionsgemisch, welches innerhalb des Rohrbündels zumindest zum Teil umgesetzt wurde, über eine Abgabehaube 14 des Rohrbündelreaktors abführt. Im Gegensatz zur Ausführung von Figur 1a ist ebenso die Abgabehaube 14 in einer erfindungsgemäßen flachen Bauform vorgesehen. Somit ergibt sich zwischen der dem Rohrbündelreaktor abgewandten Stirnfläche des Innenvolumens der Zuführungshaube 13 und einem Zuführungsende 20a des Rohrbündels ein geringes Innenvolumen in Form eines schmalen Spalts, wobei ebenso die Innenfläche der Abgabehaube 14 mit einem Abgabeende 20b des Rohrbündels einen schmalen Spalt 17b vorsieht, der das Innenvolumen der Abgabehaube 14 darstellt. Hierdurch ergibt sich auch am Abgabeende des Rohrbündelreaktors von Figur 1b eine sehr geringe Verweilzeit von Gemisch innerhalb der Abgabehaube. Dies ist insbesondere bei thermisch sensiblen Reaktionsgemischen wichtig, wobei zusätzlich das hohe Verhältnis von Oberfläche zu Innenvolumen der Abgabehaube 14 eine gute Wärmeabstrahlung durch die Außenseite der Abgabehaube 14 ermöglicht. Mit anderen Worten wird im Vergleich zum Stand der Technik (vgl. Abgabehaube von Figur 1a) bei dem Rohrbündelreaktor von Figur 1b das Produktgemisch, welches das Rohrbündel verlässt, auch unmittelbar aus dem Reaktor ausgeführt, ohne während einer längeren Verweilzeit bei erhöhter Temperatur, innerhalb der Abgabehaube zu verweilen. Durch die geringe Verweilzeit wird die Bildung von Hot Spots unterdrückt. Wie bereits bemerkt, ist die Verweilzeit insbesondere bei temperatursensitiven Produkten kritisch, da hierdurch vermehrt unerwünschte Folgeprodukte und Folgereaktionen auftreten können.

Wie auch der Reaktor von Figur 1a, zeigt der Reaktor von Figur 1 b Befestigungselemente zur Befestigung der Hauben 13, 14 an der Reaktorwand 2a. Wie auch in Figur 1a wird in dem in Figur 1b dargestellten Reaktor eine Flanschverbindung gewählt, um eine druckfeste abdichtende Verbindung zwischen Hauben- und Reaktorwand 2a zu ermöglichen. Ebenso wie der in Figur 1a dargestellte Reaktor umfasst der in Figur 1b dargestellte Reaktor einen Kühlmittelzufluss 18 und einen Kühlmittelabfluss 19, um Kühlmittel, das in Kontakt mit dem Rohrbündel steht, durch den Reaktor hindurchzuschleusen und somit die Reaktionswärme aus dem Rohrbündel zumindest teilweise zu entfernen. In einer alternativen, nicht dargestellten Ausführungsform dient der hier dargestellte Kühlmittelzufluss 18 als Kühlmittelabfluss und der hier dargestellte Kühlmittelabfluss 19 dient als Kühlmittelzufluss. Grundsätzlich sind erfindungsgemäß sowohl Gleichstrom- als auch Gegenstromführung des Kühlmittels möglich.

Obwohl auch die Figur 1b keine maßstäbliche Darstellung eines Reaktortyps ist, ist ersichtlich, dass das Verhältnis von Oberfläche zu Innenvolumen einzelner Rohre des Rohrbündels nahe an das Oberflächen/Innenvolumenverhältnis der Hauben 14 und 13 herankommt, wobei vorzugsweise ähnliche Oberflächen/Volumenverhältnisse vorgesehen werden. Erfindungsgemäß entspricht das Oberflächen/Volumenverhältnis der Zuführungshaube und/oder der Abgabehaube mindestens 30 %, mindestens 50 %, mindestens 70 % oder mindestens 100 % des Oberflächen/Volumenverhältnisses der Reaktionsrohre oder einzelner Reaktionsrohre des Rohrbündels 12. Dies wird durch die geringen Höhenabmaße der Spalte 17a und 17b erreicht, die das Innenvolumen der Zuführungshaube 13 und der Abgabehaube 14 bestimmen, und somit ebenso das Oberflächen/Volumenverhältnis. Die für die Wärmeabstrahlung relevante Oberfläche der Hauben wird im Wesentlichen durch die stirnseitige Außenfläche der Hauben 13 und 14 vorgesehen, die jeweils entlang einer Ebene verläuft, die senkrecht zur Längsachse des Rohrbündels ist. Diese Oberfläche ist wiederum im Wesentlichen bestimmt durch den Durchmesser des Rohrbündels bzw. der Reaktorwand, wobei die stirnseitigen Außenflächen der Hauben 13 und 14 dem Querschnitt der Reaktorwand an den jeweiligen Enden des Reaktorbündels inklusive eines Rands für die Flanschverbindung zur Fixierung der Hauben an der Reaktorwand 2a definiert ist. Insbesondere der Rohrboden dient zur Abführung der Reaktionswärme zur Reaktorwand, zur Haube und insbesondere in das Kühlmittel innerhalb des Rohrbündels.

Der Reaktor von Figur 1b umfasst ferner, wie auch der Reaktor von Figur 1a, Rohrböden, die an dem Zuführungsende 20a sowie an dem Abgabeende 20b des Rohrbündels vorgesehen sind, um das Innere der Reaktorwand 12a, d.h. den Raum, in dem das Kühlmedium vorgesehen ist, gegenüber dem jeweiligen Innenraum der Hauben 13 und 14 zu trennen.

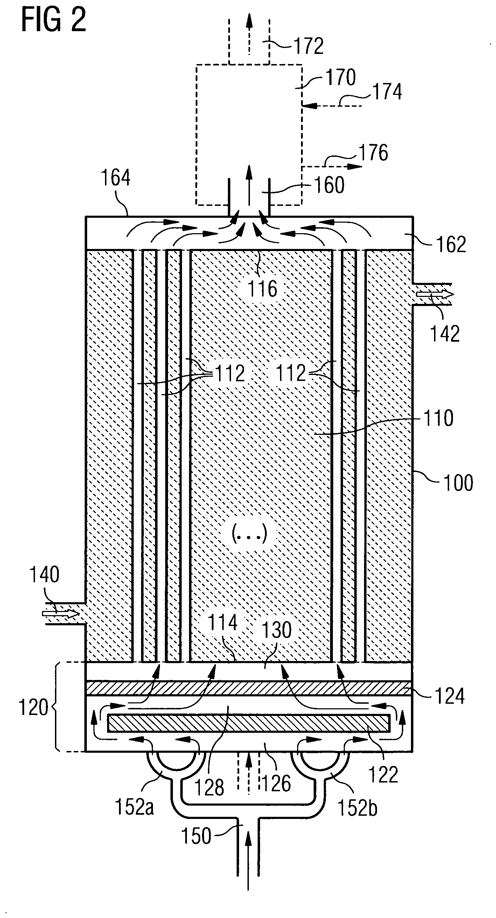

Figur 2 zeigt eine weitere Ausführung des Rohrbündelreaktors mit weiteren Details innerhalb der Zuführungshaube.

Der schematisch dargestellte Rohrbündelreaktor von Figur 2 umfasst eine Reaktorwand 100, die zylindrisch dargestellt ist. Wie auch weitere Merkmale des Reaktors, ist die Reaktorwand 100 ohne Angabe der Wanddicke nur mit einer einzelnen Linie in ihrem Verlauf gekennzeichnet. Die Reaktorwand 100 umgreift ein Rohrbündel 110, welches einzelne Rohre 112 umfasst. Die Rohre 112 erstrecken sich zwischen einem Zuführungsende 114 und einem Abgabeende 116. Die Rohrenden aller Rohre sind somit miteinander ausgerichtet vorgesehen, so dass alle Rohrenden am Zuführungsende in der gleichen Ebene liegen, und alle Rohrenden am Abgabeende in der gleichen Ebene liegen. Die Ebenen erstrecken sich jeweils senkrecht zur Längsachse des Rohrbündelreaktors bzw. senkrecht zur Erstreckungsrichtung der Rohre. Der Rohrbündelreaktor umfasst ferner eine näher im Detail dargestellte Zuführungshaube 120, sowie an den Seitenwänden angeordnete Kühlmittelanschlüsse 140, 142, die einen Kühlmittelzufluss 140 und einen Kühlmittelabfluss 142 umfassen. Die beiden Kühlmittelanschlüsse sind vorzugsweise in der Nähe entgegengesetzter Enden des Rohrbündels angeordnet, um keine Vorzugsströmung vorzusehen, die Abschnitte des Rohrbündels unberücksichtigt lässt.

Ferner können zur besseren Verteilung des Kühlmittels innerhalb der Reaktorwand Einbauten vorgesehen sein, um das Kühlmittel zu führen, zu mischen, und/oder zu verwirbeln. Die Zuführungshaube 120 umfasst Zuführungskanäle 150, 152a, b, die im nächsten Abschnitt näher erläutert werden. Die Zuführungskanäle sind an den Eintrittsstellen mit der Stirnseite der Zuführungshaube 120 verbunden, die entgegengesetzt zu dem Zuführungsende 114 des Rohrbündels angeordnet ist. Das in den Innenraum der Zuführungshaube 120 einströmende Reaktionsgemisch bzw. Eduktgemisch trifft zunächst innerhalb des Innenraums auf eine Umlenkungsvorrichtung, die in der Ausführung von Figur 2 eine Verteilerplatte 122 (hier in Form einer Prallplatte) und eine Homogenisierungsplatte 124 umfasst. Die Verteilerplatte 122 ist zwischen den Eintrittslöchern der Zuführungshaube 120 und der Homogenisierungsplatte 124 vorgesehen, wobei die Homogenisierungsplatte 124 zwischen der Umlenkplatte 122 und dem Zuführungsende 114 des Rohrbündels angeordnet ist. Beide erstrecken sich konzentrisch innerhalb des Innenvolumens der Zuführungshaube 120. Die Verteilerplatte 122 lenkt den zugeführten Fluidstrom zunächst von einer axialen Richtung zu einer radial nach außen gerichteten Richtung um, wobei eine den Eintrittslöchern zugewandte Seite der Verteilerplatte 122 die Richtung definiert, entlang der die Strömung nach außen zum Umfang der Verteilerplatte 122 verläuft. Zwischen äußerem Umfang der Verteilerplatte, die den Fluidstrom in seinem Querschnittsumfang erweitert, und der Zuführungshaube 120 ist ein Spalt vorgesehen, der den zugeführten Fluidstrom wiederum in eine axiale Richtung lenkt. Die axiale Richtung des Fluidstroms ist durch den axialen Verlauf des äußeren Umfangs der Verteilerplatte definiert, sowie durch den zylindrischen Verlauf der Innenwand der Zuführungshaube in der Höhe der Verteilerplatte 122.

Der Innenraum wird somit von der Verteilerplatte in axialer Richtung unterteilt. Zwischen Verteilerplatte 122 und Homogenisierungsplatte 124 ist ein weiterer Spalt vorgesehen, der sich in axialer Richtung erstreckt, und der einen Raum für die Fluidströmung freigibt, der sich radial über den gesamten Querschnitt der Zuführungshaube 120 erstreckt. Somit kann sich der Fluidstrom über die gesamte Querschnittsfläche der Haube sammeln, die zuvor in der Höhe der Verteilerplatte auf den ringförmigen Querschnitt des dort vorgesehenen Kanals beschränkt war. Um die Verteilung der Strömung (hinsichtlich Druck und Geschwindigkeit) über den gesamten Querschnitt zu homogenisieren, sieht die Homogenisierungsplatte124 eine Vielzahl von axialen Kanälen vor, die entlang der Längsachse des Rohrbündelreaktors verlaufen. Die einzelnen Löcher in der Homogenisierungsplatte 124 dienen dazu, für jedes Rohr einen definierten Druckverlust zu erzeugen und damit die Gleichverteilung zu garantieren. Um diese Gleichverteilung zu gewährleisten, kann der Spalt zwischen Homogenisierungsplatte 124 und Zuführungsende 114 des Rohrbündels geeignet dimensioniert sein, und in einer bevorzugten Ausführungsform in seiner Dicke gegen Null gehen (nicht in Fig. 2 dargestellt), so dass das Zuführungsende 114 im wesentlichen unmittelbar auf der dem Rohrbündel zugewandten Seite der Homogenisierungsplatte aufliegt bzw. dieses kontaktiert.

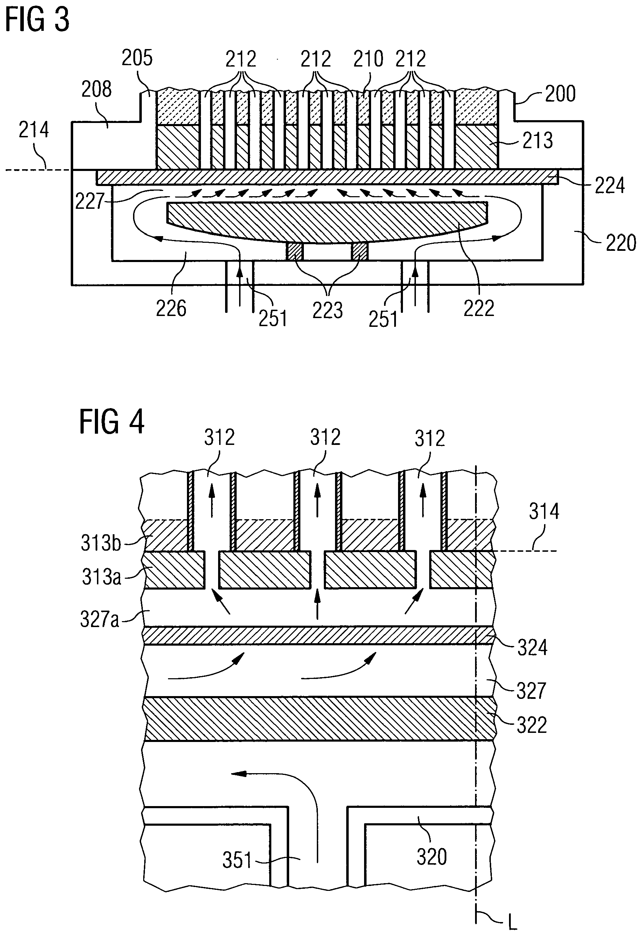

Durch die Kanäle wird gezielt ein Strömungswiderstand vorgesehen, der in dem Zwischenraum zwischen Homogenisierungsplatte 124 und Verteilerplatte 122 einen (geringfügigen) Rückstau erzeugt, in dem sich das zugeführte Fluid verteilen kann. Dies gilt insbesondere für Fluide, die als Liquidphase vorliegen. Ein weiterer (optionaler) Zwischenraum ist zwischen der Homogenisierungsplatte 124 und dem Zuführungsende 114 des Rohrbündels 110 vorgesehen, indem sich die einzelnen aus der Homogenisierungsplatte tretenden Strömungen gegenseitig beeinflussen können und somit eine Homogenisierung auftreten kann. Dieser Zwischenraum kann vollständig entfallen, wie in Fig. 3 dargestellt, wobei die Homogenisierungsplatte direkt an das Zuführungsende des Rohrbündels angrenzt. Während die Verteilerplatte 122 durchgängig ausgestaltet ist und in axialer Richtung keine Strömung ermöglicht, beispielsweise in Form einer Prallplatte, ist die Homogenisierungsplatte als perforiertes Blech vorgesehen, wobei die Perforationen die einzelnen axialen Kanäle vorsehen, die einen gezielten Strömungswiderstand erzeugen.

Der in Figur 2 dargestellte Rohrbündelreaktor umfasst ferner einen in Figur 2 nicht dargestellten Rohrboden, der zum einen als Halterung für die Rohre 112 dient, und zum anderen zur Trennung des Innenraums der Zuführungshaube und des Innenraums der Reaktorwand, in der Temperiermedium vorgesehen ist. Der Rohrboden bildet in Fig. 2 den unteren Abschluss des Rohrbündels, das in dem Rohrboden endet. Das Zuführungsende des Rohrbündels liegt somit im Rohrboden und schließt mit diesem ab. Der Rohrboden trennt den Raum des Reaktors, der das Rohrbündel umgibt, von der Zuführungshaube 120.

Die Zuführung des Fluidstroms wird durch mehrere Zuführungsströme vorgesehen, die durch die einzelnen Zuführungskanäle 150, 152a, b und den zugehörigen Y-Aufteilungen vorgesehen sind. Die in Figur 2 dargestellte Zuführung umfasst sich aufteilende Rohre, die mittels der Y-Aufteilungen 150, 152a, b in eine Vielzahl von an jeweiligen Eintrittslöchern der Zuführungshaube vorgesehenen Eintrittsstellen aufgeteilt werden.

In Figur 2 ist eine zweistufige Aufteilung mittels Y-Aufteilungen dargestellt, bei der zunächst an der Y-Aufteilung 150 ein einzelner Zuführungsstrom in zwei gleichgroße Zuführungskanäle aufgeteilt wird, wobei die aufgeteilten Kanäle wiederum jeweils durch weitere Y- Aufteilungen 152a, b der nächsten Stufe in weitere Zuführungskanäle aufgeteilt werden. Der Krümmungsradius an den Y- Aufteilungen der Zuführungskanäle ist mindestens doppelt so groß wie der Rohrquerschnitt der sich daran anschließenden Rohre.

Nach Durchtritt durch die Homogenisierungsplatte 124 und durch den Spalt zwischen Homogenisierungsplatte und Zuführungsende, der auch entfallen kann, durchläuft das Reaktionsgemisch die Rohre 112 des Rohrbündels 110, um an dem entgegengesetzten Ende des Rohrbündels, dem Abgabeende 116 auszutreten. Der Spalt entfällt vorzugsweise (entspricht einer Dicke von Null) oder beträgt weniger als 5 ‰, 2 ‰, 1 ‰, 0,5 ‰, 0,1 ‰ oder 0,05 ‰ des Außendurchmessers des Rohrbündels. Die Figur 2 stellt den Spalt stark vergrößert und zu dem Zweck dar, dass die einzelnen Funktionselemente der Vorrichtung besser voneinander zu unterscheiden sind. Am Abgabeende 116 tritt das Reaktionsgemisch aus den Rohren in ein Innenvolumen 162, bevor das Gemisch in einen Abgabeanschluss 160 eintritt. Das Innenvolumen 162 am Abgabeende des Rohrbündels wird definiert durch die Innenseite der Abgabehaube 164, von der in Figur 2 lediglich die inneren Umrisse dargestellt sind wie auch die Zuführungshaube 120 nur anhand der inneren Umrisse des Rohrbündelreaktors dargestellt ist, die für die Fluidströmung relevant sind. Die Abgabehaube 124 ist fluiddicht mit der Reaktorwand bzw. dem Reaktormantel 100 gebunden, der das Rohrbündel 110 vollständig umgreift. Somit hat die Abgabehaube an dem Abgabeende des Rohrbündels den gleichen Durchmesser wie die Reaktorwand; gleiches gilt für die Zuführungshaube 120, die am Zuführungsende 114 des Rohrbündels 110 den gleichen inneren Querschnitt wie die Reaktorwand aufweist. Die fluiddichte Verbindung der Abgabehaube mit dem Rohrbündel wird vorzugsweise dadurch vorgesehen, dass das dem Rohrbündel zugewandte Ende der Haube unmittelbar an den Reaktorboden (nicht dargestellt) angrenzt und mit diesem fluiddicht verbunden ist. Der Reaktorboden erstreckt sich in radialer Richtung vollständig bis zur Reaktorwand bzw. bis zu dem dem Rührbündel zugewandten Ende der Haube und schließt den Rohrboden vollständig ab. Die Abgabehaube 164 hat eine zu der Zuführungshaube 120 komplementäre Funktion, das heißt das Bündeln der Fluidströmung, die aus dem Abgabeende 116 des Rohrbündels 110 austritt, um diese einem Abgabeanschluss 160 mit geringerem Querschnitt in gebündelter Form zuzuführen. Die hierzu komplementäre Funktion der Zuführungshaube ist es, den (gebündelten) zugeführten Fluidstrom aufzuweiten und gleichmäßig auf das Zuführungsende 114 des Rohrbündels 110 aufzuspreizen bzw. zu verteilen. In der Figur 2 ist die Höhe des Innenraums der Abgabehaube 164 geringer als die Höhe des Innenraums der Zuführungshaube 120. Bevorzugt werden jedoch gleiche Bauformen für die Zuführungshaube und die Abgabehaube, wobei für die Zuführungshaube genannte Gestaltungsmerkmale auch für die Abgabehaube gelten und umgekehrt. Jedoch kann gemäß einem weiteren Aspekt der Erfindung die Abgabehaube 164 mit einer geringeren Höhe ausgestattet werden als die Zuführungshaube 120, da die Zuführungshaube 120 eine Umlenkungsvorrichtung beinhaltet bzw. umschließt, und die Abgabehaube 164 einen freien Innenraum 162 zwischen Haubendecke und Abgabeende 160 aufweist. Das Abgabeende 160 kann mit einem abgabeseitigen Rohrboden (nicht dargestellt) abschließen. Das Rohrbündel mündet an oder in den Rohrboden (nicht dargestellt), wobei der Rohrboden den Zwischenraum zwischen den Rohren und das Rohrbündel von dem Innenraum 162 der Abgabehaube 164 trennt. Der (freie) Innenraum 162 der Abgabehaube 164 wird dann von dem Rohrboden, der auch mit der Reaktorwand und der Abgabehaube 164 abdichtend abschließt, und der Innenwand der Abgabehaube 164 fluiddicht abgeschlossen.

Der Abgabeanschluss 160 kann an eine Leitung angeschlossen werden, die das Produktgemisch an eine weitere Verarbeitungsstufe oder eine Abfüllvorrichtung leitet. Gemäß einem Aspekt der Erfindung wird jedoch unmittelbar an den Abgabeanschluss 160 ein Wärmetauscher 170 aufgesetzt, der in Figur 2 gestrichelt dargestellt ist. Zwischen Wärmetauscher 170 und Abgabehaube 164 ist somit vorzugsweise nur eine sehr kurze Verbindung vorgesehen, die beispielsweise kleiner ist als der Radius des Rohrbündels oder kleiner ist als 75 %, 50 %, 25 %, 10 % oder 5 % des Radius des Rohrbündels. Das durch den Abgabeanschluss 160 abgegebene Produktgemisch wird dem Wärmetauscher 170 zugeführt, dort gekühlt und tritt an der Abgabe des Wärmetauschers 172 wieder (gekühlt bzw. temperiert) aus.

Zum Temperieren umfasst der Wärmetauscher vorzugsweise ebenso Rohrbündel oder Kühlschlaufen, die zur Trennung des Produktgemischs von dem Temperierungsmedium dienen, die jedoch gleichzeitig einen guten Wärmeübergang von dem Produktgemisch zu dem Temperierungsmedium ermöglichen. Hierzu umfasst der Wärmetauscher 170 einen Einlass 174 und einen Auslass 176, wobei durch den Einlass 174 Kühlmedium in das Innere des Wärmetauschers 170 eingebracht wird, und (bei zu kühlendem Produktgemisch) erwärmtes Temperierungsmedium aus dem Reaktor 170 durch den Auslass 176 ausgeleitet wird. Abhängig von den Reaktionsbedingungen kann auch das zugeführte Eduktgemisch bzw. Reaktionsgemisch von dem Wärmetauscher vorgewärmt werden. Der Wärmetauscher verwendet dazu die latente Wärme des Austrags, um dem Reaktor zugeführtes Gemisch vorzuheizen und gleichzeitig den Reaktoraustrag abzukühlen. Diese Wärmekopplung wird durch entsprechende wärmeübertragende Verbindungen, die der Wärmetauscher vorsieht, erreicht, die Reaktorzuführung und Reaktorabgabe zur Wärmeübertragung verbinden, unterstützt vom Wärmetauscher. Vorzugsweise wird der Abgabeanschluss 160 derart ausgestaltet, dass das Medium bereits durch bestimmte Austrittsstellen in der Haube geeignet in das Rohrbündel des Wärmetauschers 170 eintritt, wobei die Austrittsstellen der Abgabehaube den Produktgemischzuführungsstellen des Rohrbündelreaktors entsprechen.

Die Figur 2 ist nicht maßgeblich dargestellt. Insbesondere die Abmaße der Zuführungshaube, der Abgabehaube und der in der Zuführungshaube vorgesehenen Platten sind nicht maßgeblich dargestellt sondern sind derart entlang der Längsachse des Reaktors gedehnt, dass der Verlauf der Fluidströmung leicht zu erkennen ist.

Die Figur 3 zeigt das Detail einer Zuführungshaube und angrenzenden Zuführungsende des Rohrbündels eines erfindungsgemäßen Rohrbündelreaktors im Detail. Die Zuführungshaube 220 ist an dem Rohrbündelreaktor 200 und somit an dem Rohrbündel 210 angeschlossen, das eine Anzahl von Rohren 212 umfasst. Alle Rohre enden an der gleichen Ebene, die das Zuführungsende 214 des Rohrbündelreaktors darstellt. Am Zuführungsende des Rohrbündels 210 ist der zuführungsseitige Rohrboden 213 angeordnet, in dem das Rohrbündel 210 endet bzw. mündet. Die Rohre 212 sind an Öffnungen des Rohrbodens angeschlossen bzw. strecken sich zumindest teilweise in diese hinein, um eine fluiddichte Abdichtung des Rohrinnenraums gegenüber Zuführungshaube und dem sich zwischen den Rohren 212 erstreckenden Zwischenraum. vorzusehen. Die Reaktorwand 205 mündet in Richtung der Zuführungshaube 220 in eine Befestigungsvorrichtung 208, mit der sich ein Flansch ausbilden lässt, über das die Zuführungshaube 220 mit der Reaktorwand 205 verbunden ist. Mit dieser Befestigungsvorrichtung 208 ist auch der Reaktorboden 213 fluiddicht verbunden. In Figur 3 schließt die Reaktorwand 205 und insbesondere das Befestigungselement 208 mit der Ebene 214 ab, in der auch das Zuführungsende des Rohrbündels 214 und eine äußere Stirnseite des Reaktorbodens 213 liegt. Die entgegengesetzte innere Stirnseite des Reaktorbodens 213 ist dem Raum zwischen den Rohren 212 zugewandt. In dieser Ebene 214 stößt die Zuführungshaube bzw. die dem Zuführungsende zugewandte Stirnseite auf die Reaktorwand und insbesondere auf die Verbindungsvorrichtung 208 der Reaktorwand 205. Die Rohre 212 werden von dem Rohrboden 213 gehalten, der den Rohren 212 entsprechende Kanäle aufweist, in denen diese eingesteckt oder mit denen die Rohre 212 anderweitig verbunden sind, wodurch der Rohrboden 213 die Rohre 212 hält. Der Rohrboden 213 ist an der Innenseite der Reaktorwand 205 mit der Reaktorwand 205 mechanisch stabil und fluiddicht verbunden. Der mit Kanälen vorgesehene Rohrboden schließt mit dem Zuführungsende 214 des Rohrbündels 210 ab.

In einer nicht dargestellten, alternativen Ausführungsform sind der Rohrboden (und auch der in Fig. 3 nicht dargestellte austrittsseitige Rohrboden) sowie ein Teil der Befestigungsvorrichtung als Flansch ausgeführt, wobei der Teil der Befestigungsvorrichtung des Rohrbodens zusammen mit dem Rohrboden als eine einzige massive Stahlplatte mit Kanälen bzw. Bohrungen für die Rohre ausgeführt sind. Der Rohrboden ist dann ebenso wie die Reaktorwand am Zuführungsende mit einem Teil der Befestigungsvorrichtung ausgeführt, wobei die Teile der Befestigungsvorrichtung, die sich auf den Rohrboden und die Reaktorwand verteilen, eine Flanschverbindung darstellen, die beispielsweise über Fixierschrauben verfügt.

In einer alternativen Ausführungsform, die nicht dargestellt ist, ist das Zuführungsende des Rohrbündelreaktors und der Rohrboden 213 nach oben versetzt, das heißt von der dem Zuführungsende zugewandten Stirnseite der Zuführungshaube um eine bestimmte Distanz versetzt, wodurch sich ein zusätzliches Volumen ergibt. Da das Volumen zwischen Reaktorgemischzuführung und Zuführungsende des Rohrbündels vorgesehen ist, wird dieses als Teil des Innenvolumens der Zuführungshaube angesehen. Durch die Zurücksetzung des Zuführungsendes des Rohrbündels ergibt sich ein weiterer Spalt zwischen einer Homogenisierungsplatte 224 und dem Zuführungsende des Rohrbündels 214. In der Figur 2 ist ein derartiger Spalt mit dem Bezugszeichen 130 gekennzeichnet. Gemäß einer besonders bevorzugten Ausführungsform stößt die Homogenisierungsplatte jedoch direkt an den zuführungsseitigen Rohrboden an, ohne eine wesentlichen Spalt zu bilden, wie in Figur 3 dargestellt.

In der in Figur 3 dargestellten Ausführungsform liegt die Homogenisierungsplatte 214, welche als Lochblech ausgebildet ist, dessen Kanäle mit den Kanälen des Lochblechs fluchten, direkt auf dem Zuführungsende des Rohrbündels 214 auf und hat dadurch ebenso unmittelbaren Kontakt zu dem Rohrboden 213, der mit dem Zuführungsende 214 abschließt, wobei sich die Enden der Rohre durch den gesamten Rohrboden hindurch erstrecken. Alternativ kann sich das Rohrbündel nur in einen (oberen) Teil des Rohrbodens hinein erstrecken, wobei die Kanäle des Rohrbodens die Fluidverbindung zur Zuführungshaube herstellen und das Zuführungsende des Rohrbündels somit bis zur Ebene 214 (an das sich die Homogenisierungsplatte anschließt) verlängert wird. Die Homogenisierungsplatte 224 ist als perforiertes Blech ausgestaltet, das eine Vielzahl von in Längsrichtung des Rohrbündels verlaufende Kanäle umfasst, die einen gewissen Strömungswiderstand vorsehen. Dadurch ergibt sich ein gezielter (geringer) Rückstau, der die Strömungsgeschwindigkeiten über dem Querschnitt und über alle Rohre des Rohrbündels homogenisiert. Die Homogenisierungsplatte ist in einer umlaufenden Nut der Zuführungshaube 220 eingelegt, so dass bei Verbindung der Zuführungshaube 220 mit den Verbindungselementen 208 der Reaktorwand ebenso das Homogenisierungsblech 224 fixiert wird. Die Perforierungslöcher der Homogenisierungsplatte 224 können deutlich kleiner als der Querschnitt der einzelnen Rohre 212 sein, so dass ein einzelnes Rohr die Strömungen einer Vielzahl von Perforationslöchern der Homogenisierungsplatte 224 empfängt. Alternativ kann die Homogenisierungsplatte 224 Löcher aufweisen, die jeweils einzeln bestimmten Rohren zugeordnet sind, so dass genau ein Perforätionsloch das Reaktionsgemisch für genau ein zugeordnetes Rohr vorsieht. Die Querschnittsfläche der Perforationslöcher in der Homogenisierungplatte 224 ist in diesem Fall vorzugsweise kleiner als die innere Querschnittsfläche der einzelnen Rohre.

Die Zuführungshaube 220 umfasst ferner eine Verteilerplatte 222, die im Gegensatz zur Homogenisierungplatte keine Kanäle aufweist, sondern einen kontinuierlichen Querschnitt hat. Die Verteilerplatte 222 ist mit Verbindungselementen 223 an der Innenseite der Stirnfläche der Zuführungshaube 220 befestigt, die entgegengesetzt zu dem Zuführungsende 214 angeordnet ist. Wie bereits anhand Figur 2 beschrieben, tritt Reaktionsgemisch an Eintrittstellen 251 in den Innenraum der Zuführungshaube 220 ein und trifft dort auf eine Oberfläche der Verteilerplatte 222, die den Fluidstrom des Reaktionsgemischs radial nach außen führt. In Figur 3 ist diese Oberfläche nicht als ebene Oberfläche dargestellt, wie sie in Figur 2 vorgesehen ist, sondern als konkave, zum Rohrbündel hin geneigte Oberfläche vorgesehen. Die Oberfläche, auf die der zugeführte Fluidstrom trifft, kann grundsätzlich jede Form aufweisen, ist vorzugsweise eben oder weist eine andere zur Fluidführung gewünschte Form auf. Die Verteilerplatte 222 sieht somit einen ersten Spalt zwischen der zuführungsseitigen Stirnfläche des Innenvolumens der Zuführungshaube 220 vor, in dem der zugeführte Fluidstrom erweitert wird. Dieser Spalt 226, in dem der Fluidstrom erweitert wird, dient insbesondere dazu, dass einströmendes Reaktionsgemisch nicht bevorzugt in bestimmte Rohre eintritt und andere Rohre mit einer geringeren Strömung beaufschlagt sind. Aus diesem Grund erstreckt sich die Verteilerplatte und somit die Oberfläche, auf die der zugeführte Fluidstrom trifft, über den Querschnitt des Zuführungsendes hinaus. Als Querschnitt des Zuführungsendes wird der Querschnitt des Rohrbündels am Zuführungsende bezeichnet bzw. der Kreis, der das Rohrbündel umschreibt. Zwischen Verteilerplatte 222 und Homogenisierungsplatte 224 ist ein weiterer Spalt 227 vorgesehen, in dem das Innenvolumen frei durchströmbar ist, und der somit zum Sammeln des aufgespreizten Fluidstroms dient. Da zwischen Verteilerplatte und Homogenisierungsplatte 224 durch den Spalt 227 ein bestimmtes Volumen vorgesehen ist, und die Homogenisierungsplatte 224 einen gewissen Rückstau bildet, sammelt sich in Spalt 227 das Reaktionsgemisch über den gesamten Querschnitt des Innenvolumens insbesondere über den Querschnitt des Rohrbündels und ermöglicht einen Druckausgleich, der zur Homogenisierung der Strömung innerhalb des Querschnittspalts 227 führt. Der Spalt 227 dient somit als Sammelraum für das Reaktionsgemisch, bevor dieses in homogenisierter Weise in das Zuführungsende 214 eintritt. Ferner dient der Spalt 227 als Stauraum für den Rückstau bzw. die Druckdifferenz, die von der Homogenisierungsplatte 224 vorgesehen wird.

Die Figur 4 zeigt einen Ausschnitt des Rohrbündelreaktors mit einer Zuführungshaube 320 und dem Zuführungsende 314 des Rohrbündels, von dem 3 Rohre 312 exemplarisch dargestellt sind. Die Haube umfasst an der Stirnseite, die dem Zuführungsende abgewandt ist, eine Zuführung 351, durch die Reaktionsgemisch in den Innenraum der Zuführungshaube 320 eintritt. Die Zuführung 351 ist von der Längsachse L versetzt und ist somit außerhalb der Mitte der Reaktorhaube vorgesehen. Auf Grund der weiteren, nicht dargestellten exzentrischen Zuführungen wird der zugeführte Strom von der Verteilerplatte 322, die innerhalb der Zuführungshaube 320 vorgesehen ist, radial nach außen gelenkt. Zwischen Außenrand (nicht dargestellt) der Verteilerplatte 322 und der Innenseite der Zuführungshaube ist ein ringförmiger Kanal vorgesehen, der das Reaktionsgemisch wieder in axialer Richtung lenkt und in einen Spalt 327 zwischen der Verteilerplatte 322 und einer Homogenisierungsplatte 324 innerhalb der Zuführungshaube lenkt. Wie bereits bemerkt ist die Homogenisierungsplatte 324 im Gegensatz zur Verteilerplatte 322 mit (axialen) Kanälen ausgestattet, beispielsweise in Form eines Lochblechs oder auch in Form einer Sinterplatte. Im Allgemeinen sind die Kanäle innerhalb der Homogenisierungsplatte derart ausgestattet, dass sie die beiden Stirnseiten der Homogenisierungsplatte miteinander verbinden. Der konkrete Verlauf des Kanals innerhalb der Homogenisierungsplatte kann frei gewählt werden, und kann insbesondere ausgeschaltet werden, um die geeigneten Strömungsverhältnisse und den geeigneten Strömungswiderstand vorzusehen. Die optionale Homogenisierungsplatte weist einen zur besseren Darstellung dienenden Spalt 327a auf, der auch entfallen kann, wenn in einer bevorzugten Ausführungsform die Homogenisierungsplatte 324 direkt an einen Rohrboden 313 anstößt. In dem Rohrboden 313 sind die Rohre 312 eingesteckt. In Figur 4 sind Rohre 312 in einen ersten Abschnitt 312b des Rohrbodens eingesteckt, und ein zweiter Abschnitt 312a sieht Kanäle zur Fluidverbindung der Rohre mit dem Innenraum der Zuführungshaube vor. Der zweite Abschnitt 313a des Rohrbodens hat Kanäle mit einem Querschnitt, der kleiner als der Innenquerschnitt der Rohre ist. Dadurch bildet auch der zweite Abschnitt 313a, wie auch die Homogenisierungsplatte 324, eine Stauwirkung für das einströmende Reaktionsgemisch aus, und bildet eine Art Blende für die Rohre des Rohrbündels. Die Homogenisierungsplatte 324 ist somit optional und kann weggelassen werden, der Kanalquerschnitt im zweiten Abschnitt 312a kann gemäß der gewünschten Strömungsverhältnisse vorgesehen werden. Der erste Abschnitt 312b dient somit zur Halterung der Rohre des Rohrbündels während der zweite Abschnitt 312a dazu dient, Zuführungskanäle für das Reaktionsgemisch auszubilden, um dem Rohrbündel Reaktionsgemisch zuzuleiten, und den Strömungsquerschnitt in dieser Zuleitung gezielt zu verengen. Der erste Abschnitt 312b kann einteilig mit dem zweiten Abschnitt 312a ausgebildet sein, oder die beiden Abschnitte können zweiteilig ausgebildet sein. Bei zweiteiliger Ausführung sind die Abschnitte unmittelbar oder über eine Halterungsanordnung oder über den Reaktormantel miteinander verbunden.

In einer nicht dargestellten Ausführungsform ist der Kanalquerschnitt des zweiten Abschnitts (312a) so groß wie der Querschnitt des ersten Abschnitts (312b), in diesem Fall wird vorzugsweise eine Homogenisierungsplatte verwendet, die besonders bevorzugt unmittelbar an den Rohrboden angrenzt. In dieser Ausführungsform unterscheiden sich die beiden Abschnitte nicht und sind beide ausgestaltet wie der erste Abschnitt 313b. Mit anderen Worten haben in dieser Ausführungsform die Kanäle einen konstanten Querschnitt, wobei die Rohre den vollständigen Rohrboden durchdringen und vorzugsweise mit der Seite des Rohrbodens abschließen, die der Zuführungshaube zugewandt ist. Das Zuführungsende entspricht dann der Ebene, die entlang dieser Seite verläuft. Der Rohrboden ist mit den Rohren des Rohrbündels mittels Presssitz, mittels Schweißverbindungen und vorzugsweise mittels beidem verbunden. In dieser Ausführungsform dient der Abschnitt des Rohrbodens, der zusammen mit den entsprechenden Rohrendabschnitten die Kanäle zur Zuführung des Reaktionsgemischs zum Rohrbündel ausbildet, auch der Halterung der Rohre. Diese beiden Funktionen sind hingegen in der Ausführung von Figur 4 aufgeteilt in die Abschnitte 313a und 313b. Die nicht dargestellt Ausführungsform wird bevorzugt mit einer Homogenisierungsplatte kombiniert. Diese Homogenisierungsplatte grenzt unmittelbar an das Zuführungsebene an.

Wieder Bezug nehmend auf die Ausführungsform in Figur 4, ist dort ebenso eine Homogenisierungsplatte an dem Rohrboden angeordnet, die mit dem Bezugszeichen 324 gekennzeichnet ist. Während die Verteilerplatte 322 nicht an die Zuführungshaube 320 bzw. an deren Seitenwand seitlich anstößt oder mit dieser abschließt, ist die Homogenisierungsplatte 324 derart ausgestattet, dass sie abdichtend mit der Zuführungshaube verbunden ist oder zumindest alle Rohrzugänge abdeckt. Es besteht somit keine wesentliche Strömung außerhalb der Homogenisierungsplatte oder an der Aussenkante der Homogenisierungsplatte. Das gesamte zugeführte Gemisch wird durch die Kanäle der Homogenisierungsplatte 324 geleitet. Auf Grund der Poren oder Kanäle der Homogenisierungsplatte 324 ergibt sich somit ein Strömungswiderstand, mit dem die gesamte Fluidströmung beim Durchtritt durch die Homogenisierungsplatte 324 beaufschlagt wird. Dadurch ergibt sich ein gezielter Rückstau im Spalt 327, der dem Druckausgleich entlang des Querschnitts der Zuführungshaube innerhalb des Spalts 327 dient. Zwischen der Homogenisierungsplatte 324 und einem Zuführungsblech 313a kann ein weiterer Spalt 327a vorgesehen sein, der zur weiteren Homogenisierung der Fluidströmung dient, die aus der Homogenisierungsplatte 324 austritt, bevor diese in die Rohre 312 des Rohrbündels eintritt. Vorzugsweise ist jedoch der Spalt nicht vorhanden oder deutlich kleiner als ein Durchmesser eines Kanals des Rohrbodens oder als ein Innendurchmesser eines Rohrs des Rohrbündels. Der zweite Abschnitt 313a des Rohrbodens umfasst Kanäle, an die sich einzelne Rohre anschließen. Insbesondere umfasst der zweite Abschnitt 313a für jedes Rohr exakt einen Kanal, der mit dem Innenquerschnitt des Rohrs ausgerichtet ist. Der Innenquerschnitt des Rohrs umgreift somit vollständig den Querschnitt des Kanals des zweiten Abschnitts 313a am Zuführungsende 314 des Rohrbündels.

Alternativ oder in Kombination hierzu ist der erste Abschnitt 313b des Rohrbodens vorgesehen, in das die Enden der Rohre 312 eingelassen sind. Der Rohrboden ist somit mit den Rohren abdichtend verbunden, wobei der erste Abschnitt 313b und somit auch die Kanäle in Abschnitt 313a abdichtend miteinander und mit den Rohren 312 verbunden sind, und somit das effektive Zuführungsende bis zur Unterseite (der Zuführungshaube zugewandt) des Reaktorbodens verlängern. Dies kann erreicht werden durch die Gewichtskraft, mit der das Rohrbündel auf den Rohrboden 313a, b drückt, vorzugsweise einschliesslich eines Presssitzes und/oder einer Schweißverbindung zwischen Rohr und Reaktorboden. Daher wird der Rohrbündelreaktor vorzugsweise derart ausgerichtet, dass die Längsachse L der Gravitationsrichtung entspricht und die Zuführungshaube das untere Ende des Rohrbündelreaktors darstellt. Der Rohrboden 313a dient zum einen zur Stützung des Rohrbündels und dient ferner gegebenenfalls als Halterung für in den Rohren vorgesehene Körper, beispielsweise Wärmeabgabekörper oder Katalysatorkörper. Vorzugsweise sind in dem Rohrbündel Wärmeabgabekörper vorgesehen, insbesondere wenn der Rohrbündelreaktor mit homogen verteiltem Katalysator oder ohne Katalysator betrieben wird. Insbesondere bei exogenen bzw. stark exogenen Reaktionstypen dienen die in den Rohren vorgesehenen Wärmeabgabekörper dazu, dass Reaktionsvolumen, das heißt das Volumen, in dem sich Reaktionsgemisch innerhalb des Rohrbündels befindet, zu verringern und gleichzeitig die entstehende Reaktionswärme dadurch abzuführen, dass das Reaktionsgemisch direkt an den Wärmeabgabekörpern vorbei geführt wird und die Wärmeabgabekörper durch Kontakt mit den Rohrinnenwänden der Rohre 312 oder durch Befestigung mit den Innenwänden der Rohre 312 die Wärme an die Rohrwände und somit an das Temperierungsmedium abgeben kann, das um die äußeren Rohrwände der Rohre 312 herumgeführt wird. Dadurch wird zum einen die erzeugte Reaktionswärme bezogen auf das zugehörige Volumen reduziert, indem die Wärmeabgabekörper Raum einnehmen, in dem keine Reaktion stattfindet, und zum anderen wird die Reaktionswärme zusätzlich abgeführt, da das Reaktionsgemisch nicht nur über die Rohre sondern auch über die Wärmeabgabekörper bzw. deren Oberfläche Reaktionswärme abgeben. Insbesondere wird im stationären Betrieb die Quervermischung der Strömung gezielt erhöht, wodurch eine gewünschte Strömungsgeschwindigkeitsverteilung über den Strömungsquerschnitt ergibt. Durch die Quervermischung erhöht sich der äußere Wärmeübergang. Bei Störungen wie beispielsweise Pumpenausfall im Reaktionsgemisch-Kreislauf (Energieausfall) nehmen die Formkörper wegen der hohen Wärmekapazität viel Wärme auf und verhindern eine unerwünscht starke Erwärmung des Reaktionsgemischs, die sich durch mangelnde Wärmeabfuhr (aufgrund erhöhter Verweilzeit) ergibt. Der Querschnitt der Kanäle bzw. Durchführungen innerhalb des Rohrbodens 313a, b ist vorzugsweise derart vorgesehen, dass dieser kleiner als der kleinste Querschnitt der Wärmeabgabekörper ist, um zu vermeiden, dass die Wärmeabgabekörper durch den Rohrboden 313a, b hindurch in die Zuführungshaube 320 gelangen. Hierzu kann auch ein Sieb an dem Rohrbündel angeordnet sein, das die Wärmeabgabekörper in dem Rohrbündel zurückhält. Die Funktion des Siebs kann von der Homogenisierungsplatte realisiert werden, die dann vorzugsweise unmittelbar an das Zuführungsendes des Rohrbündels bzw. an den Rohrboden angrenzt. Anstatt Wärmeabgabeelemente oder in Kombination damit können Katalysatorkörper innerhalb der Rohre vorgesehen werden, um zusätzliche Katalysatoroberfläche für das Reaktionsgemisch vorzusehen. In den Rohren können Raschig-Ringe als Wärmeabgabekörper vorgesehen sein. Ferner kann das Rohrbündel am Zuführungsende Blendenelemente zur Verringerung des inneren Querschnitts der Rohre aufweisen. Diese haben den gleichen Zweck wie eine Homogenisierungsplatte und die dünneren Kanäle im zweiten Abschnitt 313a. Da die Wärmeabgabekörper neben Wärme bezogenen Effekten insbesondere Strömungseffekte (Vermischung) hervorrufen und das Volumen in den Rohren gezielt künstlich verringern, können die Wärmeabgabekörper auch als Vermischungskörper oder als Platzhalterkörper bezeichnet werden.

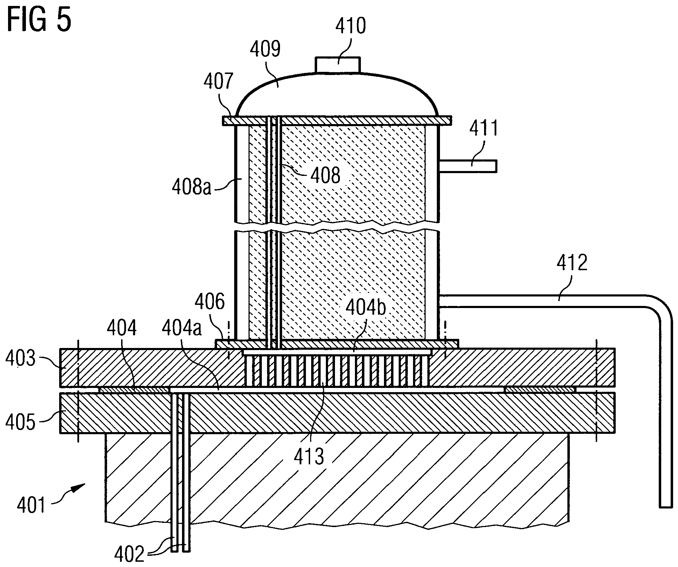

Die Figur 5 zeigt das Abgabeende eines erfindungsgemäßen Rohrbündelreaktors im Detail mit einem Wärmetauscher. Die Figur 5 zeigt das obere Ende eines Rohrbündelreaktors 401 an der Abgabeseite. Von dem Rohrbündel des Rohrbündelreaktors sind exemplarisch Rohre 402 dargestellt. Der Rohrbündelreaktor umfasst eine Abgabehaube, die durch die Stirnseite des Rohrbodens 405, in den die Rohre 402 eingelassen sind, den Ring 404 und den Haubenabschnitt 403 gebildet wird. Diese können einteilig ausgeführt sein (nicht dargestellt) oder können wie dargestellt zweiteilig ausgeführt und miteinander verbunden sein. Der Haubenabschnitt 403 bildet zusammen mit dem Ring 404 einen schmalen Spalt 404a, in den die Rohre 402 das Produktgemisch einleiten. Der Rohrboden 405 des Reaktors an der Austrittsseite des Reaktors ist über eine Flanschverbindung mit dem Ring und dem Haubenabschnitt 403 verbunden. Die Flanschverbindung umfasst ferner eine Schraubverbindung (nicht dargestellt), deren Erstreckung mit gestrichelten Linien an den Rändern des Haubenabschnitts 403 und des Rohrbodens 405 dargestellt sind. Der in Figur 5 dargestellte Reaktor umfasst ferner Verbindungsbohrungen 413, die den Spalt 404a mit einem Spalt 404b verbinden, der zwischen der Stirnseite des Haubenabschnitts, der vom Reaktor abgewandt ist, und einem Rohrboden 406 eines Wärmetauschers ausgebildet ist. Der eintrittsseitige Rohrboden 405 ist über Flanschverbindungen mit dem Haubenabschnitt 403 verbunden, wobei die Erstreckung der zugehörigen Schraubverbindungen gestrichelt an den Außenrändem des eintrittsseitigen Rohrbodens des Wärmetauschers dargestellt ist.

Der Wärmetauscher umfasst Wärmetauscherrohre 408, von denen in Figur 5 exemplarisch lediglich 2 dargestellt sind. Über den eintrittsseitigen Rohrboden 406 des Wärmetauschers, in den die Wärmetauscherrohre eingelassen sind, tritt das vom Reaktor abgegebene Produktgemisch in die Wärmetauscherrohre 408 hinein. Das durch die Wärmetauscherrohre 408 gebildete Rohrbündel ist innerhalb eines Wärmetauschermantels 408a angeordnet, in dem Temperierungsfluid, d.h. ein Medium für Wärme, eines Temperierungskreislaufs vorhanden ist. Der Wärmetauscher umfasst somit einen Eingang 411 eines sekundären Kühlkreislaufs, sowie einen Ausgang 412 eines sekundären Kühlkreislaufs, der mit einem primären Kühlkreislauf verbunden ist, der durch die Wärmetauscherrohre 408 tritt. Um Gegenstrombetrieb zu erreichen, ist der Eingang 411 an dem Ende des Wärmetauschers angeordnet, das von der Abgabehaube entfernt angeordnet ist, und der Ausgang 412 ist an dem Ende des Wärmetauschers angeordnet, das an der Abgabehaube angeordnet ist. In einer besonders bevorzugten Ausführungsform wird durch den Eingang 411 des sekundären Kühlkreislaufs ein Eduktstrom geleitet, der aus dem Ausgang 412 des sekundären Kühlkreislaufs austritt und zu der Zuführungshaube des Reaktors 401 geführt wird. Somit wird ein Wärmeaustausch zwischen dem Reaktionsgemisch, das in die Zuführungshaube eingeleitet wird, und dem Fluidgemisch, das von der Abgabehaube abgegeben wird, vorgesehen. Gemäß einer weiteren Ausführungsform wird nicht der gesamte Eduktstrom durch den sekundären Kühlkreislauf geleitet, sondern ein regelbarer Anteil, wobei durch die Steuerung des Anteils des Eduktstroms, der durch den sekundären Kühlkreislauf geführt wird, bezogen auf den Anteil, der unmittelbar in die Zuführungshaube eingeführt wird, die Temperierung des gesamten Reaktionsprozesses geregelt wird. Somit lässt sich der Eduktstrom 411 (am Eingang 411), der beispielsweise kalt vorgesehen wird, vorwärmen, wobei der Ausgang des vorgewärmten Eduktstroms 412 (am Ausgang 412) mit der Zuführung des Reaktors unmittelbar oder beispielsweise über einen Mischer verbunden ist.

Der Wärmetauscher des Reaktors von Figur 5 umfasst ferner einen weiteren Rohrboden, der an der Austrittsseite des Wärmetauschers vorgesehen ist. Daran schließt sich eine austrittsseitige Haube 409 des Wärmetauschers an, in der der Produktstrom bzw. das Produktgemisch, welches durch die Wärmetauscherrohre 408 geführt wurde, gesammelt wird. An die austrittsseitige Haube des Wärmetauschers 409 schließt sich ein Ausgang für das gekühlte Produkt 410 an, aus dem der gekühlte Produktstrom austritt und beispielsweise einer weiteren Verarbeitungsstufe oder einer Abfüllvorrichtung zugeführt werden kann. Der in Figur 5 dargestellte Wärmetauscher sorgt somit für den Wärmeübergang von Produktstrom zum Eduktstrom, wobei Reaktionswärme, die im dem Produktstrom vorhanden ist, an den Eduktstrom abgeführt wird, um diesen vorzuwärmen. Durch das Vorwärmen wird zum einen ein geringerer Temperaturgradient innerhalb des Reaktors erreicht und zum anderen wird das dem Reaktor zuzuführende Reaktionsgemisch bereits auf einen geeigneten Betriebspunkt gebracht. Das Abführen der Reaktionswärme bereits direkt am Abgabeende des Reaktors durch den Wärmetauscher hat ferner den Vorteil, dass das Produktgemisch sofort beim Austritt aus dem Reaktor auf unkritischere Temperaturen abgekühlt wird. Umfasst wie bei der Umsetzung von Cyclododecatrien mit Distickstoffmonoxid das aus dem Reaktor austretende Gemisch Substanzen, mit unerwünschten Folgereaktionen, so kann durch die Kühlung erreicht werden, dass unerwünschte Folgereaktionen in der Abgabehaube durch das geringe Innenvolumen der Abgabehaube im wesentlichen unterdrückt werden und im abgegebenen Gemischstrom Folgereaktionen dadurch unterdrückt werden, dass dieser sofort nach Austritt aus der Abgabehaube durch den dort vorgesehenen Wärmetauscher gekühlt wird. Ferner wird durch den in Figur 5 dargestellten Aufbau, bei dem der eintrittsseitige Rohrboden des Wärmetauschers direkt auf dem Haubenabschnitt 403 aufliegt, eine schnelle Kühlung des austretenden Produktstroms erreicht, da der Haubenabschnitt 403 vom eintrittsseitigen Rohrboden des Wärmetauschers 406 gekühlt wird. Somit tritt auch innerhalb der Verbindungsbohrungen 413 nur bedingt eine Folgereaktion auf, da dort bereits über den Wärmetauscher temperiert bzw. gekühlt wird. Wie bereits bemerkt kann anstatt der Kühlung mittels kaltem zugeführten Eduktstrom auch ein Temperiermedium in den Wärmetauscher über den sekundären Kühlkreislauf eingeführt werden, wenn die Edukte bereits vorgewärmt vorliegen und somit nicht zur ausreichenden Kühlung geeignet sind.

Das erfindungsgemäße Verfahren, bei dem das aus dem Reaktor austretende Produktgemisch unmittelbar gekühlt wird, vorzugsweise durch Wärmekopplung mit kühlem Eduktgemisch, so wie die Vorrichtung von Figur 5, bei der der Wärmetauscher, der die Kühlung vorsieht, unmittelbar auf der Abgabehaube vorgesehen ist, eignet sich insbesondere für Umsetzungen, bei denen ein Eduktgemisch zumindest eine Komponente enthält, die nicht vollständig umgesetzt wird, und die auch nach Durchlaufen des Rohrbündels des Reaktors noch Folgereaktionen hervorrufen kann. Dies ist insbesondere bei der Umsetzung von Cyclododecatrien mit Distickstoffmonoxid im Rohrbündelreaktor der Fall, bei dem das Cyclododecatrien innerhalb des Reaktionsgemischs nicht vollständig umgesetzt wird, beispielsweise nur zu 30 % oder weniger. Da das verbleibende Cyclododecatrien, das innerhalb des Produktstroms durch die unvollständige Umsetzung verbleibt, kann Folgereaktionen insbesondere bei höheren Temperaturen hervorrufen, die die Selektivität des Zielprodukts deutlich verringern. Wird jedoch erfindungsgemäß das austretende Produktgemisch unmittelbar gekühlt, so werden diese Folgereaktionen deutlich verringert. Ferner kann das Zielprodukt Cyclododecadienon, welches im Produktgemisch vorliegt, mit weiterem Distickstoffmonoxid zu Diketonen weiter reagieren, wodurch die Selektivität ebenso verringert wird. Da diese unerwünschte Reaktion temperaturabhängig ist, lässt sie sich durch die unmittelbare Kühlung des austretenden Produktgemischs weitgehend unterdrücken. Insbesondere bei der Umsetzung von Cyclododecatrien mit Distickstoffmonoxid zu Cyclododecadienon und Stickstoff lassen sich unerwünschte Nebenreaktionen, Folgereaktionen und unerwünschte Produkte durch gezielte Temperatursteuerung in der Zuführungshaube, in der Abgabehaube und in der folgenden Produktstromführung verringern. Dies wird erreicht durch ein geringes Volumen innerhalb der Zuführungshaube, innerhalb der Abgabehaube sowie durch die unmittelbare Kühlung des vom Reaktor abgegebenen Produktstroms. Dadurch wird die Reaktion im Wesentlichen auf das Rohrbündel eingeschränkt, so dass nur sehr geringe Mengen an Gemisch außerhalb vom Rohrbündel vorliegen (das heißt innerhalb der Zuführungshaube, der Abgabehaube und innerhalb des abgegebenen Produktstroms) das einen anderen Betriebspunkt aufweist und insbesondere durch die entstehende Reaktionswärme gegebenenfalls unerwünschte Folgeprodukte erzeugt.

Das Reaktionsgemisch in der Zuführungshaube, in dem Rohrbündel und vorzugsweise auch in der Abgabehaube liegt vorzugsweise in flüssiger Phase oder mit einem geringen Anteil in Gasphase vor. Insbesondere liegt das Reaktionsgemisch in der Zuführungshaube und in dem Rohrbündel im Wesentlichen in Flüssigphase vor, während das Reaktionsgemisch innerhalb der Abgabehaube in Flüssigphase und mit einem maximalen Anteil von 20 %, 10 %, 5 %, 2 %, 1 %, 0,5 % oder 0,1 % des Reaktorvolumens (= Haubenvolumen + Volumen des Rohrbündel) in Gasphase vorliegt. In diesem Kontext soll auch in Flüssigkeit vollständig gelöstes Gas sowie verflüssigtes Gasgemisch als Flüssigphase gelten.

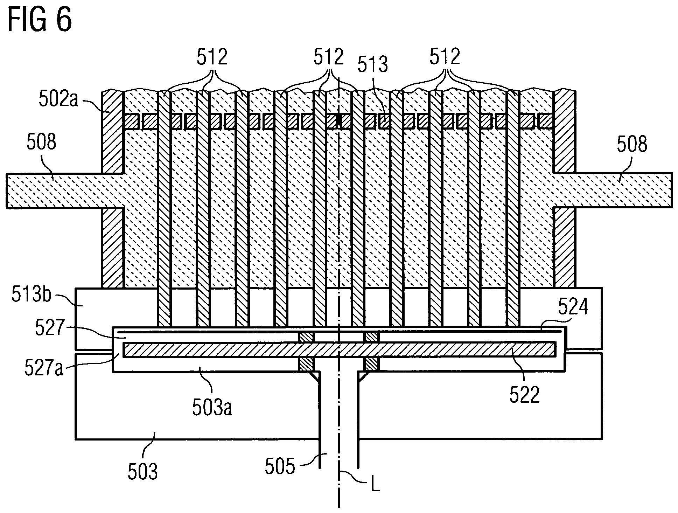

Die Figur 6 zeigt eine weitere Ausführung des erfindungsgemäßen Rohrbündelreaktors, wobei die Zuführungsseite im Detail dargestellt ist. Der Rohrbündelreaktor umfasst eine Zuführungshaube 503 mit einem Zulauf 505, der entlang der Längsachse L des Reaktors verläuft. Der Reaktor umfasst ferner einen Rohrboden 513b, in dem die Rohre 512 des Rohrbündels eingelassen sind. Zusammen mit der Zuführungshaube 503 bildet somit der Rohrboden 513b einen Innenraum 503a der Zuführungshaube aus. Als Innenraum gilt der gesamte Raum zwischen Zuführungsende der Rohre 512 und der entgegengesetzten inneren Stirnfläche der Reaktorhaube 503. Ein Teil des Innenvolumens wird somit vom Reaktorboden 513b vorgesehen, der einen sich zur Abgabehaube hin erstreckenden Ring umfasst, dessen innerer Querschnitt zum Innenraum beiträgt. Innerhalb des Innenraums ist ferner eine Umlenkungsvorrichtung vorgesehen, die eine Verteilerplatte 522 und ein Homogenisierungsblech 524 umfasst. Dadurch werden drei Spalte vorgesehen, die jeweils einen freien, vollständigen Querschnitt aufweisen, der sich über den gesamten Innenraum erstreckt. Die Spalte sind zwischen Verteilerplatte 522 und innere Stirnseite der Abgabehaube 503 vorgesehen, die dem Zuführungsende der Rohre gegenüberliegt. Ein weiterer über den gesamten Querschnitt durchgängiger Spalt ist zwischen Verteilerplatte 522 und Homogenisierungsplatte 524 vorgesehen, wobei der dritte Spalt zwischen Homogenisierungsplatte und Stirnseite des Rohrbündels, das heißt zwischen der Homogenisierungsplatte 524 und dem Zuführungsende der Rohre 512 vorgesehen ist. In der Höhe der Verteilerplatte 522 ist der Querschnitt auf einen schmalen Spalt, der zwischen Außenrand der Verteilerplatte 522 und Innenseite der Verteilerhaube vorgesehen ist, definiert.

Das in den Zufluss 505 strömende Gemisch wird somit über den ersten Spalt zwischen Verteilerplatte 522 und innere Stirnseite der Reaktorhaube 503 radial nach außen geleitet, durchläuft den Ringspalt zwischen Innenwand der Zuführungshaube und Außenrand der Verteilerplatte 522, so dass der Fluidstrom die Form eines Rings aufweist, der einen schmalen Rand hat, bevor das Gemisch in den Spalt zwischen Verteilerplatte 522 und Homogenisierungsplatte 524 eintritt. In diesem Spalt sammelt sich der Fluidstrom wieder über die gesamte Querschnittsfläche, so dass der Fluidstrom einen Querschnitt aufweist, der einem Kreis in der Form des Innenraumquerschnitts entspricht. Der Spalt zwischen Verteilerplatte und Homogenisierungsplatte 527 dient der gleichmäßigen Verteilung der Strömung, da die Homogenisierungsplatte 524 die Strömung gezielt aufstaut. Der Ringspalt 527a zwischen Verteilerplatte und Innenwand der Zuführungshaube 503 dient der Aufspreizung des Strömungsquerschnitts ausgehend vom Strömungsquerschnitt in der Zuführung 505. Die Zuführungshaube umfasst ferner Befestigungselemente, die die Verteilerplatte 512 mit der inneren Stirnseite der Zuführungshaube 503, die dem Zuführungsende der Rohre 512 entgegengesetzt ist, verbindet, wobei die Befestigungselemente ferner die Homogenisierungsplatte mit einem bestimmten Abstand zur Verteilerplatte 522 fixieren, um somit die Höhe des Spalts 527 zu definieren, wobei ferner durch die Verbindung mit der Zuführungshaube 503 die Homogenisierungsplatte 524 an der Zuführungshaube befestigt wird. Vorzugsweise wird kein Spalt zwischen Homogenisierungsplatte und innere Seitenwand der Zuführungshaube 503 vorgesehen, wobei in anderen Ausführungsformen ein geringfügiger Spalt vorgesehen sein kann, der jedoch kleiner ist als die Breite des Spalts 527a und vorzugsweise weniger als 50 %, 30 %, 20 % oder 10 % der Spaltbreite des Ringspalts 527a beträgt, der zwischen Außenrand der Verteilerplatte 522 und innere Seitenwand der Zuführungshaube vorgesehen ist.

Die in Figur 6 dargestellte Ausführung des erfindungsgemäßen Rohrbündelreaktors umfasst ferner Eingangsstutzen 508 für Kühlwasser, vorzugsweise um den Umfang der Reaktorwand 502a verteilte Stutzen, in der Nähe des Zuführungsendes der Rohre 512, um dem Inneren des Reaktors Temperierungsmedium zuzuführen. Der Reaktor umfasst ferner auf der Abgabeseite gleiche Stutzen (nicht dargestellt), die zur Abgabe des Temperierungsmediums aus dem inneren des Reaktors dienen. Der Reaktor umfasst ferner ein Lochblech 513, durch das sich hindurch die Rohre 512 erstrecken, und das ferner zwischen den Rohren vorgesehene axiale Kanäle umfasst, durch die Temperierungsmedium zum Abgabeende hin und insbesondere zu den Abgabestutzen (nicht dargestellt) geführt wird.

In einer bevorzugten Ausführungsform umfasst der Reaktor ca. 2500 oder ca. 1600 Rohre. Der Spalt 527 zwischen Verteilerplatte 522 und Homogenisierungsplatte 524 hat gemäß einem Beispiel eine Höhe von 25 mm ± 4 mm, und der Kanal zwischen der Verteilerplatte 522 und der inneren Stirnseite der Zuführungshaube 503 an der Zuführung 505 weist eine Höhe von 25 mm auf und einen Durchmesser von 700 mm oder 550 mm. Der Innenraum 503a ist vorzugsweise als Kreiszylinder ausgebildet mit einer Längsachse, die der Längsachse L des Rohrbündelreaktors entspricht. Die Verteilerplatte 522 weist eine Dicke von 30 mm auf, wobei der Abstand zwischen Außenrand der Verteilerplatte 522 und der inneren Seitenwand der Zuführungshaube 503 15 mm beträgt. Dadurch ergibt sich in der Höhe der Verteilerplatte ein Strömungsquerschnitt in der Form eines Hohlzylinders mit einer Länge von 30 mm und einer Dicke (= radialer Abstand zwischen Innen- und Außenzylinder) von 15 mm.

## Patentansprüche

1. Rohrbündelreaktor mit einem Rohrbündel, das ein Zuführungsende aufweist, das mit einer Zuführungshaube des Rohrbündelreaktors verbunden ist, wobei die Zuführungshaube in einer flachen Bauform mit einer Querschnittsfläche am Zuführungsende und einem Innenvolumen ausgestaltet ist, und das Verhältnis von Innenvolumen zu Querschnittsfläche am Zuführungsende des Rohrbündels kleiner ist als 0,35 m, wobei das Innenvolumen das von der Masse des Reaktionsgemischs innerhalb der Zuführungshaube eingenommene Volumen kennzeichnet, wobei die Zuführungshaube mindestens ein Eintrittsloch an einem dem Rohrbündel gegenüberliegenden Ende aufweist, wobei die flache Bauform einen Querschnittsflächenzuwachs von einer Querschnittsfläche des mindestens einen Eintrittslochs zu der Querschnittsfläche der Zuführungshaube am Zuführungsende des Rohrbündels entlang einer Längsachse des Rohrbündelreaktors von mindestens 1 %/mm aufweist, und wobei ein Verhältnis eines Maximalabstands, der eine maximale Haubenhöhe zwischen einer Haubendecke und dem Zuführungsende des Rohrbündels ist und zwischen einer Innenfläche der Zuführungshaube und dem Zuführungsende des Rohrbündels gemessen wird, zu der Querschnittsfläche am Zuführungsende des Rohrbündels ≤ 0,15m⁻¹ ist.

2. Rohrbündelreaktor nach Anspruch 1, wobei zumindest ein Abschnitt des Innenvolumen der Zuführungshaube, das an dem Zuführungsende angeordnet ist, in der Form eines Zylinder, eines Kreiszylinder, eines Hohlzylinder oder eines Hohlzylinder mit kreisförmigem Innen- und Außenquerschnitt ausgestaltet ist.

3. Rohrbündelreaktor nach Anspruch 1 oder 2, wobei innerhalb des Innenvolumens der Zuführungshaube eine Umlenkungsvorrichtung vorgesehen ist, die zwischen einem Zuführungsanschluss der Zuführungshaube und dem Zuführungsende des Rohrbündels angeordnet ist, um zumindest Teile eines vom Zuführungsanschluss in die Zuführungshaube strömenden Fluidstroms radial nach außen zu lenken, bevor der Fluidstrom in das Zuführungsende eintritt.

4. Rohrbündelreaktor nach Anspruch 3, wobei die Umlenkungsvorrichtung eine Verteilerplatte umfasst, deren Querschnitt kleiner als der des Innenvolumens an dem Zuführungsende ist, um einen Kanal auszubilden, der innerhalb des Innenvolumens am äußeren Rand der Platte in axialer Richtung der Platte und um den Außenrand der Verteilerplatte herum verläuft, und die Umlenkungsvorrichtung ferner eine Homogenisierungsplatte mit einer Vielzahl von durch diese hindurch verlaufenden Kanälen umfasst, wobei die Homogenisierungsplatte zwischen der Verteilerplatte und dem Zuführungsende angeordnet ist und die Verteilerplatte einen freien Abschnitt des Innenvolumens zwischen dem Zuführungsanschluss und der Homogenisierungsplatte räumlich unterteilt.

5. Rohrbündelreaktor nach Anspruch 3 oder 4, wobei sich die Verteilervorrichtung zwischen dem Zuführungsende des Rohrbündels und dem Zuführungsanschluss der Zuführungshaube erstreckt und das gesamte Zuführungsende gegenüber dem aus dem Zuführungsanschluss austretenden Fluidstrom abdeckt, um das Zuführungsende gegenüber einer direkten axialen Fluidströmung vom Zuführungsanschluss durch Umlenken des Fluidstroms im wesentlichen vollständig abzudecken.

6. Rohrbündelreaktor nach einem der vorangehenden Ansprüche mit mehreren Zuführungskanälen, die mehrere Eintrittslöcher versorgen, welche in einer Wand der Zuführungshaube vorgesehen sind und in das Innenvolumen hinein führen, wobei zumindest ein Eintrittsloch außerhalb einer Mittenachse des Zuführungsendes angeordnet ist oder alle Eintrittslöcher gleichmäßig um die Mittenachse herum entlang eines Kreises oder innerhalb eines Ringes angeordnet sind.

7. Rohrbündelreaktor nach Anspruch 6, wobei die Eintrittslöcher zu Längsachsen von Rohren des Rohrbündelreaktors versetzt sind und die Mitte jedes Eintrittslochs den maximalen Abstand zu den nächstliegenden Längsachsen der Rohre aufweist.

8. Rohrbündelreaktor nach Anspruch 6 oder 7, wobei die Zuführungskanäle von sich aufteilenden Rohren vorgesehen werden, die eine Y-Aufteilung umfassen, die an zwei der Eintrittslöcher angeschlossen ist, oder die an eine weitere Y-Aufteilung angeschlossen ist.

9. Rohrbündelreaktor nach einem der vorangehenden Ansprüche, wobei das Rohrbündel ein dem Zuführungsende entgegengesetzten Abgabeende aufweist, das mit einer Abgabehaube des Rohrbündelreaktors verbunden ist, wobei die Abgabehaube in einer flachen Bauform mit einer Querschnittsfläche am Abgabeende und einem Innenvolumen ausgestaltet ist, und das Verhältnis von Innenvolumen zu Querschnittsfläche der Abgabehaube kleiner ist als 0,35 m.

10. Verfahren zum Betreiben eines Rohrbündelreaktors, umfassend: Einleiten eines Eduktgemischs in ein Rohrbündel und Umsetzen zumindest eines Anteils des Eduktgemischs innerhalb des Rohrbündels zu einem Produkt, wobei das Einleiten umfasst: Zuführen des Eduktgemischs in einen Innenraum einer Zuführungshaube des Rohrbündelreaktors und Weiterleiten des Eduktgemischs in ein Zuführungsende des Rohrbündels in Form eines Fluidstroms, wobei der Fluidstrom eine Querschnittsfläche beim Eintritt in das Zuführungsende und der Innenraum der Zuführungshaube, durch die der Fluidstroms fließt, ein Innenvolumen aufweist; und das Verhältnis von Innenvolumen zu Querschnittsfläche am Zuführungsende des Rohrbündels kleiner ist als 0,35 m, wobei das Innenvolumen das von der Masse des Reaktionsgemischs innerhalb der Zuführungshaube eingenommene Volumen kennzeichnet, wobei die Zuführungshaube mindestens ein Eintrittsloch an einem dem Rohrbündel gegenüberliegenden Ende aufweist, wobei die flache Bauform einen Querschnittsflächenzuwachs von einer Querschnittsfläche des mindestens einen Eintrittslochs zu der Querschnittsfläche der Zuführungshaube am Zuführungsende des Rohrbündels entlang einer Längsachse des Rohrbündelreaktors von mindestens 1 %/mm aufweist, und wobei ein Verhältnis eines Maximalabstands, der eine maximale Haubenhöhe zwischen einer Haubendecke und dem Zuführungsende des Rohrbündels ist und zwischen einer Innenfläche der Zuführungshaube und dem Zuführungsende des Rohrbündels gemessen wird, zu der Querschnittsfläche am Zuführungsende des Rohrbündel ≤ 0,15m⁻¹ ist.

11. Verfahren nach Anspruch 10, wobei das Einleiten umfasst: Einleiten des Fluidstroms mit einer durchgehenden Querschnittsfläche; und das Weiterleiten des Fluidstroms innerhalb der Zuführungshaube umfasst: Aufspreizen des eingeleiteten Fluidstroms; Umlenken des aufgespreizten Fluidstroms zum Zuführungsende hin; Führen des umgelenkten Fluidstroms in Form eines Hohlzylinders, und Zusammenführen des Fluidstroms zu einem Zusammenführungs-Fluidstroms mit einem durchgehenden Querschnitt; und Einleiten des Zusammenführungs-Fluidstroms in das Zuführungsende des Rohrbündels.

12. Verfahren nach Anspruch 11, wobei das Einleiten des Zusammenführungs-Fluidstroms in das Zuführungsende des Rohrbündels umfasst: Führen des Zusammenführungs-Fluidstroms durch eine Vielzahl von Kanälen einer Homogenisierungsplatte, die an dem Zuführungsende angeordnet ist.

13. Verfahren nach Anspruch 11 oder 12, wobei der umgelenkte Fluidstrom, der in Form eines Hohlzylinders vorgesehen ist, einen inneren Querschnitt aufweist, der dem inneren Querschnitt des Hohlzylinders entspricht, und in dem im wesentlichen keine Strömung vorgesehen ist, und der innere Querschnitt des umgelenkten Fluidstroms im wesentlichen den gesamten Querschnitt des Zuführungsendes gegenüber dem eingeleiteten Fluidstrom abdeckt.

14. Verfahren nach einem der Ansprüche 10 - 13, wobei das Zuführen des Eduktgemischs umfasst: Aufteilen eines Zuführungsstroms des Eduktgemischs in mehrere Zuführungsströme, die jeweils durch einen von mehreren Kanälen geführt werden, bevor die Zuführungsströme in den Innenraum an zueinander beabstandeten Eintrittsstellen in den Innenraum eintreten, und mindestens eine oder alle Eintrittsstellen außerhalb der Mittenachse des Zuführungsendes des Rohrbündels liegen, oder alle Eintrittsstellen gleichmäßig um die Mittenachse des Zuführungsendes des Rohrbündels herum entlang eines Kreises oder innerhalb eines Ringes angeordnet sind.

15. Verfahren nach Anspruch 14, wobei die Eintrittsstellen zu Längsachsen von Rohren des Rohrbündelreaktors versetzt sind und die Mitte jeder Eintrittsstelle den maximalen Abstand zu den nächstliegenden Längsachsen der Rohre aufweist.

16. Verfahren nach Anspruch 13 oder 14, wobei das Aufteilen in mehrere Zuführungsströme durch Führen des Eduktgemischs durch sich aufteilende Rohre vorgesehen wird, und das Führen des Eduktgemischs das Leiten des Eduktgemischs durch eine Y-Aufteilung umfasst, die zwei Eintrittsstellen mit Eduktgemisch versorgt, oder die eine weitere Y-Aufteilung mit Eduktgemisch versorgt.

17. Verfahren nach einem der Ansprüche 10 - 16, das ferner ein Schritt des Abgebens des Produkts aus dem Rohrbündel umfasst, wobei das Produkt an einem Abgabeende des Rohrbündels, das dem Zuführungsende entgegengesetzt ist, aus dem Rohrbündel in Form eines Fluidstroms in einen Innenraum einer Abgabehaube des Rohrbündelreaktors geleitet wird, wobei der Fluidstrom beim Austritt aus dem Abgabeende eine Querschnittsfläche und der Innenraum der Abgabehaube, durch die der Fluidstroms fließt, ein Innenvolumen aufweist; und das Verhältnis von Innenvolumen Abgabehaube zu Querschnittsfläche des Fluidstroms am Abgabeende kleiner ist als 0,35 m.

## Claims

1. A tube bundle reactor comprising a tube bundle which has a feed end which is connected to a feed hood of the tube bundle reactor, wherein the feed hood is configured in a flat design with a cross-sectional area at the feed end and an internal volume, and the ratio of internal volume to cross-sectional area at the feed end of the tube bundle is less than 0.35 m, where the internal volume characterizes the volume occupied by the mass of the reaction mixture within the feed hood, where the feed hood has at least one entry hole at an opposite end from the tube bundle, where the flat design has an increase in cross-sectional area from a cross-sectional area of the at least one entry hole to the cross-sectional area of the feed hood at the feed end of the tube bundle along a longitudinal axis of the tube bundle reactor of at least 1%/mm, and where a ratio of a maximum distance, which is a maximum hood height between a hood cover and the feed end of the tube bundle and is measured between an inner surface of the feed hood and the feed end of the tube bundle, to the cross-sectional area at the feed end of the tube bundle is ≤ 0.15 m⁻¹.

2. The tube bundle reactor according to claim 1, wherein at least a section of the internal volume of the feed hood arranged at the feed end is configured in the form of a cylinder, of a circular cylinder, of a hollow cylinder or of a hollow cylinder with circular internal and external cross sections.

3. The tube bundle reactor according to claim 1 or 2, wherein a deflecting device arranged between a feed connection of the feed hood and the feed end of the tube bundle is provided within the internal volume of the feed hood, in order to deflect at least portions of a fluid stream flowing from the feed connection into the feed hood radially outward before the fluid stream enters the feed end.

4. The tube bundle reactor according to claim 3, wherein the deflecting device comprises a distributor plate whose cross section is less than that of the internal volume at the feed end, in order to form a channel which runs within the internal volume at the outer edge of the plate in axial direction of the plate and around the outer edge of the distributor plate, and the deflecting device also comprises a homogenizing plate with a multitude of channels running through it, the homogenizing plate being arranged between the distributor plate and the feed end, and the distributor plate spatially dividing an empty section of the internal volume between the feed connection and the homogenizing plate.

5. The tube bundle reactor according to claim 3 or 4, wherein the distributor device extends between the feed end of the tube bundle and the feed connection of the feed hood, and covers the entire feed end with respect to the fluid stream flowing out of the feed connection, in order to cover the feed end essentially completely with respect to a direct axial fluid flow from the feed connection by deflecting the fluid stream.

6. The tube bundle reactor according to any one of the preceding claims with a plurality of feed channels which supply a plurality of entry holes which are provided in a wall of the feed hood and lead into the inner volume, at least one entry hole being arranged outside a central axis of the feed end, or all entry holes being arranged homogeneously around the central axis along a circle or within a ring.

7. The tube bundle reactor according to claim 6, wherein the entry holes are offset from longitudinal axes of tubes of the tube bundle reactor and the middle of each entry hole has the maximum distance from the closest longitudinal axes of the tubes.

8. The tube bundle reactor according to claim 6 or 7, wherein the feed channels are provided by dividing tubes which comprise a Y division which is attached to two of the entry holes or which is attached to a further Y division.

9. The tube bundle reactor according to any one of the preceding claims, wherein the tube bundle has a release end which is at the opposite end to the feed end and is connected to a release hood of the tube bundle reactor, the release hood being configured in a flat design with a cross-sectional area at the release end and an internal volume, and the ratio of internal volume to cross-sectional area of the release end is less than 0.35 m.

10. A process for operating a tube bundle reactor, comprising: introducing a reactant mixture into a tube bundle and converting at least a proportion of the reactant mixture within the tube bundle to a product, wherein the introducing comprises: feeding the reactant mixture into an interior of a feed hood of the tube bundle reactor and passing the reactant mixture on into a feed end of the tube bundle in the form of a fluid stream, the fluid stream having a cross-sectional area on entry into the feed end and the interior of the feed hood through which the fluid stream flows having an internal volume; and the ratio of internal volume to cross-sectional area at the feed end of the tube bundle being less than 0.35 m, where the internal volume characterizes the volume occupied by the mass of the reaction mixture within the feed hood, where the feed hood has at least one entry hole at an opposite end from the tube bundle, where the flat design has an increase in cross-sectional area from a cross-sectional area of the at least one entry hole to the cross-sectional area of the feed hood at the feed end of the tube bundle along a longitudinal axis of the tube bundle reactor of at least 1%/mm, and where a ratio of a maximum distance, which is a maximum hood height between a hood cover and the feed end of the tube bundle and is measured between an inner surface of the feed hood and the feed end of the tube bundle, to the cross-sectional area at the feed end of the tube bundle is ≤ 0.15 m⁻¹.

11. The process according to claim 10, wherein the introducing step comprises: introducing the fluid stream with a constant cross-sectional area; and the passing-on of the fluid stream within the feed hood comprises: spreading application of the fluid stream introduced; deflecting the spread fluid stream toward the feed end; conducting the deflected fluid stream in the form of a hollow cylinder, and combining the fluid stream to give a combined fluid stream with a constant cross section; and introducing the combined fluid stream into the feed end of the tube bundle.

12. The process according to claim 11, wherein the introduction of the combined fluid stream into the feed end of the tube bundle comprises: conducting the combined fluid stream through a multitude of channels of a homogenizing plate which is arranged at the feed end.

13. The process according to claim 11 or 12, wherein the deflected fluid stream provided in the form of a hollow cylinder has an internal cross section which corresponds to the internal cross section of the hollow cylinder, and within which essentially no flow is provided, and the internal cross section of the deflected fluid stream covers essentially the entire cross section of the feed end with respect to the fluid stream introduced.

14. The process according to any one of claims 10-13, wherein the feeding of the reactant mixture comprises: dividing a feed stream of the reactant mixture into a plurality of feed streams which are each conducted through one of a plurality of channels before the feed streams enter the interior at entry sites into the interior spaced apart, and at least one entry site or all entry sites are outside the central axis of the feed end of the tube bundle, or all entry sites are arranged homogeneously around the central axis of the feed end of the tube bundle along a circle or within a ring.

15. The process according to claim 14, wherein the entry sites are offset from longitudinal axes of tubes of the tube bundle reactor, and the center of each entry site has the maximum distance from the closest longitudinal axes of the tubes.

16. The process according to claim 13 or 14, wherein the division into a plurality of feed streams is provided by conducting the reactant mixture through dividing tubes, and the conducting of the reactant mixture comprises the passing of the reactant mixture through a Y division which supplies two entry sites with reactant mixture, or which supplies a further Y division with reactant mixture.

17. The process according to any one of claims 10-16, which further comprises a step of releasing the product from the tube bundle, wherein the product is passed out of the tube bundle at a release end of the tube bundle at the opposite end to the feed end in the form of a fluid stream into an interior of a release hood of the tube bundle reactor, the fluid stream on exit from the release end having a cross-sectional area and the interior of the release hood through which the fluid stream flows having an internal volume; and the ratio of release hood internal volume to cross-sectional area of the fluid stream at the release end being less than 0.35 m.

## Revendications

1. Réacteur à faisceau de tubes comprenant un faisceau de tubes, qui comprend une extrémité d'alimentation qui est raccordée avec un collecteur d'alimentation du réacteur à faisceau de tubes, le collecteur d'alimentation étant configuré sous une forme plate avec une surface de section transversale à l'extrémité d'alimentation et un volume intérieur, et le rapport entre le volume intérieur et la surface de section transversale à l'extrémité d'alimentation du faisceau de tubes étant inférieur à 0,35 m, le volume intérieur caractérisant le volume occupé par la masse du mélange réactionnel dans le collecteur d'alimentation, le collecteur d'alimentation comprenant au moins un trou d'entrée à une extrémité opposée au faisceau de tubes, la forme plate présentant une augmentation de la surface de section transversale depuis une surface de section transversale dudit au moins un trou d'entrée jusqu'à la surface de section transversale du collecteur d'alimentation à l'extrémité d'alimentation du faisceau de tubes le long d'un axe longitudinal du réacteur à faisceau de tubes d'au moins 1 %/mm, et un rapport entre un écart maximal, qui est une hauteur de collecteur maximale entre un plafond du collecteur et l'extrémité d'alimentation du faisceau de tubes et est mesuré entre une surface intérieure du collecteur d'alimentation et l'extrémité d'alimentation du faisceau de tubes, et la surface de section transversale à l'extrémité d'alimentation du faisceau de tubes étant ≤ 0,15 m⁻¹.

2. Réacteur à faisceau de tubes selon la revendication 1, dans lequel au moins une section du volume intérieur du collecteur d'alimentation, qui est agencée à l'extrémité d'alimentation, est configurée sous la forme d'un cylindre, d'un cylindre circulaire, d'un cylindre creux ou d'un cylindre creux à section transversale intérieure et extérieure circulaire.

3. Réacteur à faisceau de tubes selon la revendication 1 ou 2, dans lequel un dispositif de déviation est prévu dans le volume intérieur du collecteur d'alimentation, qui est agencé entre un raccordement d'alimentation du collecteur d'alimentation et l'extrémité d'alimentation du faisceau de tubes, afin de dévier radialement vers l'extérieur au moins des parties d'un courant fluide s'écoulant depuis le raccordement d'alimentation dans le collecteur d'alimentation avant que le courant fluide n'entre dans l'extrémité d'alimentation.

4. Réacteur à faisceau de tubes selon la revendication 3, dans lequel le dispositif de déviation comprend une plaque de distribution, dont la section transversale est inférieure que celle du volume intérieur à l'extrémité d'alimentation, afin de former un canal qui passe à l'intérieur du volume intérieur sur le bord extérieur de la plaque dans la direction axiale de la plaque et autour du bord extérieur de la plaque de distribution, et le dispositif de déviation comprend en outre une plaque d'homogénéisation comprenant une pluralité de canaux la traversant, la plaque d'homogénéisation étant agencée entre la plaque de distribution et l'extrémité d'alimentation, et la plaque de distribution divisant dans l'espace une section libre du volume intérieur entre le raccordement d'alimentation et la plaque d'homogénéisation.

5. Réacteur à faisceau de tubes selon la revendication 3 ou 4, dans lequel le dispositif de distribution s'étend entre l'extrémité d'alimentation du faisceau de tubes et le raccordement d'alimentation du collecteur d'alimentation, et couvre la totalité de l'extrémité d'alimentation au regard du courant fluide sortant du raccordement d'alimentation, afin de couvrir essentiellement en totalité l'extrémité d'alimentation au regard d'un écoulement de fluide axial direct depuis le raccordement d'alimentation par déviation du courant fluide.

6. Réacteur à faisceau de tubes selon l'une quelconque des revendications précédentes, comprenant plusieurs canaux d'alimentation, qui alimentent plusieurs trous d'entrée qui sont prévus dans une paroi du collecteur d'alimentation et conduisent dans le volume intérieur, au moins un trou d'entrée étant agencé en dehors d'un axe central de l'extrémité d'alimentation ou tous les trous d'entrée étant agencés de manière uniforme autour de l'axe central le long d'un cercle ou dans un anneau.

7. Réacteur à faisceau de tubes selon la revendication 6, dans lequel les trous d'entrée sont décalés par rapport aux axes longitudinaux de tubes du réacteur à faisceau de tubes et le centre de chaque trou d'entrée présente l'écart maximal avec les axes longitudinaux les plus proches des tubes.

8. Réacteur à faisceau de tubes selon la revendication 6 ou 7, dans lequel les canaux d'alimentation de tubes se divisant sont prévus, qui comprennent une division en Y qui est raccordée à deux des trous d'entrée ou qui est raccordée à une autre division en Y.

9. Réacteur à faisceau de tubes selon l'une quelconque des revendications précédentes, dans lequel le faisceau de tubes comprend une extrémité de déchargement opposée à l'extrémité d'alimentation, qui est raccordée avec un collecteur de déchargement du réacteur à faisceau de tubes, le collecteur de déchargement étant configuré selon une forme plate avec une surface de section transversale à l'extrémité de déchargement et un volume intérieur, et le rapport entre le volume intérieur et la surface de section transversale du collecteur de déchargement étant inférieur à 0,35 m.

10. Procédé d'exploitation d'un réacteur à faisceau de tubes, comprenant : l'introduction d'un mélange de réactifs dans un faisceau de tubes et la mise en réaction d'au moins une proportion du mélange de réactifs dans le faisceau de tubes pour former un produit, l'introduction comprenant : l'alimentation du mélange de réaction dans un espace intérieur d'un collecteur d'alimentation du réacteur à faisceau de tubes et l'acheminement du mélange de réactifs dans une extrémité d'alimentation du faisceau de tubes sous la forme d'un courant fluide, le courant fluide présentant une surface de section transversale à l'entrée dans l'extrémité d'alimentation et l'espace intérieur du collecteur d'alimentation dans lequel le courant fluide s'écoule présentant un volume intérieur ; et le rapport entre le volume intérieur et la surface de section transversale à l'extrémité d'alimentation du faisceau de tube étant inférieur à 0,35 m, le volume intérieur caractérisant le volume occupé par la masse du mélange réactionnel dans le collecteur d'alimentation, le collecteur d'alimentation comprenant au moins un trou d'entrée à une extrémité opposée au faisceau de tubes, la forme plate présentant une augmentation de la surface de section transversale depuis une surface de section transversale dudit au moins un trou d'entrée jusqu'à la surface de section transversale du collecteur d'alimentation à l'extrémité d'alimentation du faisceau de tubes le long d'un axe longitudinal du réacteur à faisceau de tubes d'au moins 1 %/mm, et un rapport entre un écart maximal, qui est une hauteur de collecteur maximale entre un plafond du collecteur et l'extrémité d'alimentation du faisceau de tubes et est mesuré entre une surface intérieure du collecteur d'alimentation et l'extrémité d'alimentation du faisceau de tubes, et la surface de section transversale à l'extrémité d'alimentation du faisceau de tubes étant ≤ 0,15 m⁻¹.

11. Procédé selon la revendication 10, dans lequel l'introduction comprend : l'introduction du courant fluide ayant une surface de section transversale continue ; et l'acheminement du courant fluide dans le collecteur d'alimentation comprend : la diffusion du courant fluide introduit ; la déviation du courant fluide diffusé vers l'extrémité d'alimentation ; l'acheminement du courant fluide dévié sous la forme d'un cylindre creux, et la réunion du courant fluide en un courant fluide réuni ayant une section transversale continue ; et l'introduction du courant fluide réuni dans l'extrémité d'alimentation du faisceau de tubes.

12. Procédé selon la revendication 11, dans lequel l'introduction du courant fluide réuni dans l'extrémité d'alimentation du faisceau de tubes comprend : l'acheminement du courant fluide réuni dans une pluralité de canaux d'une plaque d'homogénéisation qui est agencée à l'extrémité d'alimentation.

13. Procédé selon la revendication 11 ou 12, dans lequel le courant fluide dévié, qui est prévu sous la forme d'un cylindre creux, présente une section transversale intérieure qui correspond à la section transversale intérieure du cylindre creux et dans laquelle essentiellement aucun écoulement n'est prévu, et la section transversale intérieure du courant fluide dévié couvre essentiellement la totalité de la section transversale de l'extrémité d'alimentation au regard du courant fluide introduit.

14. Procédé selon l'une quelconque des revendications 10 à 13, dans lequel l'alimentation du mélange de réactifs comprend : la division d'un courant d'alimentation du mélange de réactifs en plusieurs courants d'alimentation, qui sont chacun conduits dans un parmi plusieurs canaux avant que les courants d'alimentation n'entrent dans l'espace intérieur à des emplacements d'entrée espacés les uns des autres, et au moins un ou tous les emplacements d'entrée sont situés en dehors de l'axe central de l'extrémité d'alimentation du faisceau de tubes, ou tous les emplacements d'entrée sont agencés de manière uniforme autour de l'axe central de l'extrémité d'alimentation du faisceau de tube le long d'un cercle ou dans un anneau.

15. Procédé selon la revendication 14, dans lequel les emplacements d'entrée sont décalés par rapport aux axes longitudinaux de tubes du réacteur à faisceau de tubes et le centre de chaque emplacement d'entrée présente l'écart maximal par rapport aux axes longitudinaux les plus proches des tubes.

16. Procédé selon la revendication 13 ou 14, dans lequel la division en plusieurs courants d'alimentation est prévue par introduction du mélange de réactifs dans des tubes qui se divisent, et l'introduction du mélange de réactifs comprend l'acheminement du mélange de réactifs dans une division en Y qui alimente deux emplacements d'entrée avec le mélange de réactifs ou qui alimente une autre division en Y avec le mélange de réactifs.

17. Procédé selon l'une quelconque des revendications 10 à 16, qui comprend en outre une étape de déchargement du produit du faisceau de tubes, le produit étant conduit à une extrémité de déchargement du faisceau de tubes, qui est opposée à l'extrémité d'alimentation, hors du faisceau de tubes sous la forme d'un courant fluide dans un espace intérieur d'un collecteur de déchargement du réacteur à faisceau de tubes, le courant fluide présentant lors de la sortie de l'extrémité de déchargement une surface de section transversale et l'espace intérieur du collecteur de déchargement dans lequel le courant fluide s'écoule présentant un volume intérieur ; et le rapport entre le volume intérieur du collecteur de déchargement et la surface de section transversale du courant fluide à l'extrémité de déchargement étant inférieur à 0,35 m.
